# EUROPEAN PATENT APPLICATION

(11) **EP 4 848 147 A2**
(43) Date of publication of application: **02.12.2026**
(21) Application number: 26176623.2
(22) Date of filing: 05.05.2026
(51) Int. Cl.: G06N 3/065, G06N 3/048, G06N 3/0455, G06N 3/0475, G06N 3/042, G06N 3/0442, G06N 3/0464, G06N 3/0985, G06N 5/045, G06N 20/20

(54) **ANALOG LLM ASIC FOR QUANTUM WAVE FUNCTION TOKENIZERS IN MEDICAL DEVICES**

(30) Priority: 07.05.2025 US 202563801711 P; 23.07.2025 US 202563849757 P; 02.08.2025 US 202563856390 P; 03.08.2025 US 202563856650 P; 27.04.2026 US 202619659692
(71) Applicant: WaveMedix, Inc., 1807 Blonay (CH)
(72) Inventor: RUPPERSBERG, Peter, 1807 BLONAY (CH); STINGELE, Francesca, 1807 Blonay (CH)
(74) Representative: Ipsilon Luxembourg

(57) **Abstract**

A system implements large language models (LLMs) on an analog Application Specific Integrated Circuit (ASIC). The system includes one or more memristor arrays configured to store weight matrices and context embeddings. The system includes one or more frequency-based signal encoding modules configured to encode embeddings and attention heads as distinct frequency bands. The system includes one or more modular analog processors configured to: execute one or more of: matrix multiplications, non-linear transformations, and context updates; and perform dynamic memory management for hierarchical large language model (LLM) architectures.

## Description

### PRIORITY DATA

This application claims benefit and is a utility U.S. Patent Application of U.S. Provisional Application No. 63/801,711, filed on May 7, 2025, entitled "Systems, Devices, Components and Methods for Quantum Wave Function Tokenizers in Medical Devices", U.S. Provisional Application No. 63/849,757, filed on July 23, 2025, entitled "Systems, Devices, Components and Methods for Quantum Wave Function Tokenizers in Medical Devices", U.S. Provisional Application No. 63/856,390, filed on August 2, 2025, entitled "Systems, Devices, Components and Methods for Quantum Wave Function Tokenizers in Medical Devices and for Providing Medically Safe Cardiac Diagnoses for Patients", and U.S. Provisional Application No. 63/856,650, filed on August 3, 2025, entitled "Systems, Devices, Components and Methods for Quantum Wave Function Tokenizers in Medical Devices and for Providing Medically Safe Cardiac Diagnoses for Patients", the disclosures of each of which are incorporated herein by reference in their respective entireties.

### BACKGROUND

In the field of modern medical devices, various tools have been developed to help provide patients diagnostics. As an example, an electrocardiogram ("ECG") is a non-invasive test that records the electrical activity of the heart over a period of time using electrodes placed on the skin of a patient. It provides a visual representation (usually as a trace on paper or on a screen) of how the patient's heart is beating and conducting electrical impulses. ECGs are commonly used in medicine because they can quickly provide valuable insights into a patient's cardiac health and condition, are often inexpensive to acquire, widely available, and can be critical in triaging and managing cardiac emergencies. For example, ECGs are widely used to diagnose, monitor and provide prognoses regarding the state or condition of a patient's heart. Some applications of ECGs include diagnosing cardiac conditions such as arrhythmias (e.g., atrial fibrillation, ventricular tachycardia, heart blocks, etc.), whether a myocardial infarction or heart attack has occurred in a patient by identifying ischemia or infarction through ST-segment changes, whether a patient suffers from pericarditis or myocarditis by identifying inflammation-related ECG changes, or whether a patient suffers from electrolyte imbalances such as hyperkalemia or hypokalemia (which can produce characteristic changes in ECG signals), and whether a patient might have structural abnormalities such as left ventricular hypertrophy or atrial enlargement.

However, reliable and accurate interpretation of ECGs is tricky and complicated and may require experts with lengthy and extensive training and education. Even when ECGs are interpreted by experts and in context (e.g., alongside patient clinical history, physical examination, and often imaging or lab tests), errors in ECG interpretation still remain relatively common. What is needed are improved, and much more reliable and accurate, means and methods of acquiring, processing, and diagnosing ECG data on the spot (e.g., in a cardiologist's office) over a short periods of time, and with much greater precision than is currently possible.

### BRIEF DESCRIPTION OF THE DRAWINGS

Aspects of the present disclosure are best understood from the following detailed description when read with the accompanying figures. It is emphasized that, in accordance with the standard practice in the industry, various features are not drawn to scale. In fact, the dimensions of the various features may be arbitrarily increased or reduced for clarity of discussion. In the figures, elements having the same designation have the same or similar functions.
Fig. 1 illustrates a framework of a dual LLM architecture according to various aspects of the present disclosure.
Figs. 2-4 illustrate various training/learning processes involving the dual LLM architecture according to various aspects of the present disclosure.
Fig. 5 illustrates a process flow for generating quantum wave tokens according to various aspects of the present disclosure.
Fig. 6 illustrates an example artificial neural network according to various aspects of the present disclosure.
Figs. 7-8 illustrate flowcharts of methods according to various aspects of the present disclosure.
Fig. 9 illustrates a computer system according to various aspects of the present disclosure.
Figs. 10-18 illustrate various portions of an analog integrated circuit (IC) according to various aspects of the present disclosure.
Figs. 19-22 illustrate flowcharts of methods of operations involving an analog IC according to various aspects of the present disclosure.

Embodiments of the present disclosure and their advantages are best understood by referring to the detailed description that follows. It should be appreciated that like reference numerals are used to identify like elements illustrated in one or more of the figures, wherein showings therein are for purposes of illustrating embodiments of the present disclosure and not for purposes of limiting the same.

### DETAILED DESCRIPTION

It is to be understood that the following disclosure provides many different embodiments, or examples, for implementing different features of the invention. Specific examples of components and arrangements are described below to simplify the present disclosure. These are, of course, merely examples and are not intended to be limiting. Various features may be arbitrarily drawn in different scales for simplicity and clarity.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

In the field of cardiac monitoring, ECGs are used in emergency departments, operating rooms, and intensive care units to continuously monitor heart function. ECGs are also often acquired using ambulatory ECG equipment (e.g., Holter monitors) to record ECGs over 24-48 hour time periods to detect intermittent arrhythmias or other heart problems. More typically and much more often, however, 12-lead ECGs are acquired from a patient using a conventional ECG machine located in a physician's or cardiologist's office. There, ECGs are usually recorded over a time period of 10-15 seconds or so. It is based upon this very short time period over which ECG signals are sensed and then recorded an/or presented on a strip of paper or other display that the physician's or cardiologist diagnoses the patient's current state of cardiac health. If a cardiac signal anomaly or problem (e.g., transient arrhythmias or ischemia) should appear outside this very short diagnostic window, it will not be seen or diagnosed by the physician or cardiologist. For various reasons, such as physician time and availability, and computational time and other limits, longer ECG signal recordings are rarely performed in a cardiologist's office. As a result, it is not unusual for important aspects of a patient's cardiac status and health to be missed altogether during an office visit to the physician or cardiologist.

The use of ECGs in diagnostics may also have various other limitations. For example, ECGs are frequently unable to reveal the early stages of cardiac disease. ECGs are also not useful for diagnosing all heart conditions (e.g., structural issues such as heart valve problems, which may require echocardiography or MRI for proper diagnosis). ECGs can also have limited sensitivity and specificity. For example, a patient with a "normal ECG" may still have a serious cardiac condition (e.g., angina or structural heart disease). False positives can occur in ECGs, where changes in ECG signals can mimic myocardial infarction or ischemia but be caused by other things such as early repolarization, pericarditis, or patient anxiety. Accurate or reliable interpretation of ECGs also presents challenges, since ECG interpretation requires considerable expertise, training and education, and misinterpretation of ECGs can lead to incorrect diagnosis or missed conditions.

Moreover, ECG signals obtained from patients can vary significantly with patient age, body physique, ECG lead placement, ECG lead coupling, patient electrolyte levels, and medications a patient might be taking. Technical Limitations such as poor electrode placement or patient movement can introduce unwanted artifacts in ECG signals. ECG signal baseline wander, electrical interference, or muscle tremors can also obscure key waveforms. ECGs show electrical activity of the heart, not direct structural or mechanical function of the heart, and therefore are typically unable to be used to assess heart valve function, wall motion abnormalities, or blood flow (which instead typically require imaging techniques such as echocardiography or MRI). Changes observed in a patient's ECG signals can also be nonspecific and attributable to multiple conditions. For example, ST-segment depression can be due to any one or more of ischemia, electrolyte imbalance, or digitalis effect. Variability and ambiguity can also be present in ECG signals, where normal variants (e.g., early repolarization) can mimic pathology. Bundle branch blocks or pre-excitation can also obscure signs of ischemia or infarction. In obese or muscular individuals, ECG signals can be more difficult to interpret. Pediatric ECGs sometimes follow different patterns, and may require specialist knowledge and expertise.

In order to address these issues discussed above, the present disclosure introduces a quantum wave function tokenizer for processing medical data (e.g., including but not limited to ECG data) and a dual Large Language Model (LLM) architecture to generate fast and accurate diagnoses based on the medical data. In more detail, LLMs are transformer-based artificial intelligence (AI) models that when fine-tuned, can make meaningful predictions and decisions based on smaller but focused datasets. The LLMs of the present disclosure are deployed in a lightweight and interconnected system designed specifically for medical applications. By combining the strengths of transformer models with scalable, real-time processing, the present disclosure bridges the gap between what is possible and what is practical in medical AI. This allows for smarter diagnostics, more personalized treatments, and ultimately better outcomes for patients, even in specialized or underexplored areas of medicine.

In some embodiments, the system is structured around two AI models that collectively form an advanced cardiovascular diagnostic and risk prediction platform. The first model operates as a real-time ECG feature extractor (using, for example, a quantum wave tokenizer), while the second model functions as a clinical reasoning system, capable of analyzing long-duration ECGs, integrating patient history, and generating clinically validated risk assessments. The second model may also use a Retrieval Augmentation Generation module (or RAG). Retrieval-Augmented Generation (RAG) is a process that enhances the capabilities of LLMs by allowing them to access and incorporate external knowledge bases before generating responses. Instead of relying solely on its own training data, RAG enables LLMs to retrieve relevant information from a separate knowledge store, making their outputs more accurate, context-aware, and up-to-date. In some embodiments, the RAG comprises a machine learning model that may be configured to combine two key components: (a) a retrieval module configured to search a large external or internal knowledge base (e.g., a document or literature database, a private dataset, etc.) to find relevant pieces of information related to an input query, and (b) a generation module configured to use a language model (e.g., GPT) to generate a response based on both the input query and the retrieved documents.

One advantage of such a system is its second model, which is not merely an AI-driven inference engine, but may also be explicitly trained using real-world clinical trial data, ensuring that its predictive capabilities are grounded in actual patient outcomes. In one embodiment, the first model is trained using a dataset of, for example, 46,000 patients, with an initial fine-tuning subset of 5,000 patients, and outputs a structured 54-dimensional diagnostic probability vector for every 10-second ECG segment. In one embodiment, these 54 categories can include:
- 49 predefined clinical diagnoses, extracted from labeled ECG data;
- 5 additional diagnostic categories, introduced through analytic preprocessing, which quantify T-wave and P-wave variability, amplitude fluctuations, and other waveform-derived parameters.

Unlike conventional ECG models that produce hard classifications, in one embodiment such a system leverages a softmax-based probability distribution across all 54 diagnoses (this specific number is merely a non-limiting example), ensuring that multiple potential conditions can be recognized simultaneously. This feature transforms the diagnosis space into a structured feature representation, functioning as a soft embedding that retains clinically relevant information while remaining fully interpretable.

Softmax is a mathematical function often used in machine learning, especially in classification tasks. It takes a vector of raw scores (also called logits) and transforms them into probabilities that sum to 1. This makes it useful for predicting the probability distribution over multiple classes. Each output value is between 0 and 1. The outputs add up to 1, forming a valid probability distribution. Softmax emphasizes the largest scores, making them stand out more (useful for classification). For example, if a neural network predicts raw scores like [2.0, 1.0, 0.1] for 3 classes, softmax converts these into probabilities like [0.65, 0.24, 0.11].

The second model extends this approach by:
- Processing long-duration ECG recordings (for example up to 30 minutes) by aggregating multiple 10-second feature vectors into a cohesive, large-scale diagnostic and risk evaluation.
- Integrating patient-specific risk factors, including age, body mass index (BMI), history of hypertension, diabetes, and other comorbidities.
- Retrieving and comparing historical ECG reports, enabling direct trend analysis over multiple visits
- Generating structured clinical summaries, mirroring physician-style diagnostic reports that can be stored and retrieved for long-term patient tracking.

However, in some embodiments, an important function of the second model is its ability to predict future cardiovascular risks, including, but not limited to:
- Risk of atrial fibrillation within 5 years
- Probability of ventricular tachycardia recurrence
- Risk of sudden cardiac death
- Likelihood of heart attack recurrence or progression to heart failure
Unlike traditional ECG analysis, which is focused on current-state diagnostics, such a system is designed for predictive medicine. The ability to provide quantified risk scores for future cardiovascular events makes it a fundamentally new class of AI-driven medical technology, bridging the gap between pattern recognition and true clinical decision-making.

In some embodiments, the second model's predictive capabilities (which in addition to LLM architecture may also include convolutional neural network features, circuitry, programming, training and learning), are not trained on theoretical assumptions but are directly fine-tuned using real-world clinical trial data. According to one embodiment, the training process follows a three-phase clinical validation strategy:
1. Retrospective Study Using Large-Scale Historical Patient Data
   ∘ The initial phase involves fine-tuning the second model on retrospective clinical data, where ECGs, patient histories, and long-term outcomes are already known.
   ∘ By mapping past ECG feature spaces to actual cardiac event outcomes, the model learns how specific ECG abnormalities and patient parameters correlate with future disease progression.
   ∘ This phase allows the second model to develop baseline risk stratification capabilities before any prospective data is collected.
2. Prospective Clinical Trial with Real-Time Patient Monitoring
   ∘ The second phase includes an active clinical trial, where patients are monitored over time, and their ECG-derived risk predictions are compared with actual cardiac events that occur in the future.
   ∘ This is where the model achieves its greatest refinement, as it continuously learns how well its predictions align with real-world patient outcomes.
   ∘ If an ECG pattern suggests a 70% probability of atrial fibrillation onset within 5 years, but the actual occurrence rate in the monitored population is higher or lower, the model undergoes dynamic recalibration to ensure its outputs are statistically optimized for real-world applications.
3. Post-deployment Validation and Expansion to New Risk Models
   ∘ Once the system is deployed in clinical settings, additional post-market validation studies allow further refinement.
   ∘ New patient cohorts, risk groups, and emerging cardiac conditions can be incorporated into the model, allowing continuous learning and expansion.
Unlike AI models that rely solely on pre-existing datasets, the above approach of the present disclosure ensures that the AI model herein:
- Is trained on real-world cardiac event progression data, not just static ECG interpretations.
- Continuously learns and adapts to new clinical insights over time.
- Achieves regulatory-grade validation, making it viable for adoption in hospitals, research centers, and telemedicine applications.
- According to some embodiments, the integration of ECG waveform analysis, patient history modeling, and clinical trial- based predictive training ensures that the system herein is capable of:
   1. Real-time feature extraction from 10-second ECG segments (via the first model).
   2. Large-scale ECG aggregation and patient history integration (via the second model).
   3. Clinical-grade risk prediction for major cardiac events.
   4. Structured report generation, suitable for long-term patient records.
   5. Longitudinal ECG tracking, detecting trends across multiple visits.
   6. Dynamic recalibration based on clinical trial results, ensuring long-term predictive accuracy.

The AI system of the present disclosure enables short-term context handling via transformer attention (e.g., a first LLM) for real-time reasoning, as well as long-term memory handling by storing structured, human-readable memory (e.g., ASCII text) for full transparency and control. With respect to memory retrieval, the present disclosure utilizes structured memory lookup using explicit retrieval strategies. With respect to memory updating, the present disclosure utilizes fine-tuned memory learning in a second LLM that is optimized for transparency and expert control. The memory is stored as explicit knowledge in human-readable, editable memory logs, and it is adaptable without retraining by continuously updating stored knowledge. The memory is stored in a structured text format, ensuring full transparency. The memory is scalable, as modular ASIC architecture enables high-speed, structured recall. The structured memory also ensures domain-specific correctness (e.g., medicine, law, robotics, etc). Due to the above features, the memory retrieval of the present disclosure is efficient and low-cost, as structured queries limit unnecessary retrieval, and the system is particularly well-suited for medical AI that must ensure correct, demonstrate mathematical proof, and/or have an enterprise AI knowledge base, and it is the only system that provides structured, expert-validated memory, making it ideal for high-stakes applications.

The present disclosure also uses quantum wave functions to enable the LLMs in medical data processing with precision. Specifically, raw signals, such as ECGs or medical images, are transformed into structured data (e.g., tokens) using quantum wave representations. Each token captures critical parameters of a quantum wave-e.g., amplitude, angle, time, period, and phase-allowing for a rich, multidimensional description of multidimensional structures that would otherwise be unavailable for use by an LLM or a Retrieval Augmentation Generation module (or RAG).

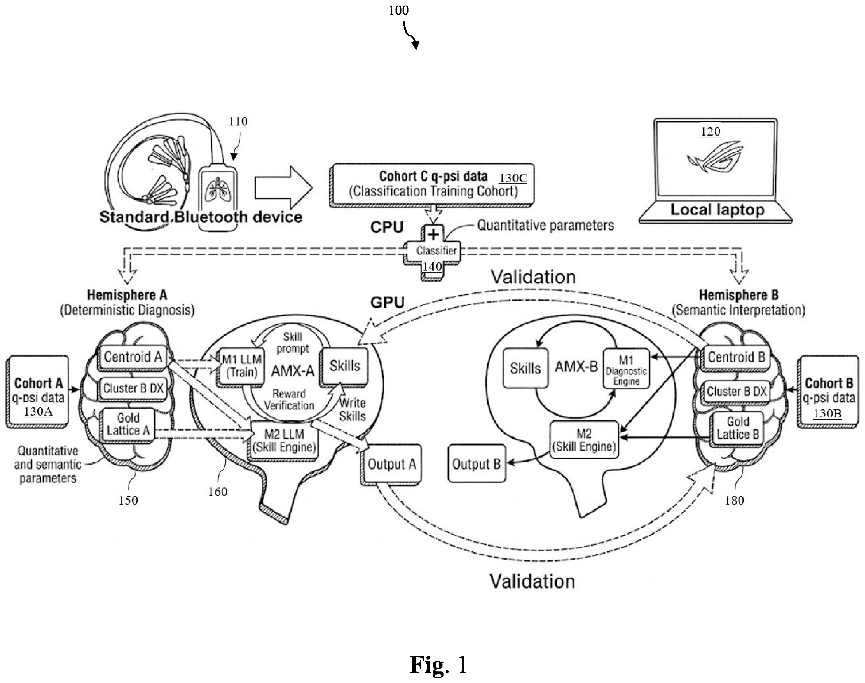

The various aspects of the present disclosure are discussed in more detail below with reference to Figs. 1-9.

Fig. 1 illustrates an example framework 100 in which the dual LLM architecture of the present disclosure is illustrated. In some embodiments, the framework 100 enables the implementation of standalone AI-driven 12-lead ECG machine that can:
- Offer real-time AI interpretation directly on the device, without requiring cloud connectivity.
- Support longer-duration ECGs (e.g., 1-5 minutes) for deeper AI analysis of transient arrhythmias.
- Provide actionable AI insights immediately, without relying on post-processing.
- Have built-in patient records and memory for tracking ECG changes over time.
- Work as a self-contained medical device, allowing it to be deployed in clinics, urgent care, or even ambulances without external dependencies.

The framework 100 includes a wireless communications device 110 that is configured to generate patient medical data. In some embodiments, the wireless communications device 110 includes a Bluetooth-enabled medical device, such as a Bluetooth-enabled ECG device with a plurality of electrodes. As non-limiting examples, the Bluetooth-enabled ECG device may include a SmartHeart^{®} Wireless 12-Lead ECG, a QT Medical PCA-500 12-Lead ECG Recorder, a single-lead or 6-lead handheld ECG from AliveCor^{™} KardiaMobile^{™}, a wearable single-channel Holter-style ECG streaming device from QardioCore^{™}, or other small 1-lead or 3-lead ECG devices from Beurer^{™} or Zive^{™}.

Regardless of the exact implementation of the wireless communications device 110, the electrodes thereof may be placed on a body of a patient, and the corresponding ECG data may then be transmitted wirelessly to one or more nearby Bluetooth-enabled devices. One of these nearby devices may include a computer 120, which is also a part of the framework 100. In some embodiments, the computer 120 includes a local laptop computer, but it is understood that the computer 120 may include a desktop computer, a tablet computer, or even a smartphone in other embodiments. The computer 120 has one or more processing units, such as Central Processing Units (CPUs) and/or Graphics Processing Units (GPUs), that are configured to train and/or run machine learning models, such as LLMs. In some embodiments, the computer 120 includes an autonomous AI agent that is configured to interact with the wireless communications device 110 directly. Note that in some embodiments, the wireless communication device 110 may be replaced by a wired communication device, such as a wired ECG machine having a plurality of electrodes, in which case the ECG data may still be transmitted through wires to the computer 120.

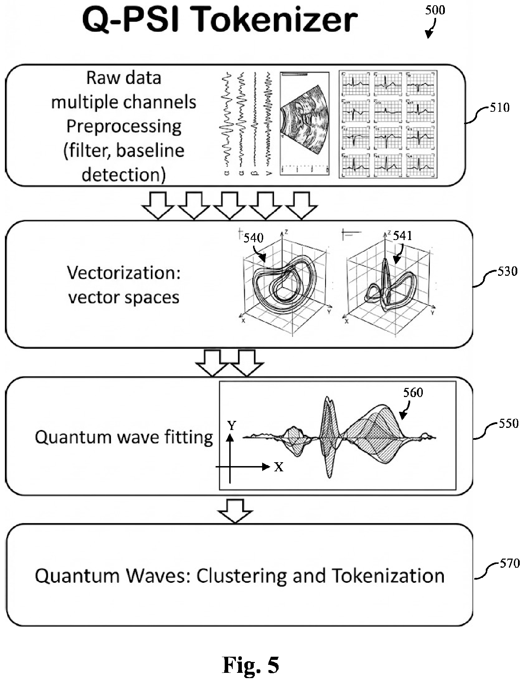

According to the framework 100, a Quantum Wave Function Tokenizer (Q-PSI) is used to convert the raw patient medical data (e.g., ECG data) into precise, processable, understandable, clinically interpretable parameters. This conversion process involves fitting the raw patient medical data with quantum waves and subsequently processing them with an interpreter, as will be discussed in more detail below with reference to Fig. 5.

In the illustrated embodiment of Fig. 1, the data generated by the Q-PSI includes cohort data obtained from thousands of patients and split into different cohorts, such as Cohort A q-psi data 130A, Cohort B q-psi data 130B, and Cohort C Q-PSI data 130C. The Cohort C Q-PSI data 130C is data that is used for the pre-training of a classifier module 140. In that regard, the classifier module 140 may include a Random Forest (RF) classifier that acts as a sensory gateway, which systematically evaluates the complete array of parameters (e.g., data generated by the Q-PSI) against thousands known diagnostic profiles of patient data. The RF classifier is a powerful ensemble machine learning algorithm for classification (and regression) tasks. In the context of the present disclosure, the RF classifier is trained on a large labeled dataset (e.g., in the ECG application, a cohort of patient ECGs with known diagnoses), so that it can provide a quick "first opinion" on what diagnoses might be present. In some embodiments, the RF classifier builds a forest of decision trees and then combines their predictions to improve accuracy, reduce overfitting, and handle noisy or complex data better than individual trees. For each potential diagnosis of a tested case, the RF classifier outputs probability scores, which provides a statistically based differential diagnosis closely mirroring the first step of the decision-making processes of an experienced clinician. This initial differential diagnosis serves as a transparent, auditable foundation upon which the reasoning structure of the present disclosure then acts. It is understood that although the embodiment of Fig. 1 implements a classifier module (e.g., RF classifier) to train the quantitative parameters, other types of modules may also be used to accomplish similar tasks. For example, a support vector machine may be used instead of the RF classifier in alternative embodiments.

Still referring to Fig. 1, the Cohort A q-psi data 130A is fed into hemisphere A of the framework 100, and the Cohort B q-psi data 130B is fed into hemisphere B of the framework 100. Hemisphere A mimics one hemisphere of the human brain and is configured to provide a deterministic diagnosis. Hemisphere B mimics another hemisphere of the human brain and is configured to provide a semantic interpretation.

Hemisphere A comprises quantitative and semantic parameters 150, including but not limited to centroid A, cluster B DX, and gold lattice A. In more detail, for every patient that is in a hemisphere represented in a grid made by the classifier module 140, a gold label diagnosis is generated. In the context of machine learning, gold label refers to ground truth. Here, the gold label serves as part of the training data, and all the gold label diagnoses together form the gold lattice A. Essentially, the gold lattice A comprises a grid where every gold label is represented, and every point in the grid contains information about a particular gold label. The gold label lattices form clusters (e.g., cluster B DX in Fig. 1), and every cluster has a centroid (e.g., centroid A in Fig. 1), which is a center of gravity of the locations of all the points in the cluster in a mathematical sense. Individual clusters are used as batches for training a machine learning model, such as the M1 LLM (discussed in more detail below) in Fig. 1. The batches corresponding to different diagnoses may be trained one after another.

Note that the M1 LLM itself has already been trained (e.g., as a commercially available LLM offered by a third part), and the training discussed herein refers to the skills it will be using in the context of the present disclosure. Essentially, the training herein is with respect to the Retrieval-Augmented Generation using Graphs (Graph-RAGs), which are represented by the two hemispheres A and B in Fig. 1. Graph-RAG is an advanced AI technique that enhances large language models (LLMs) by building and querying knowledge graphs from text. A Graph-RAG pertains to a spatial arrangement of data for retrieval by an LLM and extracts entities and relationships, organizes them into graphs, and uses graph traversal and community summaries for context. Graph-RAGs (or RAGs in general) can reduce LLM hallucinations by grounding LLM responses in real, external data, as well as the use of tools such as Guardrails.ai. RAG combines a retriever (which searches a knowledge base or documents) with a generator (like GPT-4). Instead of answering a prompt from memory alone, the LLM receives relevant retrieved passages as context. RAG grounds responses in real sources, encourages transparency by providing real citations for its answers, and can help minimize fabrication by reducing the need for an LLM model to make up facts. In some embodiments, the RAGs can be structured by a plurality of dimensions (e.g., 17 dimensions) and therefore corresponds to a multi-dimensional space. Each point in this multi-dimensional space represents a different patient with all of its patient properties. Certain groups of patients (e.g., also referred to as tribes) have rules together. The rules are the skills for the LLM. For example, notes (e.g., relating to a diagnosis) may be written about these patients, what are special things the LLM should take into account when a patient is in a related area. When a new patient is examined by the system, the system compares this new patient with all other patients it already had, and the system may apply hundreds of rules to this comparison, which may lead to a final diagnosis that is insightful.

Hemisphere A also comprises a block 160, which may visually represent the summary of the skills that are created, modified, or improved by the training. In more detail, two LLMs are involved: the M1 LLM and the M2 LLM. In the context of the present disclosure, the role of the M1 LLM is the integration of expert-level medical knowledge. Building upon the robust statistical foundation set by the tokenization of extensive medical data that is then processed by the classifier module 140, the framework 100 herein integrates a specialized large language model (i.e., the M1 LLM, also interchangeably referred to as LLM-1) that has been extensively trained on a corpus of medical literature and advanced cardiology guidelines. Unlike black-box AI models, the M1 LLM explicitly incorporates comprehensive clinical knowledge through carefully designed rule cards in a RAG system with prompt texts, enabling nuanced evaluation and refinement of the RF classifier's outputs. By weighing patient-specific contexts, recognized medical patterns, and detailed clinical guidelines, the M1 LLM effectively emulates the reasoning of an expert cardiologist to reduce systematically the differential diagnosis to the final result. Its final diagnostic outputs are deterministic, grounded not merely in raw statistical likelihood but in coherent clinical logic and validated textbook-like rules.

In terms of mimicking a human brain, the M1 LLM serves as short-term memory, as it focuses on real-time analysis of incoming data, processing information in manageable chunks. For example, when analyzing a 10-second ECG segment, this layer identifies immediate patterns such as arrhythmias or supraventricular premature beats, creating detailed representations of the events. In some embodiments, the M1 LLM continuously reprocesses tokens from multiple streams (patient data, ECG, environment sensors, etc.), maintains a dynamic context window, adapts to new tokens in near real-time with minimal computational overhead, and executes immediate reasoning tasks (e.g., interpreting an ECG waveform, controlling a robot's movement).

The M1 LLM also acts as a deterministic diagnostician. It is a domain-specialized language model (smaller and fine-tuned for medical reasoning in the context of the present disclosure) that does not generate free-form answers from scratch, but rather works within a controlled prompt to refine and finalize the diagnosis. In some embodiments, the M1 LLM receives three main inputs (which may be comprised in the Cohort A/B/C data 130A-130C discussed above): (a) the patient's feature vector (the structured data from quantum wave tokenizer), (b) the RF classifier's predicted diagnosis probabilities (which identifies likely diagnoses and their confidence), and (c) a set of relevant Prompt Nodes retrieved from the prompt bank based on the case's feature location. These prompt nodes contain rule-like instructions or contextual cues on how to handle cases in that neighborhood of feature space. For example, a prompt might be: "If both atrial fibrillation and atrial flutter are suspected, remember they are mutually exclusive and check for rhythm regularity to decide between them." Such a prompt would be retrieved for a case in which the RF gave high probabilities to both AFib and atrial flutter, guiding the M1 LLM to apply a specific rule.

Given these inputs, the M1 LLM's task is to produce the final diagnostic decision in a deterministic, rules-based manner. Internally, the M1 LLM can be thought of as executing a sequence of "if-then" checks and threshold comparisons that have been encoded in its prompt (and in its fine-tuned weights). It filters the list of candidate diagnoses from the RF classifier by applying the conditions from the prompt rules and any hard exclusions or requirements defined therein. The outcome is a pruned, refined list of diagnoses that the M1 LLM outputs as the system's answer, often accompanied by structured explanation text. Crucially, the M1 LLM's operation is made deterministic by the structure of the prompt and model constraints: if the same inputs and prompt are given, the M1 LLM will consistently produce the same output list. There is no temperature sampling or open-ended generation in this phase - it is more akin to a rule engine executing, with the M1 LLM ensuring the integration of rules and data is done with the nuance of a clinician. In effect, the M1 LLM bridges the gap between raw statistical prediction and coherent clinical logic. The RF classifier provides the "instinctual" probabilities (like an initial guess), and the M1 LLM, guided by rules, turns that into a final decision that respects medical logic and avoids contradictory outputs.

The M1 LLM's role can also be analogized to an expert system or an "analysis cortex." It explicitly uses medical knowledge (embedded in its training on guidelines and in the prompt rules) to double-check the RF classifier's suggestions. For instance, if the RF classifier suggests two diagnoses that normally never occur together, the M1 LLM can use a prompt rule to eliminate one. If the RF classifier overlooks a subtle clue because it was statistically rare, the M1 LLM may re-insert a diagnosis if a prompt reminds it of that clue. Importantly, the M1 LLM's decision process is auditable. The prompt nodes it used can be logged, and the final output is derived via clearly defined conditions. Thus, a trace may be made as to why a certain diagnosis was made - e.g. "Diagnosis X was output because RF classifier suggested it with probability 0.60 which passed the 0.05 threshold, and none of the exclusion rules for X triggered given the feature values, while diagnosis Y was filtered out due to rule A (as encoded in the prompt) requiring feature Q < 0.5 which was not met." Such detail provides explainability at a level unattainable with a monolithic neural net. In effect, the M1 LLM ensures that the system's outputs are "textbook-like" - grounded in explicit rules and medical rationale, not just correlation. This design directly addresses the earlier challenges of determinism and auditability: M1 LLM's outputs are stable and reproducible, and they conform to known rule-based standards.

Meanwhile, the role of the M2 LLM is the clinical reasoning and interpretative depth. In more detail, in order to further enhance interpretability and clinical depth, a second, higher-order reasoning language model (i.e., the M2 LLM, also interchangeably referred to as LLM-2) engages in sophisticated analysis of the outcomes provided by the M1 LLM. The M2 LLM serves a dual purpose: initially contributing significantly to reinforcement learning and iteratively refining the diagnostic rules, it subsequently provides a nuanced interpretation of the final diagnosis. By reviewing the comprehensive parameter sets alongside the finalized diagnostic labels produced by the M1 LLM, the M2 LLM generates interpretative insights far exceeding a simple diagnostic enumeration, delivering deeper clinical understanding and interactive responsiveness to a user's inquiries. In terms of mimicking a human brain, the M2 LLM serves as long-term memory, as it integrates the outputs of the short-term memory with historical patient data. By aggregating information across multiple recordings- spanning minutes, hours, or even months-this layer builds a comprehensive, personalized view of the patient's condition. This long-term memory ensures that the system doesn't just respond to isolated events but understands how they relate to the patient's broader health context. (Note that additional LLMs may also be employed.) The M2 LLM serves as episodic storage, such summaries of M1 LLM's context window (or other noteworthy events) are stored by the M2 LLM in a retrievable database whenever significant changes occur (e.g., new recordings, major anomalies). The M2 LLM also serves as an expert knowledge database, where it houses domain-specific data (medical guidelines, manufacturing tolerances, robotics algorithms, etc.). The M2 LLM listens for keywords or triggers in M1 LLM's current context and surfaces relevant information. When the M2 LLM detects a match, it retrieves the relevant data or past episodes and provides them to the M1 LLM, enhancing M1 LLM's immediate context.

In the context of the present disclosure, while the M1 LLM and the RF classifier together provide a strong base (covering the majority of routine cases with transparent logic), the M2 LLM's role is to continuously improve and expand the system's reasoning. The M2 LLM can therefore be seen as a meta-learner or "prompt engineer" that observes how the M1 LLM performs and then refines the prompt rules for next time. During training (or periodic retraining phases), cases are processed in batches (grouped by similarity or a focus condition) and M1 LLM's outputs are compared to ground truth labels (e.g., gold labels). Whenever the M1 LLM makes an error - either a miss (false negative, termed A1) or a false alarm (false positive, termed B1) - M2 LLM is triggered to analyze the situation. The M2 LLM is given the full context of the batch: the patient features, what M1 predicted, what the true labels were, and which prompt rules were in play. The M2 LLM's task is not to diagnose patients directly, but to diagnose the reasoning process itself and suggest a minimal fix.

In essence, the M2 LLM performs reinforcement learning on the reasoning rules. It treats the prompt rules as policies that can be adjusted. For example, suppose the M1 LLM frequently misses a particular diagnosis in a cluster of cases because the threshold for a certain feature is too high - the M2 LLM may detect this pattern and suggest lowering that threshold in the prompt rule to catch those cases. Or, if the M1 LLM tends to erroneously include a diagnosis when a particular artifact is present in the data, the M2 LLM may add a new "veto rule" to exclude that diagnosis in such context. The M2 LLM essentially performs a credit assignment on M1 LLM's mistakes: was the issue that a rule was too lax, too strict, or missing entirely? Then it proposes a change accordingly. This proposal is done via its own language modeling capabilities - it can generate a new prompt snippet or modify an existing one and output that as a potential patch.

To ensure stability, these changes are typically constrained to the local cluster of cases (so they don't adversely affect distant scenarios). In practice, the training cases are organized by cluster (using the feature space and RF classifier outcomes to cluster similar situations). The M2 LLM operates on one cluster at a time, fine-tuning the rules for that cluster in a way that improves performance on that batch without harming performance on other batches. Technically, this is implemented by associating prompt rules with cluster centroids (the Prompt Nodes in the graph have coordinates) and by only adjusting the prompt tied to that cluster or creating a new prompt node if needed. Over many training iterations, this results in a prompt bank that is optimized for different regions of the problem space - an emergent episodic memory of how to handle various corner cases.

The M2 LLM's operation mode is analogous to a mentor or supervisor. It has the benefit of hindsight (knowing the gold-standard answer) and it "teaches" the M1 LLM by updating the rules. A key design element is that the M2 LLM's changes are immediately recorded as new Prompt Nodes in the prompt bank (along with metadata like parent prompts and performance deltas). This forms the episodic memory of the system: each Prompt Node can be seen as a memory of a lesson learned - often derived from a specific batch of cases or even a single important case. Over time, the prompt bank grows to cover a wide array of scenarios, including many that were not explicitly in the original training data (since the M2 LLM can interpolate between prompts and create new ones for truly novel situations). The structure is dynamic: if a new diagnosis (label) emerges in the medical field, the M2 LLM can even add a new node expanding the label space to handle it - something practically impossible for a static classifier.

The M2 LLM uses reinforcement signals like improvements in F1-score or reduction in errors to guide its learning. It effectively performs policy gradient updates but in the space of language (prompts) rather than numeric weights. By doing so, it keeps the system's logic aligned with real-world outcomes. Importantly, the M2 LLM's suggestions are typically reviewed or at least constrained by human-written archetypes. The initial prompt bank is seeded with human-crafted corner-case prompts (the "primed prompts"). The M2 LLM does not generate rules out of thin air; it is guided to modify or blend these archetypes, ensuring that the resulting rules remain within the bounds of human plausibility. This combination of human initialization and AI optimization yields a very powerful effect: the system improves with experience, yet remains safe and interpretable. The M2 LLM's continual learning can be run offline on new data (e.g., periodically retraining with the latest cohort of cases), and in the field, the system can also operate in an online learning mode: if a user (e.g., a doctor) corrects it or provides feedback on a case, the system herein can integrate that as a memory update (for instance, marking that case's cluster and triggering a prompt adjustment for it). Thus, the system herein is capable of learning from human feedback via dialogue, updating its rules in a controlled way. This addresses the challenge of incorporating human-in-the-loop refinement without simply fine-tuning black-box weights - instead, the human feedback directly alters a transparent rule or threshold.

In summary, The M2 LLM endows the system herein with self-improvement and episodic memory. It turns every mistake into an opportunity to learn a new rule or tweak an old one, akin to how a doctor learns from cases they got wrong. Over time, the effect is that system's knowledge matures: its initial "genetic" knowledge (from the RF classifier and base prompts) is augmented by an accumulated "experiential" knowledge (the prompt bank grown by the M2 LLM). This dual knowledge base is what allows the system herein to achieve both high accuracy and high explainability - because even its new learnings are stored as explicit rules, it doesn't turn into a black box as it evolves. Instead, it becomes more interpretable, since it can say "I used to think X in this scenario, but after case #123 I learned rule Y, which is why I now conclude Z."

The M1 LLM and M2 LLM collectively form a powerful two-stage reinforcement learning (RL) framework that is capable to continuously adapt and self-improve in the manner as follows:
1. Intuitive Analysis (performed by the M1 LLM):
   The M1 LLM rapidly evaluates patient data against explicitly structured "diagnosis rule cards," each defining thresholds and clinical decision logic. This rapid pattern-recognition mirrors a seasoned clinician's intuitive diagnostic process.
2. Advanced Reasoning Cortex (performed by the M2 LLM):
   The M2 LLM serves as a dynamic reasoning cortex, actively refining the diagnosis rule cards based on comparative feedback between M1 outputs and gold-standard clinical labels. Through iterative loops, the M2 LLM adjusts rule card thresholds, weights, and prompts, thereby progressively aligning the M1 LLM's intuitive outputs with verified clinical realities.

In more plain English terms, the M1 LLM makes a guess and generates an informed decision or statement about a particular patient, which may be done without knowing the gold label. The decision or statement generated by the M1 LLM is then reviewed by the M2 LLM, which does know the gold label. The M2 LLM then modifies the skills (e.g., rules for the LLMs) so that the M1 LLM is capable of making a better guess the next round. In some embodiments, one or more of the rule cards comprise nearest neighbor personalized range information corresponding to the patient, and the initial diagnosis (e.g., initial cardiac diagnosis) is generated by the M1 LLM based on the one or more rule cards that comprise nearest neighbor personalized range information corresponding to the patient. In some other embodiments, one or more of the rule cards comprise personalized thresholds computed on the basis of a local control cohort, and the initial diagnosis (e.g., initial cardiac diagnosis) is generated by the M1 LLM based on the one or more rule cards that comprise personalized thresholds computed on the basis of a local control cohort.

Still referring to Fig. 1, hemisphere B comprises quantitative and semantic parameters 180, including but not limited to centroid B, cluster B DX, and gold lattice B, which are similar to their respective counterparts in the quantitative and semantic parameters 150 discussed above with reference to hemisphere A. Based on the Cohort B q-psi data 130B and the quantitative and semantic parameters 180, the M1 LLM and the M2 LLM can perform a validation loop in the hemisphere B. In more detail, when a certain patient has been trained by changing a rule (e.g., a skill), then the same rule is tested also on patients with similar properties in the Cohort B q-psi data 130B to ensure that no over-fitting occurs. The rule change will be accepted only when Cohort B also profits from the rule change, which indicates that the rule change is objective and not based on a coincidence.

In the context of Fig. 1, the rule change is visually represented by the output A generated by the M2 LLM in block 160. In other words, the M2 LLM generates the output A (representing a rule change) and sends it to hemisphere B for validation. Using one or more GPUs, the rule is validated based on the quantitative and semantic parameters 180 and then sent back to hemisphere A. Thus, one hemisphere is validated with the skills of the other hemisphere to ensure that the data is always supporting the skills that have been trained on the other side. The M2 LLM in hemisphere B is also configured to generate an output B that represents an inference produced at an inference stage.

Note that the M1 and M2 LLMs in hemisphere A may not be completely identical to the M1 and M2 LLMs in hemisphere B, as that may constitute a waste of resources. Instead, the M1 and M2 LLMs may be trained in slightly different modes in hemisphere A and hemisphere B. For example, the M1 LLM in hemisphere A is supposed to always make a direct diagnosis. As such, no other speculation should be made about the patient. Meanwhile, the M1 LLM in hemisphere B is allowed to make a speculation about the patient's health. Both the M1 LLM in hemisphere A and in hemisphere B may be used together to generate a prediction in the inference stage.

In some embodiments, the system of the present disclosure can have two modes of operation: deterministic mode and episodic learning mode. In the deterministic mode (which is the normal inference mode when deployed), the system herein behaves like a fixed-function deterministic expert. A given input case goes through the Q-PSI -> RF classifier -> prompt retrieval -> the M1 LLM, producing a diagnosis with full traceability. In this mode, there is no randomness; the outputs are reproducible and the reasoning follows the fixed prompt rules and RF classifier thresholds. This is what would be used in a live clinical setting or any production environment where consistency and reliability are paramount. The system herein will also provide explanations (via M1 LLM's structured output or the M2 LLM acting as a "narrator" model to explain the applied rules) to the end-user, thereby functioning as a deterministic and auditable AI assistant.

In the episodic learning mode (typically engaged during training cycles or updates), the system herein temporarily allows the adaptive loop with the M2 LLM to run and update the prompt bank. This mode is more experimental and involves trying prompt adjustments and evaluating their impact on a validation set (or receiving human feedback). One can consider this mode as "writing to memory", whereas the deterministic mode is "reading from memory." The separation of these two modes ensures that when the system herein is being used for real decisions, it is not simultaneously trying to learn and change behavior on the fly (which could be risky). Instead, learning happens in a controlled way, and once new rules are accepted, they become part of the fixed memory for future inference. This design is akin to having a training phase and an inference phase, but in the system herein, the training phase is not about tweaking millions of weights with gradient descent, but about editing a knowledge graph of prompts. This is much more transparent and modular. If something ever goes wrong (say a rule makes things worse), it can be quickly identified and rolled back, unlike a mysterious weight update buried in a neural network.

This dual-mode capability makes the system herein highly flexible in deployment. For a highly regulated domain, one might lock the system in deterministic mode and only allow learning mode offline with oversight - ensuring all changes are audited and validated. In less critical deployments, the system herein could learn on the fly from interactions (with maybe a supervisor confirming each rule change). In all cases, because learning results in explicit rule changes, any update can be examined, tested, or even manually edited by developers or experts. This addresses a common concern with AI in sensitive fields: the inability to fine-tune or correct the system without retraining. In the system herein, if a regulator or hospital says "we don't like this particular rule or we have a new guideline to incorporate," one can directly insert or modify a Prompt Node representing that rule. The system is user-controllable at the knowledge level, a far cry from black-box models where one can only hope the training data induces the desired behavior.

To summarize, the system herein operates either as a stable reasoning engine (when used for decisions, it's fully deterministic and uses its current memory) or as a learning framework (when updating its memory based on new cases or feedback). This clear delineation and the interpretability of the memory updates ensure both safety and adaptability. It is a novel approach that merges the benefits of static expert systems (predictability) with the benefits of learning systems (continuous improvement).

In some embodiments, the M1 LLM and/or the M2 LLM are implemented using the following hardware components:

| Hardware | Purpose |
|---|---|
| High-End PC (RTX 4090, Ryzen 9 7950X3D, 64GB RAM, 2TB NVMe SSD, 1000W PSU, Windows 11 Pro) | Fine-tune LLM-1 (10s ECGs), early model training |
| NVIDIA GB10 DIGITS (1 PFLOP AI Compute, 128GB Unified Memory) | Faster fine-tuning & HPO (~15 min per epoch), dual-LLM training |
| Custom AI ECG Device (based on GB10 DIGITS or ASIC future implementation) | Final AI deployment in real-world ECG machines |

In an example embodiment, the M1 LLM, as a short-term analysis model, analyzes 10 second ECG chunks (e.g., with ~40,000 labeled examples). Meanwhile, the M2 LLM, as a long-term aggregation model, aggregates multiple 10 second analyses (e.g., 6x10s= 1 minute) and detects slow P-wave and rhythm changes. In some embodiments, the two phases of LLM training may be performed as follows:
Phase 1: Training the M1 LLM (10s ECG Analysis)
   - Purpose: Train a first AI model to analyze 10 seconds ECG chunks.
   - Training Data: 40,000 labeled ECGs (10 seconds each).
   - Hardware: RTX 4090 (~1.5 hours per epoch).
Phase 2: Training the M2 LLM (Long-Term Aggregation)
   - Purpose: Train a second AI model to process longer ECG recordings (1-3 minutes).
   - Training Data: 100 clinical trial patients (1-3 min ECGs, split into 6×10s chunks per patient).
   - Hardware: GB10 DIGITS (~15 min per epoch).

In some embodiments, the fine-tuning of the LLMs (as AI models of the present disclosure) here can be done in two phases:
- Initial Training on RTX 4090. For training a single LLM, about 1.5 hours may be needed per epoch in some embodiments. For training a dual LLM, about 3 hours may be needed per epoch in some embodiments.
- Optimized Training & HPO on GB10 DIGITS. For training a single LLM, about 15-20 minutes may be needed per epoch in some embodiments. For training a dual LLM, about 30 minutes may be needed per epoch in some embodiments.

In some embodiments, the following AI fine-tuning roadmap may be used to implement the LLMs of the present disclosure:

| Task | Data | Hardware |
|---|---|---|
| Fine-tune LLaMA 3.23B (LLM-1, 10s ECG only) | 40,000 labeled ECGs (10s each) | RTX 4090 |
| Validate LLM-1 on real test ECGs (10s chunks only) | Test dataset with real-world ECGs | RTX 4090 |
| Fine-tune LLaMA 3.23B (LLM-2, 1-minute aggregation) | 100 patients with 1-3 min ECGs | GB10 DIGIT S |
| Train LLM-1 + LLM-2 to collaborate in real-time | Multi-LLM fine-tuning with long-term storage | GB10 DIGIT S |
| Deploy AI ECG system on real hardware | Integrated AI-powered ECG system | GB10 DIGITS / ASIC |

In some embodiments, the LLM deployment and real-time inference may be implemented as follows:

| Task | LLM Role | Hardware |
|---|---|---|
| Deploy AI ECG machine with GB10 DIGITS | Real-time inference | GB10 DIGITS |
| Test clinical integration of AI ECG | M1 LLM (10s analysis) + M2 LLM (long term patterns) | ECG Machine with AI |
| ASIC Hardware optimization | Compact AI ECG inference | Future AI ASIC chip |

In some embodiments, a retrievable memory & query/storage manager may be optionally implemented. For example, it may include a dedicated software or hardware module that indexes, compresses, and stores M1 LLM's context snapshots. It also provides fast retrieval of domain knowledge or episodic data based on M2 LLM's requests. In some embodiments, parallel hardware acceleration may be used to implement various aspects of the dual LLM scheme discussed above. For example, analog ASICs, GPUs, or other specialized processors can be used to handle the repeated, loop-based reprocessing of tokens without large-scale matrix storage. The parallel hardware acceleration minimizes latency, enabling continuous or high-frequency data analysis in real- world scenarios (e.g., continuous Holter ECG or real-time robotics).

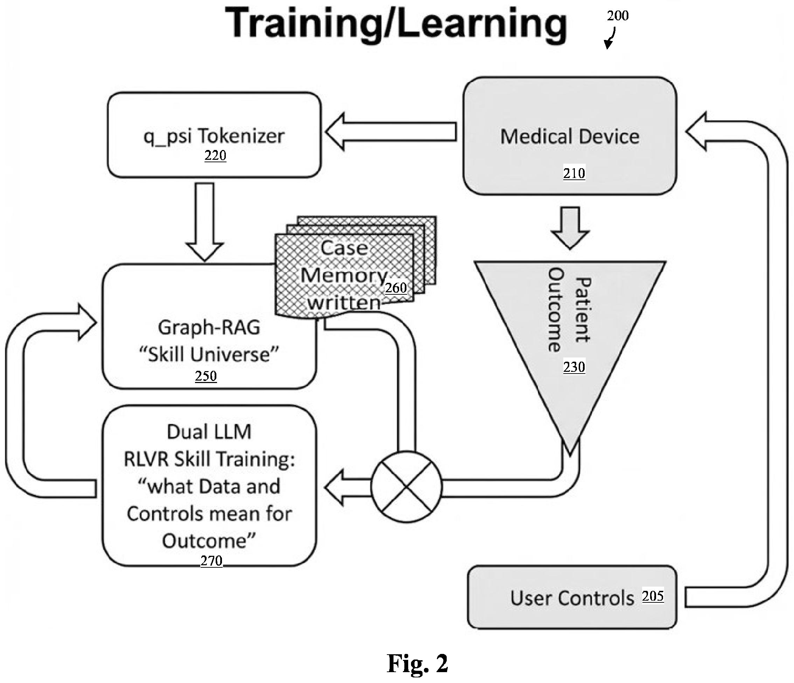

Figs. 2-4 illustrate process flows involving the various components discussed above with reference to Fig. 1 according to embodiments of the present disclosure. For reasons of consistency and clarity, similar components appearing in Figs. 2-4 will be labeled the same. Referring to Fig. 2, a training/learning process flow 200 is illustrated. As a first step of the process flow 200, based on user controls 205 (e.g., a hardware-based or software-based user interface), a medical device 210 produces raw medical data. The medical device 210 may include, but it not limited to: electrocardiogram machines (ECG machines) configured to generate electrocardiograms (ECGs) from heart electrical signals, electroencephalogram machines (EEG machines) configured to generate electrocardiograms (EEGs) from brain electrical signals, ultrasound systems and devices configured to generate/transmit and receive high-frequency sound waves or signals, magnetic resonance imaging (MRI) systems and devices configured to generate and receive radiofrequency (RF) signals, X-ray systems and devices configured to capture emitted X-ray beams and generate visual representations of target portions of patients' bodies, and computed tomography (CT) or computerized axial tomography (CAT) scan devices and systems configured to capture emitted X-ray beams and generate visual representations of target portions of patients' bodies. In some embodiments, the medical device 210 may comprise, or may be coupled to, the wireless communications device 110 of Fig. 1.

The raw medical data generated by the medical device 210 is sent to a Q-PSI tokenizer 220 (i.e., the Quantum Wave Tokenizer). As discussed above with reference to Fig. 1, the Q-PSI tokenizer 220 is configured to convert the raw medical data from the medical device 210 into precise, processable, understandable, clinically interpretable parameters. The manner in which such a conversion process (e.g., fitting the raw medical data with quantum waves and subsequently processing them with an interpreter) takes place will be discussed in more detail below with reference to Fig. 5.

In addition to outputting the raw medical data to the Q-PSI tokenizer 220, the medical device210 also produces data pertaining to a patient outcome 230. The patient outcome 230 may indicate how well a particular patient fared over the course of time, but it may or may not be known immediately. For example, the patient outcome 230 may indicate that the patient has been healthy for the last two years after the raw medical data has been measured, or that the patient had a heart attack three months after the raw medical data has been measured, or that the patient has had elevated blood pressure (e.g., above a predefined threshold) over a certain period of time. In some cases, the raw medical data taken from the same patient will necessarily vary significantly over time, for example, due to a medical procedure having been performed (e.g., ablation). Regardless, the patient outcome 230 is not binary but may include a plurality (e.g., hundreds or even thousands) of different outcomes corresponding to different diagnoses. All of these different outcomes and/or diagnoses may be used retroactively to train the system herein.

The tokenized data generated by the Q-PSI tokenizer 220 is sent to a Graph-RAG 250, also referred to as "skill universe" herein. The Graph-RAG 250 is represented by the hemispheres A and B and the skills discussed above with reference to Fig. 1. As such, the Graph-RAG 250 includes the memory that contains the processed (e.g., tokenized) medical data, as well as the skills (e.g., rules for the LLMs) that are trained. The memory and the skills collectively form the knowledge of the system. Note that the Graph-RAG 250 may also comprise case memory 260, which refers to the data pertaining to all the patients that has been collected by the system during training and during episodic learning. The case memory 260 may continue to increase with every new patient on which the system is trained.

In some embodiments, the setup of the Graph-RAG 250 comprises a vector database of prompt nodes that each contain a piece of reasoning logic. The top relevant snippets of the prompt nodes are retrieved and fed into an LLM for answer generation. Such a retrieval may be done via a Ball Tree or KNN search in the feature space. This forms effectively a graph of knowledge, where the connectivity is implicit in the distance metric of the feature space and explicit through parent-child relationships of prompts (when the M2 LLM creates a new prompt, it records which prior prompts influenced it). Over time, as the M2 LLM adds prompts, this becomes a growing graph, one that reflects the topology of the problem domain as experienced by the model. For example, prompts that deal with arrhythmias may form one cluster, while prompts for ECG artifact handling form another cluster. If a case lies between clusters, the prompts from both cluster may be retrieved, effectively blending knowledge. If no cluster is a good fit for the case, the M2 LLM flags it as a truly novel scenario for which a new node may be needed.

This graph structure is inherently explainable. A user or auditor can inspect the prompt nodes connected to a given diagnosis outcome, see their content (which is usually in natural language or pseudo-code form describing the rule), and understand the rationale. The graph also provides transparent updates: every time a new prompt node is added by the M2 LLM, it is akin to adding a new entry in a changelog or knowledge base. The node carries metadata of when it was added, why (which errors it was addressing), and links to predecessor nodes (the parent_ids) if it was derived from tweaking existing rules. This is vastly more transparent than weight updates in a neural network. It means the evolution of the model is trackable - one can see versioned changes in the prompt bank and even revert or simulate different versions of the reasoning if needed. For instance, for regulatory review, one could produce a difference of the knowledge graph before and after a batch training to show what exactly changed in the system's reasoning.

Another benefit of the graph RAG approach is that it enables modularity. If for some reason a certain set of rules (say all prompts related to pediatric cases) need to be revised or isolated (e.g., due to a new guideline), they form a subgraph that can be updated without overhauling the entire model. The rest of the system remains untouched. Traditional end-to-end models lack this granularity - changing the model for one subset of cases can unpredictably affect others. The knowledge graph herein is much more surgical in that respect. It is feasible to maintain different branches of the prompt graph for different institutions or user preferences as well. For example, a certain hospital might customize a few prompt nodes to align with their protocol (e.g., how aggressive to be in diagnosing a borderline condition), and those would live as small modifications in their copy of the graph, while still benefiting from the overall architecture.

From a technical perspective, the graph acts as a memory cache that an LLM (e.g., the M2 LLM) uses to ground its reasoning. Unlike typical RAGs where the LLM might still generate a lot of free text around retrieved info (and potentially hallucinate), in the system herein the retrieved prompt text effectively constrains the LLM's output. The M1 LLM is not merely handed some reference text. Rather, the M1 LLM is being handed instructions and even templated language that it should follow. This is a key distinction - the prompts are active constraints, not passive context. They ensure that the M1 LLM's output adheres to known good patterns. In many cases, the M1 LLM's final answer is templated by the prompt (with slight variations for patient data), which is why it can be deterministic and audited. Essentially, the system herein uses retrieval to inject domain knowledge and guardrails into the generation process in a structured way.

In summary, the structure of the Graph-RAG 250 herein is what allows the system to be explainable by design and updatable by design. It stores knowledge in a human-comprehensible form (nodes with rules) and organizes that knowledge in a spatial layout that corresponds to real-case variations, making retrieval relevant. Every piece of reasoning has a place in that graph. When the system herein generates an explanation, it effectively walks a user through the graph: "the case was routed to cluster A, which triggered rules 1, 2, 3, leading to diagnosis X." When the system learns, it is editing the graph: "added rule 4 under cluster A to handle new observation." This graph paradigm is at the core of how the system herein is capable of delivering trustworthy AI - it is not only about getting predictions right, but about structurally encoding and communicating the why behind those predictions.

The data from the Graph-RAG 250 and the patient outcome 230 are collectively sent to perform Dual LLM RLVR (Reinforcement Learning with Verifiable Rewards) Skill Training 270, which indicates what data and controls mean for outcome. The dual LLMs refer to the M1 LLM and the M2 LLM discussed above with reference to Fig. 1. RLVR is a particular type of reinforcement technique that is not just based on the so-called policies. In that regard, a policy means that the system estimates whether the learning is good or bad, and this estimation is done on some noise parameters, on some parametric fits, and/or on some vectorization of outcomes. Although the policy-based learning involves complex formulas, it may not be sufficiently powerful, because sometimes it makes the wrong decision. In addition, if the policy-based learning occurs in the feature space of an LLM, it may be a complete black box. In contrast, RLVR improves LLM reasoning capabilities by using automated and objective feedback (which may be binary)-such as code tests or math solvers-to verify correctness, removing the need for human annotation. In some embodiments, RLVR may check with every step whether the outcome is better classified by the system after a particular change of the skill. The outcome may refer to the matching between the gold label and the prediction.

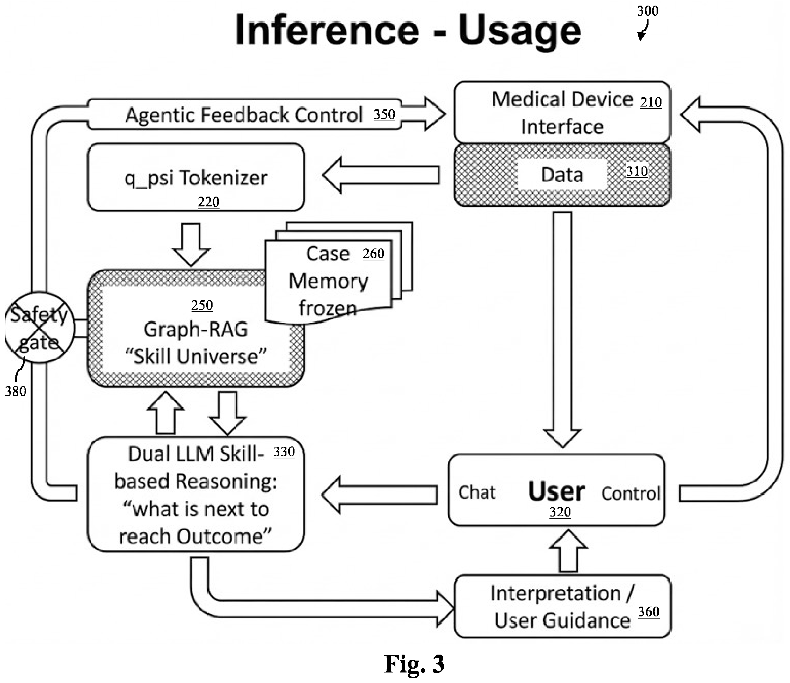

Referring now to Fig. 3, an inference-usage process flow 300 is illustrated. Again, similar components that were discussed above in association with Fig. 2 are labeled the same in Fig. 3. In the context of Fig. 3, inference refers to the output generated by the agentic LLMs of the system herein for a single case (e.g., a particular patient). The inference is not limited to just a diagnosis, but it may include a suggestion or recommendation on one or more actions that should be performed. For example, suppose that a medical device is an ablation tool, the inference made by the agentic LLMs may indicate that there has been enough ablation, and that the ablation should stop. As another example, in a diagnostic scenario and/or in an emergency care situation, the agentic LLM may suggest a certain sequence of diagnostic measures because the patient has certain known risks factors.

A properly generated inference herein involves an interaction between a user (e.g., a medical professional) and the medical device 210 and between the user and the dual LLMs discussed above. For example, a user 320 may control (e.g., by issuing commands) the medical device 210 via an interface of the medical device 210. The medical device 210 generates raw patient data 310 (e.g., ECG data) that is sent to both the user 320 (to be reviewed by the user) and the Q-PSI tokenizer 220 (to be converted into tokens). The user 320 may also communicate with the dual LLMs via a chat-based user interface. Based on the chat input received from the user 320, the dual LLMs (e.g., the M1 LLM and the M2 LLM discussed above) perform LLM skilled-based reasoning 330, including what is next to reach outcome. The dual LLMs communicate with the Graph-RAG 250 ("Skill Universe) back and forth to perform the skill-based reasoning. Note that the case memory 260 is frozen in the process flow 300, meaning that the rules remain unchanged.

The dual LLM skill-based reasoning 330 generates an output (e.g., an inference) that is then fed back as a part of agentic feedback control 350 to the medical device 210. The medical device 210 may adjust its operations at least in part based on the agentic feedback control 350. The output of the dual LLM skill-based reasoning 330 is also fed back to the user 320 as a part of interpretation/user guidance 360, which may include not just diagnoses, but also suggestions or recommendations on what action(s) to perform next. The user 320 may then adjust the control of the medical device 210 and/or the chatting with the agentic LLMs accordingly. As such, instead of having a reinforcement learning cycle (as was the case in the process flow 200 of Fig. 2), the process flow 300 involves a chat cycle involving the user 320 and the agentic LLMs.

In some embodiments, a safety gate mechanism 380 is implemented as a part of the process flow 300. In that regard, since the agentic feedback control 350 is configured to interact with the medical device 210 directly, a certain level of risk may be introduced by such an interaction. For example, the agentic feedback control 350 may occasionally generate commands for operating the medical device 210 in an undesirable manner (e.g., stopping or disabling a function of the medical device 210, or instructing the medical device 210 to operate in a manner that may be unsafe or at least unpleasant for the patient). To prevent or mitigate the occurrence of such circumstances, the safety gate mechanism 380 (which may include a hardware component and/or a software component) is implemented to provide a check on the agentic feedback control 350. In some embodiments, the safety gate mechanism 380 may comprise various safety rules that may be triggered in response to certain types of content of the output generated by the dual LLM skill-based reasoning 330, such as instructions to operate the medical device 210 beyond certain predefined thresholds. In this manner, the agentic feedback control 350 may be kept in check, and the medical device 210 may be operated safely and securely.

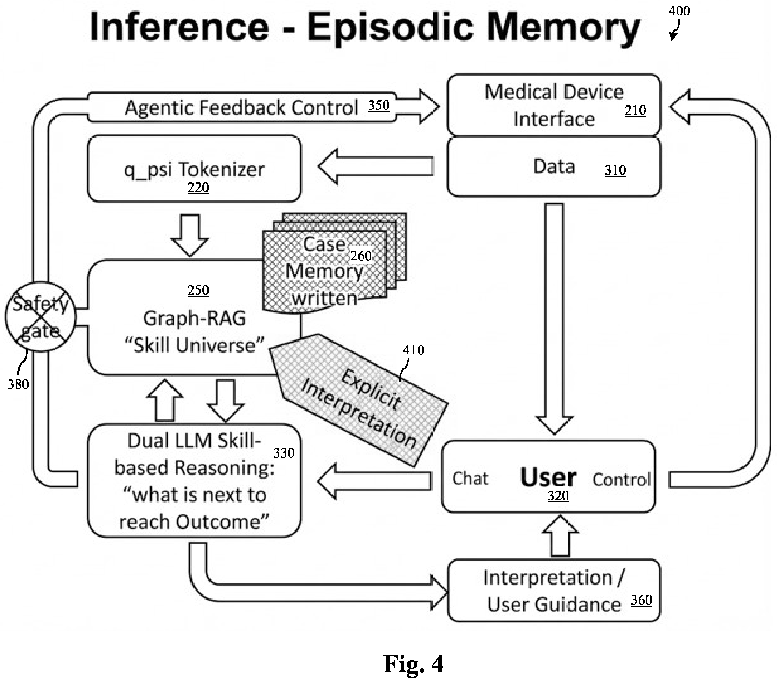

Referring now to Fig. 4, an inference-episodic memory process flow 400 is illustrated. Again, similar components that were discussed above in association with Figs. 3-4 are labeled the same in Fig. 4. The process flow 400 is similar to the process flow 300 of Fig. 3 in many respects. One difference between the process flow 400 and the process flow 300, however, is that the case memory 260 is no longer frozen, but it can be written thereto. This is done to enable or facilitate further training or adjustment.

Another difference between the process flow 400 and the process flow 300 is that the process flow 400 includes an explicit interpretation 410. The explicit interpretation 410 may comprise explicit instructions from the user 320 to tell the agentic LLMs to make a specific diagnosis, or refrain from making a specific diagnosis. Such an explicit interpretation 410 may be written into the Graph-RAG 250 as a skill or a rule. In some embodiments, the explicit interpretation 410 is provided via an interpretation module that is implemented as a part of the chat between the user 320 and the agentic LLMs. The user 320 would have to specifically activate the interpretation module to provide the explicit interpretation 410. This prevents an inadvertent phrase or sentence uttered by the user 320 via the chat from being misinterpreted as an explicit interpretation 410. In other words, the user 320 has to demonstrate specific intent for the explicit interpretation 410 to be construed as such.

In summary, the dual LLM scheme herein dynamically re-ingests new data tokens (e.g., corresponding to (ECG signals, sensor readings, textual instructions, etc.) into at least one specialized LLM (e.g., M1 LLM). This allows the active context to remain accurate and up to date for immediate decision-making. In a long-term memory management context, a second LLM (e.g., M2 LLM) oversees episodic memory storage in a retrievable database. Summaries of the context window are stored when significant changes occur (e.g., new test results, additional patient info, or novel sensor data). The M2 LLM can also be configured to manage an expert knowledge database, continuously monitoring for keywords that trigger the retrieval of domain-specific facts, guidelines, or prior episodes. When relevant terms, anomalies, or user queries appear in the real-time data, the M2 LLM fetches the appropriate background information or historical episodes. This knowledge is then injected into the active context, augmenting M1 LLM's decision-making and inference with richer domain expertise-akin to consulting a medical knowledge base or robotics manual on the fly.

In some embodiments, the operational flow of the dual LLM scheme herein undergoes the following stages:
**1. Initialization**
   ∘ M2 LLM retrieves relevant patient history (in a medical context) or stored knowledge from prior episodes.
   ∘ M1 LLM loads its baseline context window with current input (e.g., "new ECG session started" or "robot initial position established").
**2. Continuous Token Reprocessing**
   ∘ M1 LLM ingests new tokens (sensor data, medical signals, etc.) in streaming fashion.
   ∘ M1 LLM updates the context on the fly and generates immediate outputs (decisions, interpretations, or commands).
**3. Keyword/Trigger Detection**
   ∘ As M1 LLM interprets the data, M2 LLM monitors token streams for relevant triggers-patient risk flags, device anomalies, domain-specific jargon.
   ∘ On detecting a trigger, M2 LLM fetches associated knowledge (e.g., "ventricular tachycardia guidelines," "robotic obstacle avoidance procedure," or stored episodes from the last session) and injects it into M1 LLM's context.
**4. Episodic Summarization and Storage**
   ∘ When M1 LLM transitions to a new activity (e.g., finishing a procedure, discovering
      a critical anomaly), M2 LLM compiles a summary of M1 LLM's context.
   ∘ The system stores this summary (an "episode") in the retrievable memory for future reference.
**5. Output**
   ∘ M1 LLM finalizes the integrated reasoning, potentially returning a diagnosis
      (medical) or an action plan (robotics).
   ∘ M2 LLM stands ready to record that output as part of the evolving episodic log and to recall it if needed in the future.

As discussed above, the dual-LLM scheme herein is one of the unique characteristics of the present disclosure and offers advantages over traditional AI medical systems. The M1 LLM handles real-time reasoning and immediate context interpretation, while the M2 LLM manages structured knowledge retrieval and storage. In addition, whereas traditional AI medical systems often embed knowledge into opaque memory that is not human-readable (and therefore impossible to verify accuracy), the system herein stores long-term information in human-readable ASCII text, allowing explicit review, correction, and structured updates. In some embodiments, the system herein utilizes structured memory storage (e.g., formatted text, knowledge graphs), ensuring all stored knowledge can be audited and edited when necessary. This feature is particularly critical in applications such as medical AI, legal AI, and high-stakes decision-making systems.

The system herein is also scalable and modular with multiple memory units. In more detail, whereas traditional medical AI systems typically employ a monolithic model, the system herein distributes processing across multiple AI cores, allowing for parallelized, scalable computation. Each independent ASIC-accelerated AI unit can specialize in different types of knowledge (e.g., medical, mathematical, or legal memory units). This modular approach enables dynamic scaling, thereby enhancing the adaptability of the system herein.

Furthermore, the system herein improves storing memory based on a "surprise" function (high-gradient tokens are stored automatically) by allowing a secondary validation step, where stored knowledge can be:
- Automatically accepted (for general knowledge).
- Flagged for expert review (in specialized fields like medicine or law).
- Deleted or corrected when necessary.
This prevents the accumulation of misleading or biased information over time.

A mathematical framework usable to implement the dual LLMs discussed above is provided below:
**1. Notation and Preliminaries**
We define:
- $xx ∈ {ℝ}^{NN \times d din}$ as the input sequence with *NN* tokens and embedding dimension *dd*ᵢₙ.
   - *MM* as the structured long-term memory storage (human-readable ASCII-based memory).
- *LL*₁ as the Short-Term Memory LLM for real-time transformer processing (e.g., the M1 LLM).
- *LL*₂ as the Long-Term Memory LLM for structured knowledge retrieval and memory management (e.g., the M2 LLM).
- *QQ, KK, VV* as the standard query, key, and value matrices in self-attention. *-* 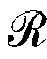 (*qq*) as the retrieval function, which retrieves past knowledge based on a query embedding qq.
**2. Processing Flow: How the dual-LLM architecture Interacts with Memory**
At each timestep *tt,* the system follows this sequence:
1. Short-Term Processing with LLM-1 (Transformer for Immediate Context Analysis) ${QQ}_{tt} = {xx}_{tt} {WW}_{QQ} , {KK}_{tt} = {xx}_{tt} {WW}_{KK} , {VV}_{tt} = {xx}_{tt} {WW}_{VV}$ ${y}_{t} = {{\sum }_{j = 1}}^{t} softmax \left({Q}_{t}{{K}_{j}}^{T}/√{d}_{in}\right) {V}_{j}$ where *yₜ* is the standard transformer attention output for immediate context processing.
2. Querying Long-Term Memory with LLM-2
   ∘ Instead of relying solely on the local context, the dual LLM architecture retrieves stored knowledge from structured memory *MM:*
      *qqₜₜ = ff*(*QQₜₜ*) (query function projecting queries to memory space) *mmtt =* 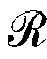 (*qqₜₜ, MM*) (retrieval from structured memory) where:
      ∘ *qqₜₜ* represents the semantic embedding of the current token query.
      ∘ 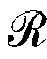 (*qqₜₜ, MM*) retrieves stored contextual knowledge related to *qqₜₜ,* ensuring structured recall.
3. Memory-Augmented Context Representation
   ∘ The retrieved knowledge *mmₜₜ* is concatenated with the token embeddings before attention computation: ${{x}^{˜}}_{t} = \left[\left.{x}_{t}\right‖{m}_{t}\right]$
   ∘ This extends the effective context, allowing the dual LLM architecture to process both short-term reasoning and past experiences simultaneously.
4. Memory Storage Update (Surprise-Based Learning)
   ∘ If *qqₜₜ* represents new, surprising information, the dual LLM architecture updates its structured memory MM:
      *MM*_{*tt*+1} = *λλMMₜₜ +* (1*-λλ*) · *gg*(xx*ₜₜ*) where:
      ∘ *gg*(*xxₜₜ*) is the knowledge representation function that encodes new knowledge.
      ∘ *λλ* is a forgetting factor, ensuring outdated knowledge is replaced over time.
      ∘ Unlike Titans (which stores embeddings), the dual LLM architecture updates memory as structured, human-readable knowledge.
**3. Mathematical Summary**

| Feature | Mathematical Model of Dual LLM architecture |
|---|---|
| Query Encoding | *qqₜₜ = ff*(*QQₜₜ*) (transformer query projection for structured memory lookup) |
| Memory Representation | *MMₜₜ* is structured ASCII-text memory with retrieval functions |
| Retrieval Mechanism | *mmtt =* 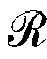 (*qqₜₜ, MM*) (structured memory retrieval) |
| Attention Update | *x̃ₜ =* [*xₜ* ∥ *mₜ*] (same principle but interpretable storage) |
| Memory Learning | Surprise-based structured text updates |
| Memory Update Rule | *MM*_{*tt*+1} = *λλMMₜₜ +* (1 *- λλ*) · *gg*(*xxₜₜ*) |

Mathematically, the dual LLM architecture above extends transformers with an additional retrieval function. The dual LLM architecture also manages structured, verifiable knowledge.

As discussed above, raw medical data (e.g., ECG data, ultrasound data, X-ray data, MRI data, CT data, or CAT scan data) may be converted to tokens via quantum waves according to various aspects of the present disclosure. Currently, interpreting medical imaging data (e.g., ultrasound images) automatically and accurately is a significant challenge due to the complexity of the data and its dependence on the operator's technique. However, with the quantum wave function tokenization and LLM-powered analysis of the present disclosure, medical analysis based on medical imaging data could be transformed. For example, by applying quantum wave analysis, the system of the present disclosure can break down ultrasound or other images into wave-based tokens, providing real-time insights into tissue structures, organ sizes, and spatial relationships. Additionally, in an ultrasound application, for example, the technology can be configured to integrate real-time data from the position and angle of the ultrasound head, allowing the system to "understand" the imaging process as it happens. This would enable unprecedented precision and speed in ultrasound interpretation, creating a truly smart, adaptive imaging tool. The potential impact spans across applications like prenatal care, cardiology, and emergency medicine. Finally, the broader medical device market-including neuroimaging, EEG, and patient monitoring-presents additional applications.

For example, the present disclosure unifies three cutting-edge application domains:
- P-Wave Analytics for Atrial Fibrillation (AF) Recurrence Prediction
- T-Wave Analytics for Ventricular Arrhythmia Risk Assessment
- Predictive ECG Monitoring in Post-Myocardial Infarction Patients

With respect to the application domain of P-Wave Analytics for Atrial Fibrillation (AF) Recurrence Prediction, atrial fibrillation remains a major challenge, particularly after pulmonary vein isolation (PVI), with up to 30% of patients experiencing recurrence due to ectopic triggers outside the pulmonary veins. Detailed P-wave analysis may be performed using several complementary approaches:
- P-Wave Duration (PWD):
   Prolonged PWD (typically >130-160 ms) is indicative of atrial conduction abnormalities and structural heterogeneity. Extended PWD can be correlated with re-entry circuit predisposition and areas of slow conduction.
- Beat-to-Beat (B2B) P-Wave Analysis:
   Rather than relying solely on static measurements, B2B analysis examines the temporal variability in P-wave morphology. A higher B2B index (e.g., >0.5) suggests evolving conduction pathways and multifocal ectopic activity, correlating with increased arrhythmia vulnerability.
- P-Wave Alternans (PWA):
   Microvolt-level amplitude fluctuations across beats (PWA) have been linked to electrophysiological instability. Elevated alternans values (e.g., >4.0 µV in select leads) serve as reliable markers of AF recurrence risk.
- Notched P-Waves and Amplitude Dispersion:
   The presence of M-shaped or "notched" P-waves-often observed in inferior leads- signals conduction delays and asynchronous atrial activation. Complementary metrics, such as the Amplitude Dispersion Index (ADI) derived from wavelet transformations or butterfly plots, capture spatial heterogeneity across leads, further refining recurrence prediction.
- Site-of-Origin Analysis:
   Advanced body surface potential mapping (BSPM) combined with machine learning has enhanced our ability to localize ectopic foci. Simulated integral maps can cluster these foci into distinct atrial regions, guiding more precise interventions.

With respect to the application domain of T-Wave Analytics for Ventricular Arrhythmia Risk Assessment, subtle modifications in T-wave morphology reflect changes in repolarization dynamics-critical for identifying patients at risk of malignant arrhythmias and sudden cardiac death (SCD):
- T-Wave Alternans (TWA):
   Defined as beat-to-beat fluctuations in T-wave morphology, TWA is a marker of arrhythmogenic vulnerability. Elevated TWA levels have been correlated with post-infarction electrical instability.
- T-Wave Angle Variability:
   Variability in the T-wave's angular orientation has emerged as an independent predictor of mortality. Increased repolarization angle dispersion signals an early warning of electrical instability.
- Periodic Repolarization Dynamics (PRD):
   PRD quantifies low-frequency oscillations in cardiac repolarization. In post-myocardial infarction patients, higher PRD values are significantly associated with both sudden and non-sudden cardiac death.
- QT Interval and T-Wave Heterogeneity:
   Prolonged QT intervals and increased beat-to-beat T-wave variability have been linked to a higher risk of malignant arrhythmias, emphasizing the importance of comprehensive repolarization analysis.

With respect to the application domain of Predictive ECG Monitoring in Post-Myocardial Infarction Patients, ECG markers continue to play a pivotal role in prognosticating outcomes in post-myocardial infarction patients:
- Q-Waves, ST-Elevation, and ECG-Derived Markers:
   Traditional parameters-including Q-waves and ST-segment elevations-correlate with infarct size and adverse outcomes. Moreover, indices such as QRS duration, T-wave alternans, and repolarization markers are instrumental in assessing left ventricular dysfunction.
- Dynamic Risk Stratification via AI:
   Recent advancements have shown that AI-powered ECG models can detect subtle signal variations imperceptible to human observers. Deep neural networks can achieve high accuracy in predicting one-year mortality and identifying patients at risk for heart failure. These approaches underscore the potential of integrated, high-resolution monitoring to drive personalized therapy decisions regarding drug regimens, lifestyle, and nutritional modifications.

While CNN (convolutional neural network)-based AI and traditional ECG analytics have each provided valuable contributions to cardiac diagnostics, they have generally been deployed in isolation. Current systems face several critical limitations:
- Fragmented Analysis by Lead or Parameter:
   Many devices analyze P-waves, T-waves, or other markers in isolation, failing to capture the interdependencies among these features. This piecemeal approach overlooks the full interplay of morphological, spatial, and temporal information inherent in the ECG.
- Limited Temporal Context:
   Conventional CNNs excel at recognizing patterns in short time windows-typically seconds-but they lack the capacity to integrate recordings spanning multiple minutes.
- Restricted Data Representation:
   Many existing methods rely on fixed signal transformations (e.g., wavelets) that do not adequately capture the multidimensional complexity of the ECG, potentially missing critical inter-beat and inter-lead relationships.
- Reliance on Cloud-Based Scientific Platforms:
   Most state-of-the-art systems are available only as cloud-hosted scientific platforms. This model limits accessibility in clinical settings where real-time, on-device analysis is required, and raises concerns about data security, latency, and integration into everyday patient care.
- Data Volume and Training Constraints:
   CNN-based systems typically require tens of thousands of training samples-often derived from short (10-second) ECG snippets. This requirement far exceeds the scale of most clinical trials, where patient cohorts often number only in the hundreds and recordings span longer durations (exceeding one minute). Consequently, CNN-based models struggle to generalize effectively on clinically representative datasets.
- Limited Scalability for Outcome-Based Learning:
   Even model that employ standard classification machine learning on ECG shapes from thousands of patients does not integrate patient-specific outcome data with broader scientific insights. In contrast, the innovative approach of the present disclosure-integrating the intelligent, brain-inspired dual LLM system- forms an internal model that leverages both patient outcomes and established scientific knowledge. This model requires only fine-tuning of hyperparameters, making it viable even on a much smaller cohort of hundreds of patients.
Together, these limitations underscore the need for a solution that seamlessly integrates full-spectrum ECG data, operates on-device (or with minimal cloud dependency), and learns effectively from realistic clinical datasets.

To address the problems discussed above, the present disclosure implements a novel quantum wave function tokenization scheme, which may be integrated with the dual LLM architecture discussed above to achieve advanced ECG analytics to overcome long-standing limitations in signal integration and real-time predictive performance-all while also providing conventional ECG measurements for seamless clinical integration. In more detail, the quantum wave function tokenization scheme herein transforms raw ECG signals into a set of structured, multidimensional tokens. Each token captures critical parameters-amplitude, phase (angle), frequency (period), and time domain-offering a highly granular description of cardiac electrical activity. For example, by encoding multi-lead ECG data as a three-dimensional (3D) vector whose precession over time is modeled as a sum of quantum wave functions, the present disclosure naturally delineates clinically meaningful features such as P-waves, QRS complexes, and T-waves. This approach provides:
i. Precision: Every token simultaneously encodes local details and a global context.
ii. Versatility: The method herein applies universally to temporal signals (ECGs) and spatial data (e.g., CT scans, ultrasounds).
iii. AI-Friendly Structure: Tokens are optimally formatted for transformer-based models, reducing the need for extensive preprocessing.

Time series data is at the core of many scientific and industrial applications, from financial forecasting to medical diagnostics. The ability to effectively tokenize and represent this data determines how well AI models can interpret and analyze patterns over time. However, conventional tokenization approaches-which typically segment time series data into discrete parts-often struggle with preserving the full complexity of signals that exhibit wave-like behavior, such as electrocardiograms (ECG), ultrasound, and other physiological waveforms. In contrast, the Quantum Wave Function Tokenization scheme of the present disclosure (e.g., executed by the Q-PSI tokenizer 220 discussed above) treats the data as continuous wave functions. In more detail, instead of dividing time series into fixed segments, Q-PSI models the underlying waveform structure by fitting wave-like components, sometimes using Gaussian functions, to preserve the shape, morphology, and frequency characteristics of the original signal.

Importantly, this approach captures and preserves both the time-domain and frequency-domain characteristics of the signal, making it particularly well-suited for biomedical applications and offers more interpretability and depth of information retained from the original signal. In that regard, medical applications such as ECG, EEG, ultrasound, and other bio-signals contain oscillatory behavior. Traditional tokenization methods often struggle to capture subtle waveform variations, such as minor changes in ST-segment elevation in ECGs or Doppler shifts in ultrasound that indicate pathological conditions. Here, by treating the signal as a continuous function, Q-PSI retains the fundamental properties of waves, including phase relationships, frequency modulation, and waveform morphology. This makes it especially valuable in fields where signal continuity and frequency composition are essential to diagnosis. Q-PSI also aligns well with human interpretation of biomedical signals. Clinicians do not merely look at individual segments of an ECG or ultrasound waveform. Instead, they analyze the holistic structure of the waveforms, including their shapes, oscillations, amplitudes, and frequency changes over time. By providing a tokenization framework that mirrors this human understanding, Q-PSI makes AI-generated insights more interpretable and clinically useful.

While ECGs are a natural application of Quantum Wave Tokenization, other types of medical applications such as ultrasound imaging and EEG analysis also benefit from this approach. In ultrasound, both Doppler shifts and continuous wave characteristics provide valuable diagnostic insights. Standard tokenization methods used in AI-assisted ultrasound interpretation often fail to capture these shifts, leading to AI models that miss subtle vascular abnormalities or fetal cardiac issues. By encoding frequency changes and waveform oscillations in a physics-informed manner, Q-PSI enables transformer models to better understand continuous flow dynamics in Doppler ultrasound, leading to more accurate AI-driven diagnostics. Similarly, in EEG analysis, traditional segmentation-based methods tend to overlook phase coupling and oscillatory synchrony between different brain regions, which are critical markers in neurological disorders. Q-PSI, by treating EEG signals as coherent wave functions, allows models to better capture brainwave phase interactions and spectral changes over time, thereby leading to better seizure prediction and cognitive state analysis.

Referring now to Fig. 5, a process flow 500 for converting raw medical data into tokens via quantum waves is illustrated. In other words, the process flow 500 may be performed by the Q-PSI tokenizer 220 discussed above. The Q-PSI tokenizer 220 may be implemented using a combination of software code and hardware module(s), for example, specialized computer software code executing on one or more central processing units (CPUs) and/or one or more graphics processing units (GPUs). The process flow 500 addresses the challenge of extracting meaningful features from complex biosignals (like ECG traces) or other raw data streams, because before any high-level reasoning (e.g., performed by the M1 LLM and/or the M2 LLM discussed above) occurs, the input data needs to be converted into a structured representation.

In a step 510 of the process flow 500, raw medical data is collected and preprocessed. For example, the raw medical data may include the raw patient data 310 of Fig. 3, which may be collected or generated by a medical device such as the medical device 210 of Figs. 2-3 and/or the wireless communication device 110 of Fig. 1. In some embodiments, the raw medical data may include ECG data, EEG data, MRI data, RF signal data, X-ray data, CT/CAT scan data, ultrasound data, etc. The raw medical data may also come from multiple channels or leads and/or may be multi-modal (e.g., including more than one type of medical data). In some embodiments, the preprocessing of the step 510 may include filtering, baseline detection, noise reduction, ROI (region of interest) detection, segmentation, or a combination of them. For example, noise or signal distortions may be removed from the raw medical data, and/or the peaks and/or baselines of the signals in the raw medical may be identified as a part of the preprocessing of the step 510.

It is understood, however, that the process flow 500 (e.g., for generating quantum wave tokens) is not limited to raw medical data. In other embodiments, the step 510 may be performed to access or obtain non-medical data, such as textual data, semantic data, and/or other natural-language inputs. As non-limiting examples, these textual/semantic/natural-language inputs may include: physician notes, medical descriptions, psychological assessments, clinical summaries, radiology reports, psychological or psychiatric evaluations, patient self reports, or any other narrative or descriptive medical content. These other types of data are also valid input modalities for the Q-PSI tokenizer of the present disclosure, with LLM-based semantic quantization described as a permitted mechanism for generating the wave-function parameters. In certain embodiments, the input data associated with step 510 comprises unstructured natural-language text, such as physician notes, narrative clinical assessments, psychological evaluations, or diagnostic descriptions, which are processed by a language-model-based component of the quantum wave tokenizer to produce vectorized representations suitable for wave-function fitting, where the vectorized representations and the wave-function fitting will be discussed in more detail below.

In a step 530 of the process flow 500, the preprocessed raw medical data obtained as a result of the performance of the step 510 undergoes a vectorization process. As a part of the vectorization, continuous or discrete data points (e.g., of the preprocessed raw medical data) are transformed into an ordered, numerical array or vector. Fig. 5 illustrates a simplified example of a three-dimensional vector space corresponding to a cube defined by an X-axis, a Y-axis, and a Z-axis, where the X-axis, Y-axis, and the Z-axis are orthogonal to one another. The vectorized signals, such as vectorized signals 540 and 541, are plotted as three-dimensional vectors in such a vector space. However, it is understood that the vector space may comprise more than three dimensions, and thus the vectorized signals may also be more than three-dimensional.

In an embodiment, the preprocessed raw medical data comprises ECG data, and a continuous ECG signal may be segmented into RR intervals using R-peak detection. Each segment is then vectorized to obtain a two-dimensional (2D) angle-magnitude representation by fitting an inverse solution for a patient-specific conversion matrix (e.g., from leads to vector angles). In another embodiment, the preprocessed raw medical data comprises ultrasound data, and each 2D frame from an ultrasound probe is parsed for regions of interest (ROI) in a radial coordinate system to encode spiral token center sequence and angle. Fitting of 2D Gaussians detects edges and intensities. In yet another embodiments, the preprocessed raw medical data comprises MRI data, and 3D volumetric data of the MRI data is sliced or handled in full 3D, with pre-segmentation algorithms highlighting relevant anatomical structures around a central point.

In some embodiments, the vectorization of step 530 is performed by a transformer-based large language model (LLM) which transforms the textual input into numerical semantic features. These features may include latent embeddings, semantic coordinate vectors, or explicitly extracted semantic attributes representing the meaning of the text.

In a step 550 of the process flow 500, the vectorized signals obtained as a result of the performance of the step 530 undergo a quantum wave fitting, where a quantum wave has a plurality of parameters that include (but may not be limited to) amplitude, time, and angle. As such, the quantum wave is at least three-dimensional. In order to represent the three-dimensional information of the quantum wave in a two-dimensional quantum wave plots 560 of Fig. 5, the angle parameter may be assigned to different colors (illustrated as different types of shades in Fig. 5), while the amplitude parameter corresponds to the amplitude (i.e., Y-axis) of the quantum wave plots 560, and the time parameter corresponds to the time (i.e., X-axis) of the quantum wave plots 560. For example, if the vectors have the same amplitude and time information but the angle information would change, then the resulting quantum wave plots 560 would not change its overall shape, but the color (e.g., shade) of the quantum wave plots 560 would vary.

The name "quantum wave" comes from the approach of fitting segments of the input signal (e.g., the vectorized signals) with quantum-inspired wavelets or basis functions. For example, the Q-PSI tokenizer 220 discussed above decomposes an ECG signal into a series of component waves (akin to modeling the signal as a combination of known wave shapes, such as Gaussians or Hermite functions). By doing so, it captures physiologically relevant characteristics (amplitude, phase, frequency content of each wave component, etc.) that are not apparent from raw pixel data. A subsequent Feature Extractor then derives higher-level features from these components - such as durations of intervals (PR interval, QRS duration), amplitudes of peaks, heart rate variability measures, and morphological descriptors like axis or waveform shape. The end result is a rich vector of features that concisely represents the patient's ECG in terms of clinically relevant metrics.

In some embodiments, the tokenizer uses Gaussian or other pA-RAMetric (e.g., parametric) wave functions to model features in the data. Key parameters can include, but are not limited to:
- Amplitude or Peak Magnitude: Reflects signal intensity (ECG wave amplitude, grayscale intensity for ultrasound, etc.).
- Phase Angle: May correspond to 3D vector angle in ECG or probe angle and location in radial coordinates in ultrasound.
- Width or Spread: Defines the duration or spatial extent of a structure. In ECG, this might be the temporal width of the T wave; in ultrasound, the spatial thickness of an organ boundary.
- Location: The time offset within the RR interval or the distance from center coordinates in 2D/3D imaging.

The Quantum Wave Function Tokenizer (QWFT) (also interchangeably referred to as Q-PSI above and below) algorithm herein iteratively optimizes each wave function parameter (e.g., via gradient descent or least squares methods) to minimize the error between the fitted wave function and the actual signal or image data. Wave function fitting is the process of adjusting a mathematical form (such as a linear combination of basis functions) so that the resulting wave function best represents a quantum system. By way of a non-limiting example, this can involve basis set expansion (e.g., using predefined basis functions such as Gaussian-type orbitals to construct approximate wave functions); least-squares fitting to match a trial wave function to a known or target wave function (e.g., from experimental data or a higher-level theory); and/or fitting to potential energy surfaces (e.g., PES or optimizing the wave function so it gives energy values that closely match known PES data).

Parametric Optimization involves optimizing the parameters within the wave function (or within the Hamiltonian/operator models) to minimize some cost function - often the energy of the system. Methods for doing so include, but are not limited to: (a) the Variational Principle (used in quantum mechanics to find the ground state by minimizing the expectation value of the Hamiltonian); (b) Gradient-Based Optimization (e.g., Newton-Raphson, conjugate gradient, or quasi-Newton methods for optimizing orbital parameters); (c) Stochastic Methods (e.g., genetic algorithms or simulated annealing, used for global optimization in complex systems), and (d) Machine Learning Approaches (e.g., neural network wave functions such as FermiNet or PauliNet) using deep learning to optimize parameters in a data-driven way.

In this manner, the time-dependent precession of the vectors is modeled as a set of wave functions representing the heart's electrical activity as a sum of quantum waves. These wave functions form structural complexes that naturally correspond to known ECG features such as P-waves, QRS complexes, and T-waves. Each wave function is defined by precise parameters-angle, amplitude, time, and period-providing transformers with an intuitive way to interpret the data. This approach not only enables the detection of specific features, but also facilitates their quantification, such as measuring the QRS complex width or the spatial vector shape of a T-wave across multiple heartbeats, with exceptional clarity.

It is understood that the wave-function fitting of step 550 can also operate on semantic features derived from LLMs. This allows an LLM prompt to function as a "semantic wave-parameter estimator." In certain embodiments, the system herein fits parametric wave functions not only to quantitative signals but also to vectorized semantic features derived from textual input by the LLM. For example, the system may treat semantic intensity, polarity, context-orientation, or meaning-derived attributes as amplitude, phase, angle, width, or location parameters of the fitted wave functions. Moreover, in certain embodiments, the fitting of the parametric wave functions may be performed by a language model executing a structured prompting procedure, which outputs numerical parameter values such as amplitude, phase, angle, width, or location derived from semantic content of the text. Such parameters may be used directly as wave-function coefficients.

The advantage of the quantum wave fitting approach of the present disclosure is at least twofold: lossless compression and semantic clarity. Unlike a generic neural network ingesting raw signals (which might learn intermediate features but in an opaque way), the output features herein are explicit and meaningful to human experts. For example, one feature might be "P-wave amplitude in lead II" or "QT interval duration" - things a cardiologist directly understands. This not only aids interpretability but also provides a structured input for the downstream Random Forest and LLM components. By converting the raw data into a structured form, the present disclosure significantly reduces the input complexity (from thousands of time-series points to a few hundred key features) while preserving the critical information needed for diagnosis. In essence, the Q-PSI tokenizer 220 acts as the sensory preprocessing of the overall system of the present disclosure, analogous to how the human eye's retina preprocesses visual signals or the cochlea preprocesses sound. It ensures that the subsequent reasoning modules (e.g., the M1 and M2 LLMs) are dealing with a vector of features that directly correlate with diagnostic concepts.

In some embodiments, Q-PSI tokenizer is domain-specific (e.g., the specific wave-fitting approach is tailored to ECG in this case). However, the principle can generalize: for any domain with complex raw data (e.g. chemical spectra, sensor readings, genome sequences), a specialized tokenizer can be designed to extract structured features relevant to that domain. The modular architecture of the present disclosure allows swapping in different front-end tokenizers. The takeaway is that the system of the present disclosure does not treat raw data as an undifferentiated blob - it imposes a meaningful structure upfront, which is crucial for the system's determinism and transparency. By the time the data passes through the Q-PSI tokenizer 220, the rest of the system can reason in terms of "clinical parameters" rather than uninterpretable signal values. This is a stark contrast to end-to-end deep learning, and it addresses one cause of black-box behavior by making the input representation itself explainable.

In a step 570 of the process flow 500, the quantum waves obtained from step 550 undergo a clustering and tokenization process, in which discrete tokens are created to represent clinically significant features. In more detail, upon fitting, each wave function's parameters become tokens-structured data that can be used as input to LLMs or other AI models. For instance, in one embodiment, an ECG Token may be represented as follows:

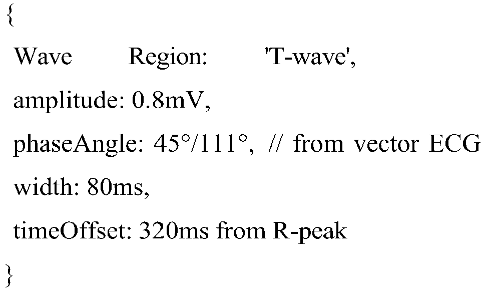

In another embodiment, an ultrasound Token may be represented as follows:

```
         {
         structureType: 'fetal head boundary',
         amplitude: 120 (greyscale),
         phaseAngle: 90°, probe angle 30°
         width: 15 pixels,
         location: (d=120)
         }
```

Regardless of whether the tokens are ECG tokens or ultrasound tokens (or other types of tokens corresponding to different medical technologies), they are both human-readable and reflect clinically meaningful attributes. With respect to variability analysis and classification, the system of the present disclosure can compare token sets across multiple time points or frames:
∘ ECG: By comparing each RR interval's wave tokens to an average or reference set, abnormal morphologies (e.g., arrhythmic beats, ST changes) can be detected. This comparison is particularly valuable for long-term trends such as T-wave alternans, which may signal lethal arrhythmias.
∘ **Ultrasound:** Comparing wave tokens across a sequence of frames with different scanning angles helps track fetal organ growth or movement in real time.
∘ MRI: Tracking volumetric wave tokens over multiple slices can highlight lesions or morphological changes between scans.

The token outputs herein are also adapted for easy integration with transformative AI. For example, the QWFT outputs are designed for direct ingestion by advanced AI pipelines, particularly large language models. For instance, in the dual LLM system discussed above, these wave tokens can be continuously fed into the model's context window, enabling real-time interpretation alongside other sensor or textual data.

It is understood that the resulting quantum wave tokens associated with step 570 may represent the semantic meaning of the text. In some embodiments, the quantum wave tokens generated from textual input represent semantic quantum wave parameters reflecting clinical meaning, such as severity, stability, symptom intensity, diagnostic category, or other semantic features extracted by the LLM.

Note that the various use-cases of the text-based wave tokenization applies to clinical workflows, such as:
- labeling patient state ("mild," "moderate," "severe");
- extracting semantic descriptors;
- integrating narrative descriptions into diagnostic models;
- harmonizing textual and quantitative modalities for case-placement in the memory lattice.

In some embodiments, the textual quantum wave tokens are used to classify patient state, disease severity, psychological profile, or other medically relevant semantic content, allowing integration of narrative medical information with quantitative physiological signals in unified downstream machine-learning models.

It is also understood that the system discussed herein can ingest both quantitative physiological signals and unstructured text. The system can tokenize them through the same wave-function-parameter framework, so that all tokens may populate the downstream classifier or graph-memory system. In some embodiments, the quantum wave tokenizer herein may be multimodal, receiving both quantitative time-series signals (e.g., ECG) and qualitative natural-language medical descriptions. Both modalities are converted into wave-parameterized quantum tokens that can be uniformly processed by downstream classifiers, random forest models, transformers, or graph-based memory architectures.

As discussed above, traditional medical data processing-even techniques that utilize machine learning models like convolutional neural networks to handle raw pixel data or raw time-series signals-may still struggle with:
1. High Dimensionality: Large volumes of data (e.g., continuous ECG,
   dense ultrasound frames, 3D MRI volumes) can exceed the parallel input limit of many machine learning models.
2. Contextual Interpretation: Existing systems often require complex
   feature engineering or manual labeling to interpret subtle but clinically significant variations (e.g., minor changes in T-wave morphology on ECG, faint structures in ultrasound, or small lesions on MRI).
3. Integration with Medical Expertise: Conventional models can underutilize domain knowledge from cardiology, radiology, or obstetrics, resulting in interpretative gaps that limit diagnostic potential.

As such, bridging the gap between raw medical data and an LLM-friendly representation had been a key challenge. The Quantum Wave Function Tokenizer (QWFT) scheme discussed above addresses the previous challenges by converting medical signals and images into parameterized wave function tokens that align with defined clinical features (e.g., P waves, T waves in ECG; structural shapes in ultrasound; volumetric features in MRI). As discussed above in association with Fig. 5, the QWFT scheme herein transforms complex medical data, signals or images into a compact, clinically aligned representation. By modeling portions of data, signals, or images as parameterized wave functions, the QWFT herein can be configured to:
1. Reduce Data Dimensionality: Instead of raw data, each relevant feature (e.g., a detected ECG wave, an anatomical boundary on ultrasound, or a volumetric contour in MRI) is represented by a set of wave function parameters-amplitude, width, phase angle, location, etc. In the case of the ECG, the phase angle represents the dominating vector direction of the best fitted voltage vector defined by all leads and through an averaged RR-interval of the recording, and the time represents the recording time, while the token sequence is defined by their temporal sequence. For the imaging applications the token angle is the position angle of the quantum wave center on a radial coordinate system around a central point, and the sequence of tokens is a spiral track from this point, while all tokens of one image have the same time.
2. Enhance Interpretability: These quantized parameters sets are defined to map naturally to known clinical concepts (e.g., intervals and waves in ECG, structural dimensions in ultrasound, lesion boundaries in MRI), making the output tokens intrinsically meaningful to both human clinicians and knowledge-based AI models.
3. Facilitate Rapid, Real-Time or Near-Real Time Processing: By using efficient fitting, the QWFT can update its tokenized representation in near real-time, making it suitable for continuous monitoring applications such as fetal ultrasound imaging or real-time arrhythmia detection.
4. Integrate Seamlessly with Advanced AI: The output tokens can be fed into a large language model or a transformer-based system (such as the dual LLM system discussed above) to leverage multimodal and contextual awareness. This allows the combined system to reason about both the wave function tokens and existing clinical knowledge simultaneously.
5. Cover Extended ECG Analysis: Long-duration ECG monitoring becomes more actionable because subtle morphological changes-like T-wave heterogeneities predictive of ventricular arrhythmias or P-wave variations indicative of atrial fibrillation recurrence-are captured in the QWFT parameters, significantly improving diagnostic accuracy and risk prediction.

Note that the QWFT disclosed and described herein may be employed in conjunction with one, two or more LLMs, and one or more retrieval-augmented generators (RAGs), where the QWFT receives ECG data or signals, tokenizes such data or signals, and then provides as outputs therefrom tokens to the one, two or more LLMs, which may be operably connected to the one or more RAGs. In some embodiments, the tokenized output from the Q-PSI tokenizer (such as the result from the step 570 of the process flow 500) may be used by the dual LLMs of the present disclosure to perform diagnostics. For example, in one embodiment, the M1 LLM receives each tokenized output as 1.7-second, tokenized ECG chunk, quickly identifying features such as ectopic beats, QRS morphology, or P-wave supraventricular premature beats. The M1 LLM then produces raw inferences and compact feature descriptors that are passed to the M2 LLM, which compiles these data into a broader timeline spanning tens of minutes.

In one embodiment, the M2 LLM continuously updates its context with incoming M1 LLM descriptors, examining subtle, slow-forming events like periodic clusters of atrial contractions or prolonged PR intervals. This "long-term" analysis reveals emerging conduction changes that may not be discernible from a single 1.7-second snapshot. Once a recording is complete, the M2 LLM finalizes an overall statistical summary of the session. This summary and all associated patient data are then appended to a long-term memory (LTM) repository so that the entire episode, along with the patient's history, can be retrieved in subsequent sessions.

In one embodiment, finetuning the M1 LLM and the M2 LLM relies on labeled ECG datasets, typically snippets of 1.7 seconds each, drawn from patients who did or did not experience atrial fibrillation (AF) recurrence post pulmonary vein isolation (PVI). The M1 LLM is first exposed to large unlabeled ECG corpora to learn general features. The M1 LLM is then trained on the labeled snippets for specific arrhythmia indicators. The M2 LLM is trained to integrate the M1 LLM's short-term embeddings over extended durations, enabling recognition of how transient events accumulate into higher-risk patterns over minutes. By dividing these responsibilities, the M1 LLM excels in detecting second-to-second nuances, while the M2 LLM becomes adept at correlating them with longer-term outcomes.

In one embodiment, the pseudocode of a QWFT pipeline for ECG data is listed below:

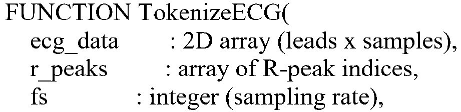

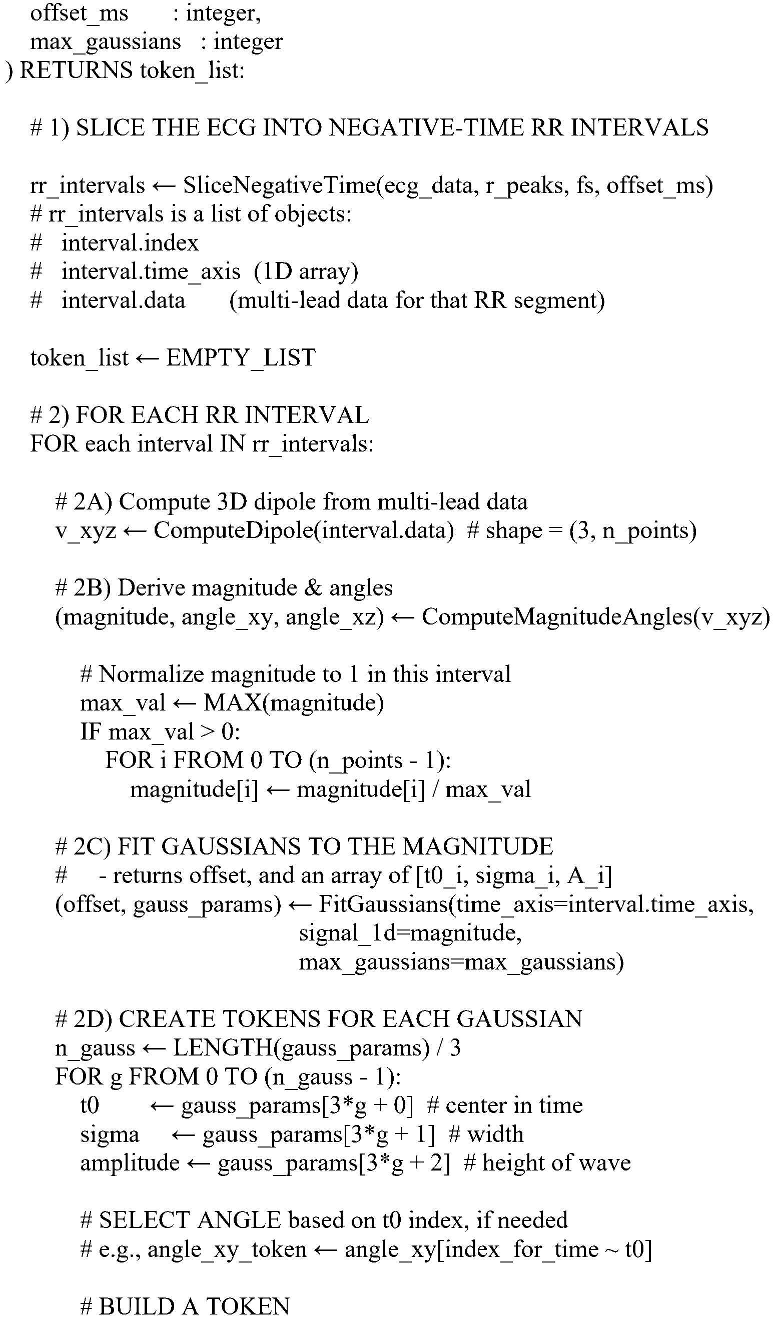

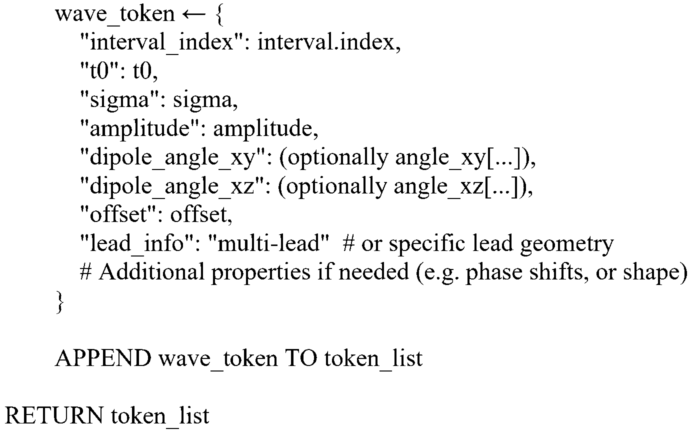

In some embodiments, the QWFT/Q-PSI scheme of the present disclosure is implemented with hardware acceleration. For example, an analog ASIC or specialized GPU can accelerate the fitting of wave functions (e.g., step 550 of Fig. 5) to high-dimensional data (e.g., 2D ultrasound frames, 3D MRI slices). In addition, parallelized fitting algorithms enable near-instantaneous updates, allowing the QWFT to handle fast physiological signals or real-time imaging. As such, the QWFT/Q-PSI scheme herein may be particularly useful in the field of cardiology (Holter monitor real-time analysis, stress ECG interpretation, prediction of sudden cardiac death, or telemedicine for arrhythmia detection), obstetrics (monitoring fetal growth via ultrasound in near real-time, comparing tokenized wave structures against typical developmental norms), and/or radiology (automated segmentation and anomaly detection in MRI, with advanced AI cross-referencing prior scans and patient records).

Discussed below are some concrete examples of the implementation of the QWFT/Q-PSI scheme herein, which may involve the performance of the steps 510-570 of Fig. 5 discussed above. In a first example, the QWFT/Q-PSI scheme is implemented for an ECG Tokenizer for Arrhythmia Detection and Risk Prediction. First, 24-hour Holter ECG data is collected at 500 Hz. R-peaks are identified, and RR intervals are segmented out. An average RR interval is computed to establish reference wave function parameters for P-wave, QRS complex, and T-wave. For each new RR interval, the QWFT fits wave functions, compares them to the reference, and flags significant deviations. In terms of risk stratification with respect to T-Wave Heterogeneity: the system herein detects subtle changes in T-wave amplitude, width, or phase angle. These morphological fluctuations (e.g., T-wave alternans) can signal higher risk for ventricular arrhythmias or sudden cardiac death. In terms of risk stratification with respect to P-Wave Heterogeneity: the system herein analyzes P-wave shape and timing across thousands of beats. Small irregularities or rare premature beats can predict the likelihood of atrial fibrillation recurrence, especially after pulmonary vein isolation procedures. A downstream LLM processes these token sequences over time (e.g., 24 hours of continuous data) and outputs a risk assessment, highlighting patients who may benefit from additional interventions, such as electrophysiological mapping or medication adjustments.

In a second example, the QWFT/Q-PSI scheme is implemented for an Ultrasound-Based Fetal Assessment. First, a 2D ultrasound probe captures cross-sectional images of a fetus. The QWFT then fits 2D Gaussian wave functions to represent edges of the skull, abdomen, and limbs. The probe angle is recorded as phase angle for each fitted wave function, providing orientation context. The resulting tokens are fed into a real-time LLM system that cross-references standard fetal growth charts. If the head circumference tokens deviate from the norm, the system raises an alert.

In a third example, the QWFT/Q-PSI scheme is implemented for MRI Lesion Tracking. First, a 3D MRI scan of the brain is obtained. Automated segmentation then highlights a suspicious lesion. The QWFT fits a 3D wave function (e.g., Gaussian ellipsoid) to approximate the lesion's shape and volume. Tokens describing the lesion parameters (size, location, approximate shape) are fed into a transformer that compares current and historical scans, assessing growth rates. Clinicians receive an automated summary referencing known lesion progression patterns.

Some of the advantages of the QWFT/Q-PSI scheme over the prior art may include (but is not limited to):
- Clinically Aligned Representation: Unlike raw data vectors or pixel-based approaches, wave tokens map directly to clinically recognized features, facilitating immediate interpretability.
- Reduced Complexity: Lower data dimensionality means more efficient processing, especially crucial for real-time applications.
- Adaptable Across Modalities: The same tokenization concept works for temporal signals (ECG) and spatial/volumetric data (ultrasound, MRI).
- Seamless Integration with LLMs: Because tokens are structured and annotated with clinically meaningful parameters, large language models can interpret them with minimal additional feature engineering.
- Improved Predictive Power: Long-duration ECG analysis becomes more actionable for high-risk event prediction (e.g., sudden cardiac death, atrial fibrillation recurrence) through robust wave-based feature extraction.

Various concepts of the present disclosure may be applied in a medical context, as well as non-medical contexts. In a non-limiting medical context example, the present disclosure may be applied to perform medical diagnostics with episodic recall. In more detail, an ECG Data Stream may be accessed. A quantum wave function tokenizer provides the M1 LLM with tokens describing each RR interval in real time. The M1 LLM performs immediate pattern recognition (e.g., checking T-wave heterogeneity). As long-term memory, the M2 LLM retrieves prior episodes of the patient's ECG (e.g., last month's recordings) upon seeing keywords like "arrhythmia." The M2 LLM also references an expert database (e.g., standard guidelines for diagnosing atrial fibrillation recurrence). In terms of episodic storage, when the session ends or a major change occurs (e.g., new medication started), M1 LLM's context is condensed into a summary and stored by the M2 LLM for future recall.

In a robotic navigation example, sensors such as lidar, cameras, or speed/inertia detectors are used to obtain initial data. The initial data is read by the M1 LLM as tokens. The M1 LLM generates motor commands on the fly, guiding the robot around obstacles. If the M1 LLM identifies an unfamiliar obstacle type, the M2 LLM triggers an internal knowledge base query (e.g., "obstacle classification: partial occlusion scenario"). The M2 LLM references stored "episodes" of prior near-collision situations, merges the solution path into M1 LLM's context, and the robot navigates safely.

In an industrial monitoring system example, real-time data feeds are obtained (e.g., from an assembly line), and the M1 LLM processes sensor tokens (temperature, pressure, vibration) from the assembly line. The M2 LLM detects unusual vibration patterns and queries an expert database on mechanical fault thresholds, returning relevant guidelines to the M1 LLM. As episodic summaries, the M2 LLM stores M1 LLM's summary after each significant maintenance or system alert, building an episodic knowledge base for future anomaly detection.

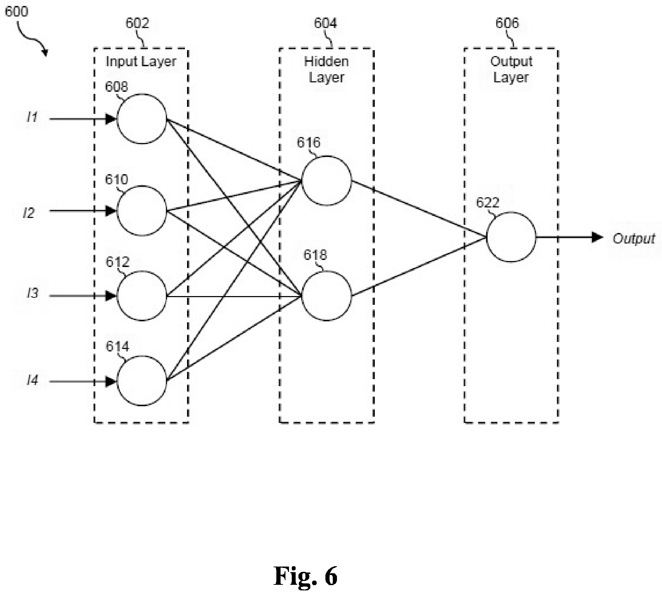

As discussed above, machine learning may be used to implement various components of the present disclosure. In some embodiments, the LLMs may be implemented at least in part via an artificial neural network. In that regard, Fig. 6 illustrates a simplified example artificial neural network 600. As shown, the artificial neural network 600 includes three layers - an input layer 602, a hidden layer 604, and an output layer 606. Each of the layers 602, 604, and 606 may include one or more nodes. For example, the input layer 602 includes nodes 608-614, the hidden layer 604 includes nodes 616-618, and the output layer 606 includes a node 622. In this example, each node in a layer is connected to every node in an adjacent layer. For example, the node 608 in the input layer 602 is connected to both of the nodes 616-618 in the hidden layer 604. Similarly, the node 616 in the hidden layer is connected to all of the nodes 608-614 in the input layer 602 and the node 622 in the output layer 606. Although only one hidden layer is shown for the artificial neural network 600, it has been contemplated that the artificial neural network 600 used to implement a part of the M1 LLM or the M2 LLM, and the M1 LLM or the M2 LLM may include as many hidden layers as necessary.

In this example, the artificial neural network 600 receives a set of input values and produces an output value. Each node in the input layer 602 may correspond to a distinct input value. For example, when the artificial neural network 600 is used to implement a machine learning module, each node in the input layer 602 may correspond to a distinct attribute of an ECG signal (or other types of incoming signals).

In some embodiments, each of the nodes 616-618 in the hidden layer 604 generates a representation, which may include a mathematical computation (or algorithm) that produces a value based on the input values received from the nodes 608-614. The mathematical computation may include assigning different weights to each of the data values received from the nodes 608-614. The nodes 616 and 618 may include different algorithms and/or different weights assigned to the data variables from the nodes 608-614 such that each of the nodes 616-618 may produce a different value based on the same input values received from the nodes 608-614. In some embodiments, the weights that are initially assigned to the features (or input values) for each of the nodes 616-618 may be randomly generated (e.g., using a computer randomizer). The values generated by the nodes 616 and 618 may be used by the node 622 in the output layer 606 to produce an output value for the artificial neural network 600. When the artificial neural network 600 is used to implement the machine learning module, the output value produced by the artificial neural network 600 may indicate a likelihood of an event.

The artificial neural network 600 may be trained by using training data. For example, the training data herein may include ECG data collected from previous patients and the observed outcomes and/or conditions of the previous patients. By providing training data to the artificial neural network 600, the nodes 616-618 in the hidden layer 604 may be trained (adjusted) such that an optimal output (e.g., determining a value for a threshold) is produced in the output layer 606 based on the training data. By continuously providing different sets of training data, and penalizing the artificial neural network 600 when the output of the artificial neural network 600 is incorrect, the artificial neural network 600 (and specifically, the representations of the nodes in the hidden layer 604) may be trained (adjusted) to improve its performance in data classification. Adjusting the artificial neural network 600 may include adjusting the weights associated with each node in the hidden layer 604. Other types of machine learning algorithms are not discussed in detail herein for reasons of simplicity.

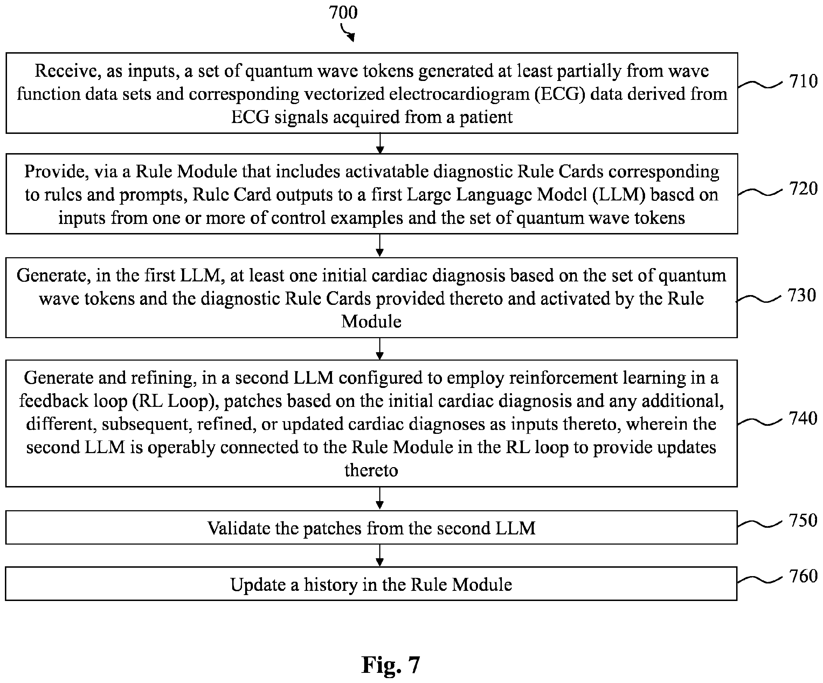

Fig. 7 is a flowchart illustrating a method 700 of generating a medically safe diagnosis via the dual LLM architecture discussed above. In some embodiments, one or more steps of the method 700 may be performed by, or correspond to, various components discussed above with reference to Figs. 1-4.

The method 700 includes a step 710 to receive, as inputs, a set of quantum wave tokens generated at least partially from wave function data sets and corresponding vectorized electrocardiogram (ECG) data derived from ECG signals acquired from a patient.

The method 700 includes a step 720 to provide, via a Rule Module that includes activatable diagnostic Rule Cards corresponding to rules and prompts, Rule Card outputs to a first Large Language Model (LLM) based on inputs from one or more of control examples and the set of quantum wave tokens. In some embodiments, the Rule Module and/or the Rule Cards may include, or correspond to, the skills, skill engine, and/or the skill universe discussed above. In some embodiments, the first LLM may include, or correspond to, the M1 LLM discussed above. In some embodiments, the Rule Module operates as at least one of: a Retrieval-Augmented Generation or Reinforcement Learning-Based Generator. In some embodiments, the diagnostic Rule Cards are editable.

The method 700 includes a step 730 to generate, in the first LLM, at least one initial cardiac diagnosis based on the set of quantum wave tokens and the diagnostic Rule Cards provided thereto and activated by the Rule Module. In some embodiments, the diagnostic Rule Cards comprise one or more first Rule Cards that comprise nearest neighbor personalized range information corresponding to the patient, and the at least one initial cardiac diagnosis is generated by the first LLM based on the one or more first Rule Cards. In some embodiments, the diagnostic Rule Cards comprise one or more first Rule Cards that comprise personalized thresholds computed on the basis of a local control cohort, and the at least one initial cardiac diagnosis is generated by the first LLM based on the one or more first Rule Cards.

The method 700 includes a step 740 to generate and refine, in a second LLM configured to employ reinforcement learning in a feedback loop (RL Loop), patches based on the initial cardiac diagnosis and any additional, different, subsequent, refined, or updated cardiac diagnoses as inputs thereto, wherein the second LLM is operably connected to the Rule Module in the RL loop to provide updates thereto. In some embodiments, the second LLM may include, or correspond to, the M2 LLM discussed above. In some embodiments, the second LLM in the RL Loop is configured to receive one or more of patient data, Rule Card information, the at least one initial cardiac diagnosis, and a reference cardiac diagnosis of the patient. In some embodiments, the second LLM in the RL Loop is configured to output the patches. The patches are configured to modify the rules, thresholds for the rules, and the prompts.

The method 700 includes a step 750 to validate the patches from the second LLM.

The method 700 includes a step 760 to update a history in the Rule Module. In some embodiments, the steps 750 and/or 760 may correspond to the validation process of Fig. 1.

It is understood that additional method steps may be performed before, during, or after the steps 710-760 discussed above. For example, the method 700 may include a step of generating at least one medically safe cardiac diagnosis based on: the set of quantum wave tokens; and computations and results provided by interactions between the Rule Module, the first LLM, and the second LLM operating in the RL Loop. As another example, the method 700 may include a step of repeating the receiving, the providing, the generating the at least one initial cardiac diagnosis, the generating the patches, the validating, and the updating until at least one medically safe diagnosis is generated and matches a reference cardiac diagnosis or until a predetermined number of iterations have been completed. As yet another example, the method 700 may include a step of comparing the at least one initial cardiac diagnosis and any subsequent cardiac diagnoses to a reference cardiac diagnosis. As a further example, the method 700 may include a step of providing at least one medically safe cardiac diagnosis based on a determination that the at least one initial or subsequent cardiac diagnosis matches the reference cardiac diagnosis. As another example, the method 700 may include a step of generating, via a quantum wave function tokenizer, the set of quantum wave tokens. Other steps may be performed by the method 700 but are not specifically discussed herein for reasons of simplicity.

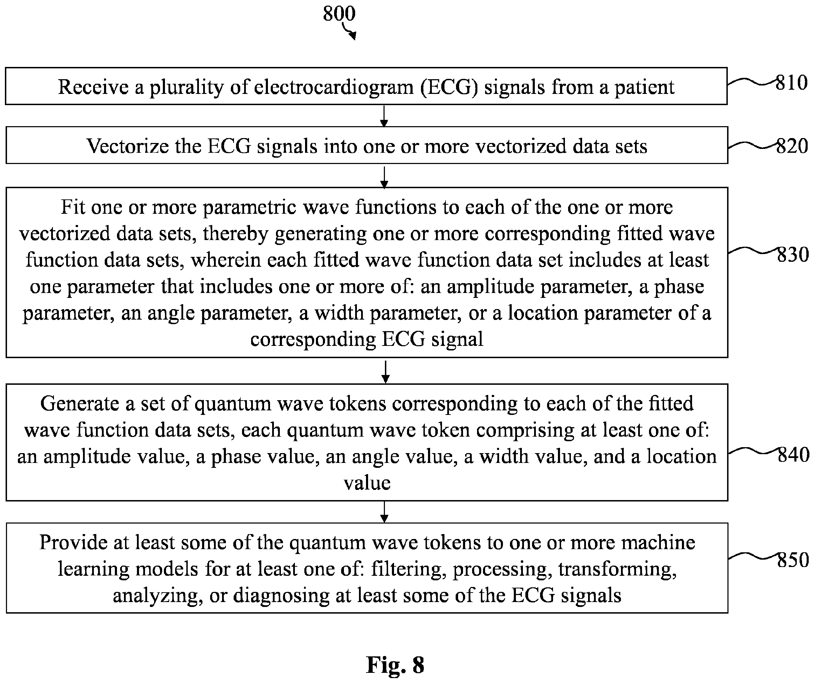

Fig. 8 is a flowchart illustrating a method 800 for generating a set of quantum wave tokens corresponding to a plurality of electrocardiogram (ECG) signals acquired from one or more locations on or in a patient. In some embodiments, one or more steps of the method 800 may be performed by, or correspond to, various components discussed above with reference to Figs. 1-5, such as the Q-PSI tokenizer 220.

The method 800 includes a step 810 to receive a plurality of electrocardiogram (ECG) signals from a patient. For example, the ECG signals may be received from the wireless communications device 110 of Fig. 1. In some embodiments, the wireless communications device 110 may include, or may be coupled to, a data acquisition module, a 12-lead ECG, a resting ECG system, a Holter ECG monitoring system, an ECG stress monitor, an ECG event monitoring system, or an ECG management system, which may be capable of extracting the ECG signals from the patient. In some embodiments, the step 810 may include the performance of the step 510 of Fig. 5.

The method 800 includes a step 820 to vectorize the ECG signals into one or more vectorized data sets. In some embodiments, the step 820 may include the performance of the step 530 of Fig. 5. In some embodiments, the vectorizing of step 820 is performed at least in part by applying a transformer-based large language model (LLM) to a natural-language text to generate semantic numerical representations.

The method 800 includes a step 830 to fit one or more parametric wave functions to each of the one or more vectorized data sets, thereby generating one or more corresponding fitted wave function data sets. Each fitted wave function data set includes at least one parameter that includes one or more of: an amplitude parameter, a phase parameter, an angle parameter, a width parameter, or a location parameter of a corresponding ECG signal. In some embodiments, the step 830 may include the performance of the step 550 of Fig. 5. In some embodiments, the wave fitting of step 830 is performed by a hardware-accelerating component, such as one more of analog ASICs, GPUs, or FPGAs.

In some embodiments, the parametric wave functions comprise one or more of: Gaussian-based parametric wave functions, Slater-Jastrow wave functions, neural network quantum state (NNQS) functions, or functions for minimizing energy expectation values. In some embodiments, the at least one parameter represents one or more of: T-wave alternans, T-wave variability, Q-wave segment duration, ST-segment elevation, prolonged QT-interval, or QRS-segment duration. In some embodiments, the parametric wave functions are fitted based on semantic attributes extracted from the natural-language text by the transformer-based LLM. In some embodiments, the location parameter represents a temporal or spatial extent of a portion of the ECG signals. In some other embodiments, the location parameter represents a temporal offset within one of the RR intervals. In some embodiments, the angle parameter corresponds to an angle of one of the ECG signals.

The method 800 includes a step 840 to generate a set of quantum wave tokens corresponding to each of the fitted wave function data sets, each quantum wave token comprising at least one of: an amplitude value, a phase value, an angle value, a width value, and a location value. In some embodiments, the step 840 may include the performance of the step 570 of Fig. 5. In some embodiments, the quantum wave tokens represent semantic meaning components of a medical narrative text, clinical narrative descriptions, medical opinions, or psychological evaluations.

In some embodiments, the one or more machine learning models comprises a first machine learning model and a second machine learning model. The first machine learning model is configured to receive the set of tokens generated from step 840. The first machine learning model comprises a transformer-based large language model configured to interpret the set of tokens alongside additional contextual data. The second machine learning model is configured to operate in conjunction with the first machine learning model.

The method 800 includes a step 850 to provide at least some of the quantum wave tokens to one or more machine learning models for at least one of: filtering, processing, transforming, analyzing, or diagnosing at least some of the ECG signals. In some embodiments, the one or more machine learning models generate, based on the quantum wave tokens, at least one cardiac diagnostic or analytical output regarding the patient. In some embodiments, a RAG (Retrieval-Augmented Generation) or a Reinforcement Generator (Reinforcement Learning-Based Generator) may be utilized in conjunction with the first machine learning model and/or the second machine learning model. In some embodiments, a convolutional neural network may be utilized in conjunction with at least one of the RAG, the first machine learning model, or the second machine learning model.

It is understood that additional method steps may be performed before, during, or after the steps 810-850 discussed above. For example, the method 800 may include steps of segmenting each ECG signal into RR intervals, which may be performed before the vectorizing of step 820. As another example, the method 800 may include a step of generating a two-dimensional angle-magnitude representation of a vectorized segment of the ECG signal by fitting an inverse solution for a patient-specific conversion matrix. In some embodiments, a real-time monitoring module is configured to update the token set for each new data frame or interval, thereby enabling continuous or near-continuous diagnostic monitoring or analysis.

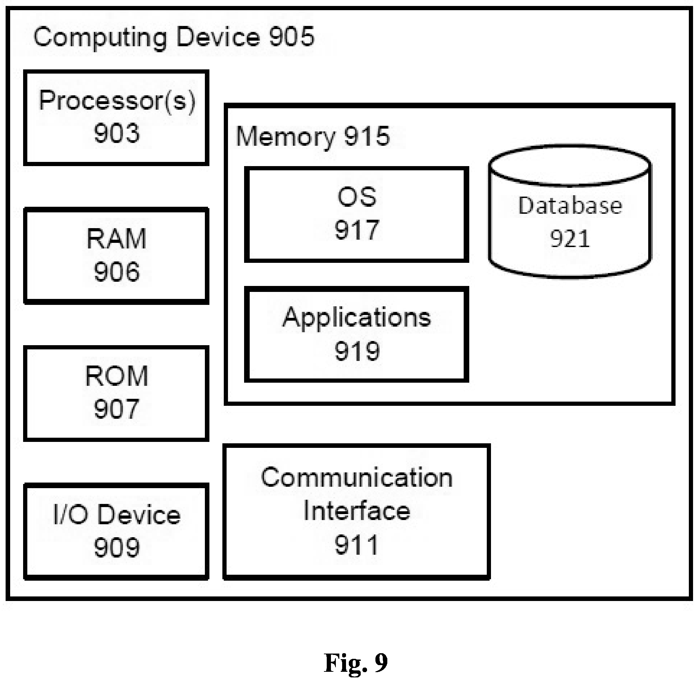

Turning now to Fig. 9, a computing device 905 that may be used with one or more of the computational systems is described. The computing device 905 may be used to implement various computing devices discussed above with reference to Figs. 1-8. For example, the computing device 905 may be used to implement the computer 120 of Fig. 1, the components of the framework 100 comprising the dual LLM architecture of Fig. 1, or various components of the process flows 200, 300, 400, and/or 500 of Figs. 2-5.

The computing device 905 may include one or more processors 903 for controlling overall operation of the computing device 905 and its associated components, including RAM 906, ROM 907, input/output device 909, communication interface 911, and/or memory 915. A data bus may interconnect processor(s) 903, RAM 906, ROM 907, memory 915, I/O device 909, and/or communication interface 911. In some embodiments, computing device 905 may represent, be incorporated in, and/or include various devices such as a desktop computer, a computer server, a mobile device, such as a laptop computer, a tablet computer, a smart phone, any other types of mobile computing devices, and the like, and/or any other type of data processing device.

Input/output (I/O) device 909 may include a microphone, keypad, touch screen, and/or stylus motion, gesture, through which a user of the computing device 905 may provide input, and may also include one or more speakers for providing audio output and a video display device for providing textual, audiovisual, and/or graphical output. Software may be stored within memory 915 to provide instructions to processor(s) 903 allowing computing device 905 to perform various actions. For example, memory 915 may store software used by the computing device 905, such as an operating system 917, application programs 919, and/or an associated internal database 921. The various hardware memory units in memory 915 may include volatile and nonvolatile, removable and non-removable media implemented in any method or technology for storage of information such as computer-readable instructions, data structures, program modules, or other data. Memory 915 may include one or more physical persistent memory devices and/or one or more non-persistent memory devices. Memory 915 may include, but is not limited to, random access memory (RAM) 906, read only memory (ROM) 907, electronically erasable programmable read only memory (EEPROM), flash memory or other memory technology, optical disk storage, magnetic cassettes, magnetic tape, magnetic disk storage or other magnetic storage devices, or any other medium that may be used to store the desired information and that may be accessed by processor(s) 903.

Communication interface 911 may include one or more transceivers, digital signal processors, and/or additional circuitry and software for communicating via any network, wired or wireless, using any protocol as described herein.

Processor(s) 903 may include a single central processing unit (CPU) in some embodiments, which may be a single-core or multi-core processor, or it may include multiple CPUs in other embodiments. In some embodiments, the processor(s) 903 may include one or more GPUs, in addition to, or in lieu of, the CPUs. The processor(s) 903 and associated components may allow the computing device 905 to execute a series of computer-readable instructions to perform some or all of the processes described herein. Although not shown in Fig. 9, various elements within memory 915 or other components in computing device 905, may include one or more caches, for example, CPU/GPU caches used by the processor 903, page caches used by the operating system 917, disk caches of a hard drive, and/or database caches used to cache content from database 921. For embodiments including a CPU/GPU cache, the CPU/GPU cache may be used by one or more processors 903 to reduce memory latency and access time. Processor(s) 903 may retrieve data from or write data to the CPU/GPU cache rather than reading/writing to memory 915, which may improve the speed of these operations. In some examples, a database cache may be created in which certain data from a database 921 is cached in a separate smaller database in a memory separate from the database, such as in RAM 906 or on a separate computing device. For instance, in a multi-tiered application, a database cache on an application server may reduce data retrieval and data manipulation time by not needing to communicate over a network with a back-end database server. These types of caches and others may be included in various embodiments, and may provide potential advantages in certain implementations of devices, systems, and methods described herein, such as faster response times and less dependence on network conditions when transmitting and receiving data.

Although various components of computing device 905 are described separately, functionality of the various components may be combined and/or performed by a single component and/or multiple computing devices in communication without departing from the invention.

One aspect of the present disclosure involves a medical system. The medical system comprises: a plurality of computing devices, each of the computing devices including a non-transitory computer readable medium configured to store instructions executable by at least one processor associated therewith to receive as inputs thereto a set of quantum wave tokens generated at least partially from wave function data sets and corresponding vectorized electrocardiogram (ECG) data derived from ECG signals acquired from a patient, and to generate at least one initial cardiac diagnosis from the set of quantum wave tokens, generate and refine patches, based on the initial cardiac diagnosis and any subsequent cardiac diagnoses, validate the patches, and provide at least one medically safe cardiac diagnosis, the plurality of computing devices together being configured to perform actions that include: (a) receive the set of quantum wave tokens as inputs thereto; (b) from a Rule Module that includes diagnostic Rule Cards corresponding to rules and prompts, provide Rule Card outputs to a first Large Language Model (LLM) based on inputs from one or more of control examples and the set of quantum wave tokens; (c) in the first LLM, generate the at least one initial cardiac diagnosis from the set of quantum wave tokens and the diagnostic Rule Cards provided thereto and activated by the Rule Module; (d) in a second LLM configured to employ reinforcement learning in a feedback loop (RL Loop), generate and refine patches based on the initial cardiac diagnosis and any additional, different, subsequent, refined, or updated cardiac diagnoses as inputs thereto, wherein the second LLM is operably connected to the Rule Module in the RL loop to provide updates thereto; (e) validate patches from the second LLM; and (f) update at least one history in the Rule Module.

Another aspect of the present disclosure involves a method. The method includes: receiving, as inputs, a set of quantum wave tokens generated at least partially from wave function data sets and corresponding vectorized electrocardiogram (ECG) data derived from ECG signals acquired from a patient; providing, via a Rule Module that includes activatable diagnostic Rule Cards corresponding to rules and prompts, Rule Card outputs to a first Large Language Model (LLM) based on inputs from one or more of control examples and the set of quantum wave tokens; generating, in the first LLM, at least one initial cardiac diagnosis based on the set of quantum wave tokens and the diagnostic Rule Cards provided thereto and activated by the Rule Module; generating and refining, in a second LLM configured to employ reinforcement learning in a feedback loop (RL Loop), patches based on the initial cardiac diagnosis and any additional, different, subsequent, refined, or updated cardiac diagnoses as inputs thereto, wherein the second LLM is operably connected to the Rule Module in the RL loop to provide updates thereto; validating the patches from the second LLM; and updating a history in the Rule Module.

Yet another aspect of the present disclosure involves a method. The method includes: generating, via a quantum wave function tokenizer, a set of quantum wave tokens based on raw medical data obtained from a patient; providing, via a Rule Module that includes activatable diagnostic Rule Cards corresponding to rules and prompts, Rule Card outputs to a first Large Language Model (LLM) based on inputs from one or more of control examples and the set of quantum wave tokens; generating, in the first LLM, at least one initial cardiac diagnosis based on the set of quantum wave tokens and the diagnostic Rule Cards provided thereto and activated by the Rule Module; generating and refining, in a second LLM configured to employ reinforcement learning in a feedback loop (RL Loop), patches based on the initial cardiac diagnosis and one or more updated cardiac diagnoses, wherein the second LLM is operably connected to the Rule Module in the RL loop to provide updates thereto; validating the patches generated by the second LLM; and updating a history in the Rule Module.

Another aspect of the present disclosure involves a quantum wave tokenizer system configured to generate a set of quantum wave tokens corresponding to a plurality of electrocardiogram (ECG) signals acquired from one or more locations on or in a patient. The quantum wave tokenizer system comprises: at least one computing device comprising at least one non-transitory computer readable medium configured to store instructions executable by at least one processor to generate the set of quantum wave tokens, the at least one computing device being configured to: (a) receive the ECG signals; (b) vectorize the ECG signals into one or more vectorized data sets; (c) fit one or more parametric wave functions to each of the one or more vectorized data sets, thereby generating one or more corresponding fitted wave function data sets, wherein each fitted wave function data set includes at least one parameter that includes one or more of: an amplitude parameter, a phase parameter, an angle parameter, a width parameter, or a location parameter of a corresponding ECG signal; (d) generate the set of quantum wave tokens corresponding to each of the fitted wave function data sets, each quantum wave token comprising at least one of: an amplitude value, a phase value, an angle value, a width value, and a location value; and (e) provide as an output therefrom at least some of the quantum wave tokens to one or more machine learning models for at least one of: filtering, processing, transforming, analyzing, or diagnosing at least some of the ECG signals.

Yet another aspect of the present disclosure involves a method. The method includes: generating receiving a plurality of electrocardiogram (ECG) signals from a patient; vectorizing the ECG signals into one or more vectorized data sets; fitting one or more parametric wave functions to each of the one or more vectorized data sets, thereby generating one or more corresponding fitted wave function data sets, wherein each fitted wave function data set includes at least one parameter that includes one or more of: an amplitude parameter, a phase parameter, an angle parameter, a width parameter, or a location parameter of a corresponding ECG signal; generating a set of quantum wave tokens corresponding to each of the fitted wave function data sets, each quantum wave token comprising at least one of: an amplitude value, a phase value, an angle value, a width value, and a location value; and providing at least some of the quantum wave tokens to one or more machine learning models for at least one of: filtering, processing, transforming, analyzing, or diagnosing at least some of the ECG signals.

One more aspect of the present disclosure involves a method. The method includes: receiving a plurality of electrocardiogram (ECG) signals from a patient; vectorizing the ECG signals into one or more vectorized data sets; fitting one or more parametric wave functions to each of the one or more vectorized data sets, thereby generating one or more corresponding fitted wave function data sets, wherein each fitted wave function data set includes at least one parameter that includes one or more of: an amplitude parameter, a phase parameter, an angle parameter, a width parameter, or a location parameter of a corresponding ECG signal; generating a set of quantum wave tokens corresponding to each of the fitted wave function data sets, each quantum wave token comprising at least one of: an amplitude value, a phase value, an angle value, a width value, and a location value; sending the quantum wave tokens to one or more large language models (LLMs); and generating, via the one or more LLMs, a cardiac diagnosis.

In addition to the dual LLM architecture and the quantum wave tokenization scheme, the present disclosure also implements a novel analog LLM Application Specific Integrated Circuit (ASIC). In more detail, LLMs have demonstrated remarkable capabilities by leveraging massive amounts of professional knowledge through fine-tuning. Their success extends across diverse domains, including medical, legal, computer science and finance technologies. However, this progress hinges on training and inferring increasingly large models that demand extensive computational resources, high power consumption, and large memory footprints. Even the inference phase alone can require powerful GPU clusters-e.g., approximately eight NVIDIA A100 cards for ChatGPT-leading to significant operational costs and high energy usage. Very recent successes of utilizing reasoning processes where data is processed more than once by the LLM and interacts with additional algorithms have suffered from very slow processing due to the von Neumann bottleneck (the performance limitation arising from having a single shared bus for data and instructions between the CPU and memory in traditional von Neumann architectures, which restricts overall throughput).

A key source of inefficiency in modern LLM inference lies in the attention mechanism, which relies on Key-Value caching (KV-caching) for storing intermediate token projections (keys and values). KV caching is a technique used in transformer-based models, particularly during inference (generation), to make the process much more efficient. In transformers, each layer has a self-attention mechanism that computes attention scores using "keys" (K) and "values" (V) along with "queries" (Q). When generating text one token at a time (as in autoregressive generation), the model, by default, recomputes the attention over the entire sequence so far at each step. This is computationally expensive because it keeps growing with each new token. KV-caching solves this problem by storing (caching) the computed keys and values from previous steps, and when generating the next token, instead of recomputing everything, the model only processes the new token's query and combines it with the cached K and V from earlier steps. This drastically reduces redundant computation and speeds up inference, especially for long sequences. KV-caching helps transformers avoid recalculating attention over the entire sequence at every step by storing and reusing the keys and values.

Although caching avoids recomputation of past tokens, it can overwhelm on-chip memory or require frequent transfers from external DRAM/HBM to the processor's SRAM cache, incurring large data-movement overhead. In some instances, the KV-cache may reach several gigabytes, which far exceeds typical on-chip SRAM capacities. As modern technology nodes highlight that data transfers can account for the majority of energy consumption, the KV-cache frequently becomes the performance and power bottleneck in LLMs.

In-memory or near-memory computing solutions have emerged as promising ways to alleviate data-transfer costs by performing computations where the data reside. Yet many existing designs offer limited parallelism, insufficient memory density, or require volatile storage with fast refresh times, making them ill-suited for large LLM deployments that need frequent updates to their KV-cache. Meanwhile, emerging non-volatile or charge-based memory devices-such as memristors and gain cells-promise higher density and better energy efficiency than traditional SRAM/DRAM. Memristor crossbars can store multi-bit weights in compact arrays, allowing analog matrix multiplications to be carried out in situ, drastically cutting down on data movement. Gain-cell-based arrays, with high-endurance writes and nondestructive reads, further reduce overhead in updating token projections.

Still, deploying a large LLM end-to-end on a single chip requires overcoming at least three hurdles. First, LLMs can contain hundreds of billions of parameters, straining even dense memory arrays when peripheral circuits are accounted for. Second, non-weight- stationary computations-especially in multi-head attention-require reprogramming or dynamically computing Q, K, and V on the fly, which can be time- and energy-consuming. Third, LLMs feature non-linear layers (e.g., Softmax, LayerNorm) that go beyond pure matrix multiplication, complicating analog in-memory solutions optimized for linear operations.

Despite these challenges, with the proper architecture-e.g., combining multi-bit memristors for large weight storage, carefully handling non-weight- stationary Q/K/V operations via specialized analog/digital co-design, and approximating nonlinear functions via diode-based or small digital blocks-one can theoretically store and run an entire LLM model on a single package. Doing so would eliminate off-chip communication and yield orders-of-magnitude savings in both energy and latency. High-speed, low-power analog in-memory attention architectures for large LLMs and synergy-based crossbar designs that facilitate energy-efficient deployments of large models are also possible. In that regard, embodiments of the present disclosure focus on an end-to-end architecture that integrates high-density analog memory arrays (for weight and KV-cache storage) with specialized analog summation and conversion circuits. Such an architecture involves solving various core issues by:
1. Massively Dense Memristor Arrays in 16 nm technology
   Ensures large-scale storage (in memristor crossbars) to store weight matrices (e.g., Q/K/V and FFN layers). These networks facilitate high-speed analog matrix-vector multiplications.
2. Dynamic Programmability for Q/K/V
   A-RAM (Advanced-Random Access Memory) cells store digitized values of the Q/K/V matrices during inference. This modular S-RAM design is integrated with Metal-Oxide-Field-Effect-Transistor (MOSFET)-controlled grid resistors, providing 8-bit analog storage for layer-by-layer updates. A-RAM is a type of dynamic random-access memory (DRAM) technology that is an alternative to traditional DRAM. Unlike conventional DRAM, which relies on a capacitor-transistor pair to store each bit of data (where the capacitor holds a charge representing 1 or 0), A-RAM aims to eliminate the capacitor altogether. Instead, A-RAM stores data using the floating body effect in silicon-on-insulator (SOI) transistors or similar devices. This design simplifies the memory cell structure, potentially allowing for higher density (because it uses fewer components per cell), simpler manufacturing (since it doesn't require a separate capacitor), and scalability advantages as transistors shrink in size.
3. Analog-Friendly Nonlinearity
   Small diode-based or approximated circuits are used for crucial steps like Softmax (a mathematical function used in machine learning to convert raw scores (logits) from a neural network into probabilities that sum to 1), SwiGlu (Swish-Gated Linear Unit) and LayerNorm (a technique used to stabilize and accelerate deep neural network training by normalizing inputs across the feature dimension for each sample independently, rather than across the batch), sidestepping the cost of large digital blocks. A precalculated Memristor grid is used to position-encode embeddings in the A-RAM storage.
4. Frequency Encoding for Attention Heads
   To parallelize the dot-product operations in four-quadrant analog multipliers and enable softmax normalization in attention heads, each embedding is encoded into distinct frequency bands using narrowband frequency generators. Decoding leverages multiplication in an analog demultiplexer (demux) unit, while high-speed DRAM cells perform capacitor switch integration.

By combining Memristor arrays with the other techniques into one integrated solution, a fully trained LLM is copied onto a single chip, and inference are run at extremely low power and high speed, free from the off-chip transfers that dominate conventional GPU-based or partial in-memory designs. This breakthrough will allow LLMs to operate in more resource-constrained settings, ushering in entirely new classes of applications-such as portable robotics, real-time conversational agents, and on-device analytics-where power efficiency and rapid response were previously impossible. Whether deployed in edge devices, autonomous machines, or specialized data centers, the unified architecture of the analog LLM ASIC herein eliminates bottlenecks between storage, memory, and processing, enabling next-generation AI solutions to flourish in environments that demand instant adaptability, robust performance, and minimal energy consumption.

An important aspect of the present disclosure is an analog ASIC designed to run a full Large Language Model (LLM). This innovation represents a radical departure from existing digital AI architectures. Unlike traditional approaches that rely on convolutional neural networks (CNNs) or purely digital AI systems, the analog LLM ASIC herein combines unprecedented speed, energy efficiency, and versatility to deliver exactly what the market demands. In more detail, while CNNs have dominated AI for image recognition and time-series analysis, they come with notable limitations that hinder their application in advanced medical systems like ECG analysis:

### Narrow Task Specialization

- CNNs are excellent at pattern recognition but struggle with tasks requiring contextual reasoning, long-term memory, or adaptability.
- For example, CNN-based ECG solutions may detect arrhythmias but fail to explain why specific patterns matter or correlate with underlying pathophysiology.

### Rigid Architectures

- CNNs rely heavily on pre-defined kernels and local feature extraction, which limits their ability to generalize across heterogeneous populations or handle multifactorial clinical data (e.g., combining ECG signals with patient history).
- They lack the flexibility needed to adapt to new data streams or diverse patient profiles in real time.

### Inefficient Scaling

- Digital CNNs require significant computational resources to scale for large datasets or complex models, making them less suitable for low-power, real-time applications in clinical settings.

The analog LLM ASIC overcomes the limitations above at least in part by merging the efficiency of analog computation with the versatility of transformer-based LLMs. This unique combination makes it the only technology capable of addressing all market needs for advanced medical diagnostics.
1. Why Analog Matters
   o Speed and Power Efficiency: Analog computation processes data orders of magnitude faster than digital circuits, with far lower energy consumption. This makes real-time AI feasible in devices deployed at the point of care, such as ECG monitors.
   ∘ Compact and Scalable: The analog ASIC minimizes the hardware footprint, enabling the integration of full LLM capabilities into portable medical devices without compromising performance.
2. Why LLMs Matter
   o Unlike CNNs, LLMs are inherently flexible, capable of processing diverse data types (text, time-series signals, metadata) and performing complex reasoning tasks.
   ∘ For example, the system herein doesn't just detect supraventricular premature beats (SPBs); it can explain their significance, integrate them with patient history, and suggest tailored treatment strategies-all in real time.
3. Brain-Inspired Attention Mechanisms
   o The LLM of the present disclosure incorporates attentional mechanisms modeled after the human brain. These mechanisms allow the system to focus selectively on the most relevant parts of the ECG or patient data, mimicking how neurologists or cardiologists prioritize diagnostic features.
   ∘ This biologically inspired design ensures that the system remains efficient and
      accurate, even when processing large volumes of data or multiple input streams.

Analog ASICs are not new in the tech world, but their application has generally been limited to specific, narrow functions, such as matrix multiplication or memory storage. However, unlike the analog ASIC of the present disclosure, conventional analog ASICs have not successfully combined analog computation with the transformative potential of LLMs. In that regard, certain existing analog ASICs focus purely on the hardware acceleration aspects of analog computing, emphasizing power reduction and speed. In comparison, one unique differentiator of the analog ASIC of the present disclosure is its "genetic seed" initialization concept combined with direct analog ASIC integration of GPU-trained large models. This reduces retraining complexity and ensures a rapid path from digital training infrastructures (GPUs, popular frameworks) to energy-efficient, on-device inference.

The analog ASIC of the present disclosure also leverages the LLM Ecosystem. For example, while others try to reinvent the training paradigm entirely in analog hardware, the analog ASIC of the present disclosure bridges the well-established digital training ecosystem with its analog inference approach. Customers who have already invested heavily in GPU-based model development can seamlessly convert their networks into ultra-efficient analog ASICs, preserving their core Intellectual Property (IP) and investment.

In addition, the analog ASIC of the present disclosure focuses on Large, Complex Models. In that regard, whereas most analog solutions today target smaller networks or sensor-level tasks, the technology of the analog ASIC herein is applied to large LLMs-highly sought-after tools that can perform reasoning, language understanding, and multimodal integration. This high-value niche sets the analog ASIC herein apart and targets a segment of the market with fewer direct analog competitors.

In one embodiment, a transformer model-e.g., a model with token embeddings of dimension 3072 and 28 transformer layers with 24 attention heads-is implemented in a fully analog ASIC architecture. Traditional digital operations such as matrix multiplications, attention mechanisms, and feed-forward network (FFN) computations are replaced by analog components, including resistor networks (memristors), MOSFET-based amplifiers, SRAM (A-RAM)-controlled resistor configurations, diode-based approximations of non-linearities, 4-quadrant analog multipliers and dRAM derived switched capacitor-based integrators. Such a design achieves significantly higher speed than digital GPU-based solutions by leveraging the parallelism and efficiency of analog processing. However, it requires a large number of analog storage cells and transistors, and careful engineering to balance precision, area, and power.

In an embodiment, the analog ASIC is usable to perform various aspects of the token encoding and embedding discussed above. In more detail, as a part of the tokenization process discussed above, incoming bytes from the context window manager are fed into a First-In-First-Out (FIFO), represented by 48 binary input lines. These lines traverse a deterministic binary network, wherein each unique 48-bit combination directly maps to one of 128,000 tokens. This mapping is implemented by a fully connected comparator array with 128,000 "neurons" (comparators). As soon as a comparator signals a match, it identifies the current token and triggers the following:
1. FIFO Reset:
   The matched token triggers a reset of the FIFO, preparing it for the next incoming bytes.
2. Token Identified Signal:
   A "token recognized" signal is sent downstream, indicating that one token has been fully parsed.
3. Token Counter:
   A dedicated token counter increments to note this token's position in the context window.

As a part of an embedding construction and normalization, once a token is identified, its 3072-dimensional embedding is retrieved from a 128,000 × 3072 memristor network. Because embeddings can be positive or negative, each weight might be stored in two memristors (one for the positive component, one for the negative), ensuring the signed embedding values are correctly represented in analog form. In some embodiments, the memristor array has signed weights, and each of the 128,000 tokens has 3,072 pairs of memristors, one representing the positive portion ***WW_{ii,jj-}*** and one for the negative portion ***WW_{ii,jj-}***. When token *tt* is selected, the differential output of the two memristors per dimension *ii* contributes to the embedding component *xxii.*

In some embodiments, a bank of 3,072 summation amplifiers each aggregates one dimension of the embedding. The amplifier for dimension *i* sums the signed contributions from the two memristors per weight (one positive, one negative), producing: ${x}_{i} = {\sum }_{t} token _ {select}_{t} ⋅ \left({{w}_{t , i}}^{+}-{{w}_{t , i}}^{-}\right)$ where token_select*ₜ* is active only for the recognized token. In practice, the signed weight *w_{t,i}* is realized by the two memristors w*_{t,i}*⁺ and *w_{t,i}*⁻, and the net embedding value is their difference.

The embedding construction and normalization also includes a mean-of-squares normalization (no square root). To normalize this embedding, each amplifier output *xᵢ* is fed into an analog multiplier to produce *xᵢ*². A resistor network combines these squared signals and computes the average of the squares: $MS \left(x\right) = \left(1/3072\right) {\sum }_{i = 1 . . 3072} {{x}_{i}}^{2}$ Instead of explicitly taking √MS, the system normalizes directly against MS = 1. In other words, it adjusts each *xᵢ* so that $\left(1/3072\right) {\sum }_{i = 1 . . 3072} {\left(\hat{{x}_{i}}\right)}^{2} = 1$ where $\hat{{x}_{i}}$ is the post-normalization embedding dimension. A feedback mechanism (via MOSFETs in the amplifier feedback loops) scales the entire embedding vector until the mean of squares is unity (for instance, unity = 0.1 V in analog levels).

On the first layer of a layer-counter logic, these 3,072 summation amplifiers read from the memristor array (embedding retrieval) and then normalize based on mean of squares. For subsequent layers, the 3,072 inputs to the summation amplifiers can be switched from the memristor array to an FFN output plus the attention-head decoder output, again normalizing the resulting embedding-dimension vector.

A ballpark tally of major components within Token Encoding and Embedding Generation includes the following:
**Comparators (Tokenization).**
   - 128,000 comparators for detecting 48-bit token patterns.
   - Each comparator might require ~10-20 transistors, so roughly 1.28 million (M) to 2.56 M transistors total for this token-detection stage.
**Memristor Network for Signed Embeddings.**
   - Because each embedding weight is stored as two memristors (*w*⁺ and *w*⁻) to handle positive and negative values, there are effectively 128,000 × 3,072 × 2 = 786,432,000 memristors in total.
   - That is ~786 million memristors (plus peripheral selection logic).
**Summation Amplifiers.**
   - 3,072 summation amplifiers (one per embedding dimension).
   - Each amplifier might have tens of transistors (e.g., 50-100), leading to about 150 thousand (k) to 300 k total transistors.
**Analog Multipliers (for Squaring).**
   - 3,072 analog multipliers for computing *xᵢ*².
   - A single multiplier might require ~20-50 transistors, summing to 60 k to 150 k transistors total.
**Resistor Network for Mean-of-Squares Calculation.**
   - Roughly 3,072 resistors plus minor transistor overhead for summing those squared signals and controlling the feedback loop.
   - Each dimension's squared output is aggregated and averaged, then used to generate a global scaling factor.
The exact numbers can vary based on design choices, technology node, and optimization strategies, but these ballpark figures highlight the overall scale.

Some embodiments described and disclosed herein in this Token Encoding and Embedding Generation section use a two-memristor-per-weight approach to handle signed embeddings, along with an analog-based mean-of-squares normalization that avoids explicit square-root computation. By merging robust token-detection comparators with a massive memristor crossbar and a specialized analog pipeline, the system can produce stable, normalized embeddings in real time, ensuring a smooth feed into subsequent attention and FFN layers. Other embodiments are contemplated.

In terms of Q/K/V Calculation (per token, per layer) Weight Storage for Q/K/V, each transformer layer defines three weight matrices, ***W**_{Q}, **W**_{K},* and ***W**_{V},* each sized 3072 × 3072. Because these weights must handle signed values, each parameter is represented by two memristors-one storing the positive component and one storing the negative component. This effectively doubles the memristors required per parameter:
- Total parameters per layer (for Q, K, V combined): 3 (matrices) × 3072 × 3072 = 28.3 million weights (approx.).
- Memristors per parameter: 2 (positive and negative).
- Hence total memristors per layer: 28.3 × 10⁶ × 2 ≈ 56.6 million memristors per layer.

In terms of computation, once the system has a 3072-dimensional token embedding $x ∈ {ℝ}^{3072}$ , it must produce three separate 3072-dimensional vectors, ***Q, K,*** and ***V.*** Each vector is computed by multiplying *x* by the corresponding weight matrix (***W**_{Q}, **W**_{K}, **W**_{V}*): $Q = x {W}_{Q} , K = x {W}_{K} , V = x {W}_{V}$

In the analog domain, these multiplications are achieved via resistor networks embedded in the memristor crossbar, followed by 3 × 3072 summation amplifiers that aggregate the partial outputs for each dimension.

Because each layer maintains its own three weight matrices, 28 × 3 × 3072 MOSFET switches (as Layer Selection Switches) per layer are used to connect the active layer's memristor arrays to the summation amplifiers. Once the correct layer is selected (e.g., from layer ℓ), the outputs produce Q, K, V vectors for that particular token. These Q, K, V results are then forwarded to subsequent attention mechanisms.

One aspect of the analog ASIC of the present disclosure involves A-RAM Storage of Q/K/V - digitization and storage analog-to-digital conversion. After computing the analog voltages for Q, K, V, and the normalized input embeddings, the analog ASIC herein digitizes them using 4 × 3072 high-speed ADCs. Each vector dimension is quantized to 8-bit codes. In some embodiments, there are 4 channels, wherein there is one channel for Q, one for K, one for V, and one for the embedding, each dimension requiring an ADC. In some embodiments, an 8-bit resolution is used. ***Q, K, V, x*** are converted into 8-bit integers (0...255) or sign/magnitude.

In some embodiments, the analog ASIC includes an 8-bit high-speed analog-to-digital converter (ADC) using a 7-bit counter and two comparators. The 7-bit counter may be a single 7-bit counter (0-127) that runs at ~12 GHz, producing 128 discrete steps in ~10 ns. Each clock cycle is ~83 picoseconds (ps) (i.e., 1/12 GHz ≈ 83 ps), enabling the entire 128-step count in 128 × 83 ps = 10.6 ns.

In some embodiments, the analog ASIC herein utilizes sawtooth voltage generation. The 7-bit counter directly drives a set of 7 weighted resistors forming a ladder digital-to-analog converter (DAC). This ladder (or "grid of 7 resistors") sums each bit's contribution into a monotonically increasing "sawtooth" from near 0 V (counter = 0) to a chosen maximum (counter = 127). Each clock cycle, the sawtooth amplitude steps up by ~1/128 of the full-scale range.

In order to detect both positive and negative input voltages for each dimension, the analog ASIC design herein uses two comparators (one for the positive channel, one for the negative channel). Each comparator continuously compares the input (e.g., *Qᵢ*) with the sawtooth ramp. As soon as the ramp voltage exceeds the input (on the positive side) or dips below the negative side, the comparator triggers.

An operation per dimension and per token involves a summation amplifier, a positive-versus-negative check, and latching of the 8-bit code. In more detail, for a given token dimension (say *Qᵢ*), the analog summation amplifier or buffer presents a stable voltage to the comparator input(s). During each 10 nanosecond (ns) counting window, the 7-bit counter runs from 0 to 127, stepping the ramp. If the dimension is negative, the negative comparator triggers at some step *n;* if the dimension is positive, the positive comparator triggers at step *m.* If the dimension crosses zero or is extremely close to zero, the comparators might trigger near the midpoint or not at all, depending on sign-threshold logic. Once a comparator fires, the 7-bit count is latched into an 8-bit code (the sign bit can be appended, or the sign deduced from which comparator triggered). The final 8-bit representation is stored in SRAM for subsequent usage. The design can digitize each 8-bit dimension extremely quickly: 10 ns total conversion time, 4 × 3,072 dimensions in parallel, and one global ramp and 2 × 4 × 3,072 comparators ensure minimal overhead. This single-ramp counting ADC approach is simple, robust, and fast enough for sub-15 ns capture windows in advanced nodes, enabling high-speed analog-to-digital transitions for each dimension's embedding or Q/K/V vector.

In some embodiments, A-RAM cells are used for all tokens. For example, the 8-bit representations for all tokens are stored in A-RAM cells. For instance, if there are 1,024 tokens, each token dimension requires 8 bits × 4 (Q/K/V plus embedding) × 3,072 cells per token. Hence, for 1,024 tokens, there are 8 × 4 × 3,072 × 1,024 ≈ 100 million A-RAM cells. For 128,000 tokens, there are 8 × 4 × 3,072 × 128,000 ≈ 10 billion A-RAM cells.

In some embodiments, A/B bank switching is implemented. For example, to maximize throughput, these ~100 million cells are partitioned into two banks (A and B). Bank A is actively used in the next layer's attention calculations. While Bank A is busy, Bank B is loaded with new Q, K, V data. This arrangement doubles the cells to roughly 200 million SRAM-based A-RAM cells total.

For position encoding, each dimension of Q and K is recalculated based on sine and cosine factors that depend on the token position and the embedding dimension. Conceptually, for dimension *i* and token position *p,* the following is computed: $Q {′}_{i} \left(p\right) = {Q}_{i} cos \left({ω}_{i}p\right) + {Q}_{i + 1} sin \left({ω}_{i}p\right)$ $K {′}_{i} \left(p\right) = {K}_{i} cos \left({ω}_{i}p\right) + {K}_{i + 1} sin \left({ω}_{i}p\right)$

The analog IC herein implements these transformations in a dedicated memristor array of size 2 × 2 × 3072 × 1024. The factor "2 × 2" corresponds to (a) Q vs. K, and (b) positive vs. negative weights. Each cell in this array can generate or combine the sine/cosine multiplication for that dimension-position pair. The final outputs pass through 2 × 3072 × 1024 summation amplifiers to sum or subtract partial contributions. Finally, the resulting RoPE-transformed Q and K are fed, along with their inverted signals, into a frequency encoder that alternates between positive and negative values, preparing them for frequency-based attention computations.

An attention mechanism of the present disclosure involves Q·K dot products, softmax, and weighted summation with V. When all tokens' Q and K are stored in the A-RAM, the system switches that bank into read mode, which involves the following:
**Analog Reconstruction.**
   - Each 8-bit Q/K code is converted back to analog using MOSFET-controlled resistor networks.
**Frequency Encoder.**
   - Q and K embeddings are encoded as 128 distinct frequencies (128-256 MHz range for each attention head), combining signals at multipliers.
**24 × 1024 Four-Quadrant Multipliers.**
   - Up to 24 heads × the number of tokens; each dimension or partial dimension feeds these multipliers, operating up to 500 MHz.
   - The multiplier output is integrated over an 8 ns window by 8 DRAM capacitors per multiplier, repeated for 1,024 tokens, yielding partial dot-product results.

Post dot-product, the raw attention scores are normalized via diode-connected MOSFET exponentials. Current mirrors aggregate exponential currents, and feedback loops tune the reference node, producing normalized attention weights: $softmax \left({z}_{i}\right) = {e}^{{z}_{i}} / {\sum }_{j} {e}^{{z}_{j}} ⇒ {I}_{i} ∝ exp \left({z}_{i}\right)$

The normalized attention weights are then multiplied with the frequency-encoded ***V*** vectors in the following manner:
**Two-Quadrant Multipliers.**
   - Another set of multipliers processes the normalized weights and V components.
**Resistor Summation.**
   - Weighted contributions from each frequency are summed dimension-wise, eventually demodulated and integrated.
**Final Context Vector.**
   - The outputs pass through 3,072 summation amplifiers (one per dimension) and an RMS (or MS) normalization stage, forming the final ***O*** (a 3072-dim context vector).

In some embodiments, the following hardware components may be used to implement the Q/K/V calculation and subsequent attention:
**Memristor Arrays for Q/K/V.**
   - Each layer: 3 × (3072 × 3072) = 28.3 million parameters.
   - Each parameter uses 2 memristors (positive/negative) → 56.6 million memristors per layer.
   - For 28 layers, that is up to 1.59 billion memristors total (plus overhead).
**Switches for Layer Selection.**
   - 28 × 3 × 3072 MOSFET switches per layer.
   - That is 258,048 switches for 28 layers, or around 0.26 M transistors total (assuming ~1-2 transistors per switch cell).
**A-RAM for Q/K/V.**
   - 8-bit codes for Q, K, V, plus possible embedding data: 4 channels × 3,072 dims × 1,024 tokens → ~100 M cells per bank.
   - Two banks → ~200 M A-RAM cells. Each cell might be 6-10 transistors if standard SRAM → ~1.2-2.0 billion transistors just for A-RAM.
**ADC Units.**
   - 4 × 3,072 high-speed ADCs for Q, K, V, embeddings; each dimension requires 8-bit conversion.
   - Each ADC can be tens of thousands of transistors but is heavily design-dependent (pipeline vs. flash vs. SAR); total: hundreds of thousands to a few million transistors for all ADCs.
**Frequency Encoder and Multipliers.**
   - 128 frequency lines × 24 heads × 1,024 multipliers; the final count depends on the exact parallelism.
   - Each analog multiplier might be ~20-50 transistors → tens of thousands of multipliers total.
**DRAM Capacitors.**
   - For the 8 ns integration steps, 8 × 24 × 1,024 ≈ 196,608 DRAM cells plus overhead.
   - 1 transistor + 1 capacitor each → around 200 k transistors plus the same number of capacitors.
Though approximate, these figures illustrate the scale of the Q/K/V stage, the A-RAM management for them, and the subsequent frequency-based dot-product computations.

The discussions above outline how Q, K, and V are calculated per token, per layer in an analog domain. Large memristor arrays store signed parameters for each of the three matrices, with a bank of summation amplifiers generating the Q, K, and V vectors. The results are digitized and stored in A-RAM cells, employing A/B bank switching to handle up to 1,024 tokens efficiently. RoPE is applied for positional encoding in a specialized memristor grid, and the Q·K dot products and subsequent softmax lead to weight application on V. The final context vector emerges from dimension-wise demodulation, summation, and normalization, completing the core attention step.

Below is an updated and more detailed version of the Feed-Forward Network (FFN) and Final Output stages, along with revised component counts, integrating the new numbers and clarifications. In that regard, in terms of the FFN structure, each layer's FFN is a two-layer MLP mapping $h ∈ {ℝ}^{3072}$ to an expanded dimension, then reducing back: ${h}_{expanded} = h {W}_{1} , {h}_{out} = NonLinearity \left({h}_{expanded}\right) {W}_{2}$ where ${W}_{1} ∈ {ℝ}^{3072 \times 8196}$ and ${W}_{2} ∈ {ℝ}^{8196 \times 3072}$. The output ${h}_{out} ∈ {ℝ}^{3072}$ is often merged into a residual path with the input to finalize the layer.

Memristor arrays are utilized as a part of the hardware implementation. ***W**₁* and ***W**₂* are stored in memristor networks, each parameter represented by 2 memristors (positive/negative) for signed weights. A plurality of summation amplifiers (e.g., 8,196 amplifiers) is used to handle the expanded dimension, and 3,072 amplifiers compress back to 3,072, plus overhead for partial summation steps. In terms of non-linear activation, a diode-based approximation of Swish/GeLU uses Schottky diodes in parallel with feedback resistors, approximating the function in an 8-bit analog regime.

The FFN computations synchronize with the attention mechanism. For example, as a part of A-RAM bank switching, while one A-RAM bank is read (e.g., feeding attention calculations), the other can be loaded or used for FFN input. As a part of ADC → DAC conversion, FFN input vectors are digitized into 8 bits, stored, then reconverted to analog for the memristor crossbar multiplications. In terms of speed and overlap, the turnover (16 ns per token-layer) includes parallel analog/digital operations. This ensures minimal idle cycles and real-time layer-by-layer throughput.

Critical time steps revolve around A-RAM digitization (16 ns) and two 8 ns integration steps, performed in parallel. For 1,000 tokens across 28 layers: 16 ns/token × 1,000 tokens × 28 layers ≈ 0.4 ms. Despite recalculating all matrices per token-layer, the high parallelism and analog-domain approach outperform standard GPU-based solutions in raw latency.

The 3072-dimensional embedding vector is the final output of the model's computation. Each embedding dimension is connected to 128,000 summation amplifiers, one for each token in the vocabulary. Each token's summation amplifier computes the weighted sum of the embedding: ${S}_{i} = {\sum }_{j = 1 . . 3072} {E}_{j} ⋅ {W}_{i , j}$ where:
- *Eⱼ:* value of embedding dimension *j*.
- *W_{i,j}*: weight connecting embedding dimension *j* to token *i.*

The weights *W_{i,j}* are stored in a memristor-based crossbar array:
- *W_{i,j}⁺* (positive component).
- *W_{i,j}⁻* (negative component).

The summation amplifier outputs a voltage: ${S}_{i} = {\sum }_{j = 1 . . 3072} \left({{W}_{i , j}}^{+}-{{W}_{i , j}}^{-}\right) ⋅ {E}_{j}$ The output range of each summation amplifier is normalized to [-0.5, +0.5] volts.

Another aspect of the analog ASIC involves winner-takes-all (WTA) circuitry. The WTA circuitry includes comparators. Each summation amplifier's output is connected to a comparator with:
- Positive input: the output of the summation amplifier.
- Negative input: a shared negative feedback node (*V_{FB}*).

The WTA circuitry includes a feedback mechanism:
**Positive Feedback.**
   - Each comparator has a Schottky diode connecting its output back to its positive input.
   - Once the comparator's output becomes positive, the diode reinforces the signal, latching the comparator.
**Negative Feedback.**
   - All comparator negative inputs are connected via 5 MΩ resistors to a shared feedback node (*V_{FB}*)*.*

When a comparator latches, it pulls *V_{FB}* up, suppressing the outputs of other comparators. The comparator with the highest summation-amplifier input latches first due to positive feedback. The rising *V_{FB}* ensures that only the strongest comparator remains active, enforcing the WTA. In terms of handling multiple winners, if two or three comparators receive nearly identical inputs, they may simultaneously latch. In this case, the analog IC allows multiple active comparators, which are resolved in the next grid-based decoding stage.

In some embodiments, after the WTA circuit, the active comparator outputs are connected to a 256 × 512 transistor grid. Each comparator output controls a transistor at a specific row (*R*) and column (*C*) of the grid: a positive comparator output turns on the corresponding transistor. The row scanner sequentially activates rows at 12 GHz, with all rows scanned within 20 ns. During the active phase of a row, the column readout checks for active transistors. The first column with an active transistor during the row's active phase identifies the corresponding token. If multiple rows and columns are active, the first detected pair determines the first winner.

In some embodiments, the detected row (*R*) and column (*C*) are used to compute the token index: Token Index = *R* · 512 + *C*. This index uniquely identifies one of the 128,000 tokens in the vocabulary. The token index is used as an address for a ROM-based lookup table. Each token index maps to a byte sequence representing the token's characters. The following are examples: Token *T₀*: "A" ([0x41]); Token *T₁*: "the" ([0x74, 0x68, 0x65]).

A byte sequence output on the analog ASIC pins is sent to a serial output buffer, synchronized with an external clock. The buffer transmits one byte at a time, with unused bytes padded to zero for shorter tokens. A dedicated EOS (End of Sequence) signal indicates when the last token of the output sequence has been processed.

In some embodiments, the analog IC of the present disclosure may have the following timing characteristics:
**Winner-Takes-All Selection.**
   - Comparator feedback and latching: < 100 ns.
**Grid Decoding.**
   - Row scanning and column detection: 5.12 microseconds (µs).
**Total Selection Time.**
   - From embedding to token index: < 6 µs.

In terms of power efficiency, the WTA comparators and transistor grid consume power only during active operation in some embodiments. High-resistance feedback paths minimize static power draw. In terms of area, the transistor grid and WTA comparators are compact and efficiently implemented in the ASIC design.

In terms of fault tolerance, if multiple comparators latch, the grid-decoding stage ensures the first detected output is selected. Additional outputs can be logged or ignored, depending on system requirements. If no comparator latches (e.g., due to noise or invalid embedding), the system outputs a default token (e.g., [UNK]).

Based on the above, it can be seen that the output generation system integrates a Winner-Takes-All (WTA) mechanism with positive and negative feedback and a transistor-grid decoder to efficiently process the model's embedding into a unique token index. The resulting token is decoded into bytes and transmitted via the ASIC's output pins, ensuring fast, robust, and unambiguous token generation.

Based on the above, it can be seen that the output generation system integrates a Winner-Takes-All (WTA) mechanism with positive and negative feedback and a transistor grid decoder to efficiently process the model's embedding into a unique token index. The resulting token is decoded into bytes and transmitted via the ASIC's output pins, ensuring fast, robust, and unambiguous token generation.

With 1,024 tokens, the bulk of the chip real estate is consumed by memristor arrays for storing Q/K/V and FFN weights, followed by SRAM (A-RAM) for dynamic token storage. DRAM arrays for dot-product integration and additional logic/multiplier blocks add relatively modest area. Factoring in routing and overhead, a total chip size of around 200 mm² at 16 nm may be implemented for this fully analog-driven LLM architecture in some embodiments.

The evolution of LLMs has been a story of relentless scaling. More parameters, longer context windows, and ever-growing memory requirements have defined the push for better AI. Yet, this brute-force approach has clear limits. Expanding context windows introduces inefficiencies, slows inference, and significantly increases costs. As models grow, reasoning strategies become more cumbersome, relying on large KV caches that only bloat as the conversation continues. Instead of refining thoughts, models append more and more tokens, leading to an inefficient cycle of increasing memory demands and diminishing returns.

According to various aspects of the present disclosure, AI models could continuously refine and reprocess the same information, much like human thought. Multiple models could collaborate in real time, exchanging insights dynamically without delay. The analog ASIC herein is the key to unlocking a fundamentally new paradigm for AI reasoning. In traditional LLMs, each new inference step processes a frozen context window, producing outputs that are cached and fed into subsequent steps. This approach is static, inefficient, and fundamentally different from human cognition. Humans do not just accumulate thoughts; they rework and refine them in real time, discarding unnecessary details while extracting meaningful insights.

The analog ASIC system of the present disclosure, designed to process every token in every cycle, eliminates the need for caching entirely. The context is always active, continuously evolving as new information is processed. Instead of treating the past as a fixed input, the model can re-edit and optimize its conclusions dynamically, refining rather than expanding the context. This allows a reasoning system where AI does not simply generate longer responses but improves upon its own understanding in real time.

The ability to run multiple models in small and ultra-fast ASIC chips interacting instantaneously by sharing one and the same context window further transforms the process. Unlike standard systems where LLMs operate sequentially-waiting for output before feeding results back into another model-a sequence of analog ASICs enables real collaboration. Multiple models share the same active context, modifying, verifying, and compressing insights together without any latency bottlenecks. In this setup, the context is a stream of 1,000 to 10,000 bytes that sequentially runs through a series of models. Each model has selective tasks-such as summarizing, sending to storage, retrieving from storage, or improving the text by new interpretation.

Instead of relying on a single, monolithic model with an enormous parameter count, the system herein can take advantage of smaller, specialized models working in unison. A single massive model may have broad generalization abilities, but it lacks the diversity of perspectives that can emerge from independently trained models with different architectures and training histories.

In some embodiments, a first type of AI model that is trained heavily on reasoning and reinforcement learning collaborates with a second type of AI model that is optimized for broad linguistic competence. Alongside them, a third type of AI model, potentially designed for numerical accuracy and factual verification, operates in parallel. Each model approaches the same context from a different angle, refining conclusions, challenging assumptions, and iterating upon existing knowledge- all in real time. Instead of just adding their capabilities together, their independent training backgrounds allow multiplicative reasoning efficiency. Different models bring different biases, strengths, and perspectives. One model may propose a summary, another may refine the logical structure, while yet another fact-checks and optimizes clarity. The result is a more human-like approach to intelligence, where ideas are not just generated but tested, refined, and abstracted dynamically.

This setup opens the door to a new kind of efficiency. Instead of building a single ultralarge model with hundreds of billions of parameters, one could use three or four smaller models that, together, achieve the same-or even better-performance. By distributing knowledge across independently trained networks, the system becomes more robust, adaptable, and capable of self-correction.

In a digital setting, combining multiple models typically requires a costly and slow pipeline where each model runs sequentially, passing outputs back and forth. This is where an analog ASIC system fundamentally changes the game. With no caching and no sequential inference bottlenecks, every model processes the shared context in real time. As soon as one model makes an adjustment to the context, the others can immediately interact with it, ensuring a fluid exchange of insights. The hardware itself enables instantaneous reasoning loops, where thoughts are continuously optimized instead of being repeatedly re-evaluated in separate inference runs.

This also has profound implications for cost and compute efficiency. Without massive KV caches, the system avoids the exponential growth in memory usage that traditional LLMs suffer from. Instead of relying on a giant, monolithic transformer, the focus shifts toward multiple smaller, more specialized models that can work together efficiently. Given that each ASIC is running continuously, the latency of large transformers waiting for KV cache lookups disappears, replaced by a fluid, iterative thinking process. From a hardware standpoint, this approach allows for dynamic reallocation of compute resources. If one model has high confidence in a particular answer, it may take a dominant role in editing the context, while others function more as validators or summarizers. This type of dynamic, context-sensitive reasoning is what makes human intelligence powerful-and it may soon be what makes artificial intelligence vastly more efficient.

LLMs may be fine-tuned for analog ASIC collaboration. Despite the promise of multi-model collaboration, getting these specialized models to work together seamlessly on an ASIC platform presents unique challenges. To ensure optimal synergy and efficient interaction, fine-tuning on GPUs first can set the stage before weights are "locked" into ASIC hardware.

Each model begins with an independent training history, meaning they will initially reason differently. By fine-tuning them together on GPUs, the models can learn to collaborate, reducing redundant computations and improving overall synergy. Once models are deployed to ASICs, weight updates are constrained by the hardware design-they are not as flexible as GPUs. Fine-tuning before this stage ensures that major alignment and coordination issues are addressed. In many systems, each model specializes in a certain type of reasoning (e.g., numerical, linguistic, factual recall). Fine-tuning them side-by-side allows them to learn how to integrate and reconcile outputs effectively. ASICs typically store weights in low precision (8-bit or less). After GPU fine-tuning, quantization-aware training or post-training quantization must ensure minimal loss in accuracy when converting to low-precision weights. On GPUs, partial caching or step-by-step inference can mask or optimize certain inefficiencies. In continuous analog ASIC inference, there is no KV caching; models process data in real time. Fine-tuning needs to simulate or at least accommodate this continuous inference behavior so strategies that rely on large caches don't break. Once fine-tuning is complete, the next step is converting each model for efficient ASIC deployment.

Quantization-aware training is used during fine-tuning or apply well-tested methods post- training. This process preserves the model's performance while dramatically reducing memory footprint. Certain ASIC designs have dedicated memory blocks to store weights for immediate access. Fine-tuned model weights are compressed and partitioned into the format (often 8-bit or lower precision) compatible with these memory blocks. Since multiple models run simultaneously, the ASIC design incorporates interconnects or memory-sharing schemas that maintain real-time interactions. The energy efficiency and real-time reasoning potential of analog ASICs make them attractive for edge computing, robotics, and embedded systems. ASICs generally consume far less power than GPUs, which is crucial for battery- powered or resource-limited devices. Robotics and AI assistants need continuous, low-latency updates. The inherent design of analog ASICs supports iterative processing without the overhead of digital caching. Many robots or embedded systems cannot host a 100B-parameter model. Instead, multiple smaller models on ASIC chips can collaborate to produce intelligence comparable to a single large model.

The well-fine-tuned, multi-model analog ASIC system herein is more than just an accelerator; it is an AI reasoning co-processor. By running specialized models in parallel-each fine-tuned to collaborate effectively-and leveraging the continuous inference model, devices can achieve levels of adaptability and intelligence traditionally reserved for massive, cloud-based models. In many real-world scenarios-especially in medical devices-determinism is not just a feature but a requirement. When patient health or device safety is on the line, unpredictable behavior can be unacceptable. Multi-model ASIC systems can be designed to operate deterministically, ensuring consistent outputs for given inputs. During GPU fine-tuning and later ASIC deployment, controlling all random number generators (e.g., for dropout, data shuffling) enables consistent weight updates and stable inference.

While floating-point arithmetic can introduce small variations in outputs, fixed-point operations in ASICs inherently reduce such drift. This can be especially important where the same input should always yield the same result. As an example, a structured, sequential Collaboration in medical use cases may involve the following:
- Model A might read a tokenized ECG and produce a reliable diagnosis.
- Model B might assess patient history and risk factors.
- Model C might synthesize the conclusions from A and B, considering past session data for continuity. Each step can be logged, verified, and traced to ensure repeatability and regulatory compliance.

In more detail, model A may involve an ECG Analysis: a specialized model that has been rigorously tested for ECG patterns and anomalies. Fine-tuned for deterministic classification, each ECG input yields a reproducible, verifiable result. Model B may involve risk Factor Integration: Looks at patient history-medications, lifestyle, genetic predispositions-to score overall risk. This model must be deterministic so that the same input always leads to the same risk score. Model C may involve a holistic diagnosis: aggregates results from Model A and Model B, possibly referencing stored insights from the last session. It then provides a final diagnosis or recommendation, with a deterministic processing pipeline that can be certified and audited. By combining these three models on an ASIC co-processor, each step in the reasoning pipeline is reproducible, traceable, and efficiently executed in real time.

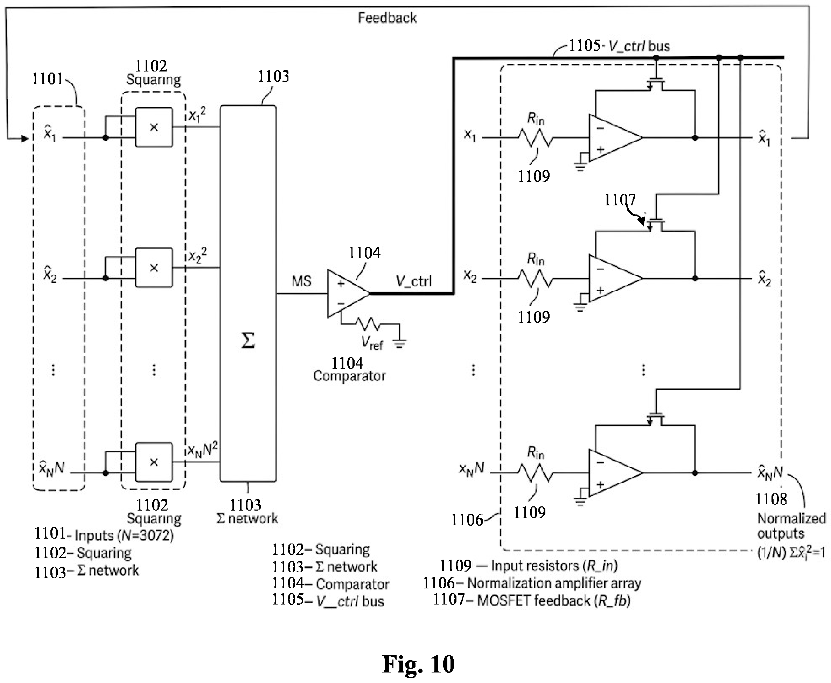

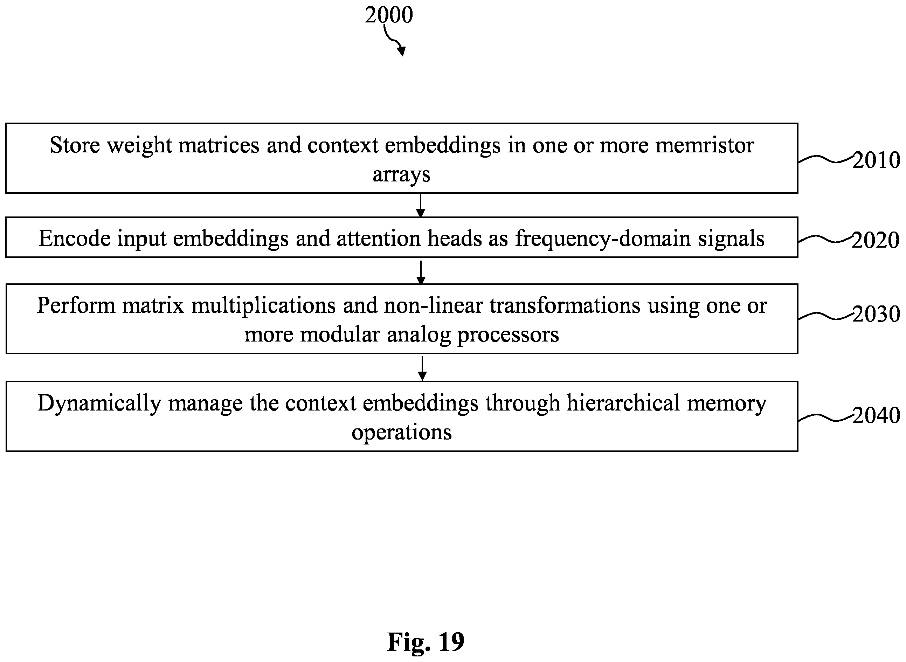

Various aspects of the analog ASIC of the present disclosure are discussed in more detail below with reference to Figs. 10-19. In that regard, Figs. 10-18 each illustrates a circuit diagram or a block diagram that corresponds to an aspect of the analog ASIC, and Figs. 19-22 each illustrates a flowchart corresponding to a method that describes certain operations involving the analog ASIC.

Referring now to Fig. 10, the circuit diagram illustrates an analog Mean-of-Square (MS) normalization with MOSFET-controlled feedback gain. In more detail, the circuit diagram of Fig. 10 illustrates a plurality of inputs 1101 (e.g., N number of inputs, where N may be 3072 in the illustrated embodiment). The inputs 1101 are sent to a squaring network 1102 that squares the inputs 1101. The outputs of the squaring network 1102 are sent to a summation (Σ) network 1103, which sums up the outputs of the squaring network 1102. An output of the summation network 1103-which may be a mean-of-squares, or MS-is sent to a comparator 1104, which is electrically coupled to a voltage Vref. An output of the comparator 1104, in the form of a control voltage V_ctrl, is sent to (or electrically tied to) a V_ctrl bus 1105.

The circuit diagram of Fig. 10 further includes a normalization amplifier array 1106, which includes a plurality of amplifiers that each have their positive input terminal tied to electrical ground, and their negative terminal tied to a respective input resistor Rᵢₙ 1109. The normalization amplifier array 1106 generates a plurality of normalized outputs 1108 ( $\hat{{x}_{1}}$ to $\hat{{x}_{N}}$). Each of the outputs 1108 is also fed back to the negative terminal input of the respective normalization amplifier in the array 1106 through a MOSFET feedback 1107 (R_fb). The MOSFET feedback 1107 may be implemented as a MOSFET transistor, whose gate is tied to the V_ctrl bus 1105. All of the MOSFET feedback transistors 1107 share the same voltage bus V_ctrl bus 1105. In some embodiments, a resistance of each of the MOSFET feedback transistor 1107 is controlled by the amount of the voltage of the V_ctrl bus. An output of the normalization amplifier array 1106 as a whole is also fed back to the inputs 1101 via a feedback loop.

In a digital transformer, every layer applies *RMS LayerNorm* to its embedding vector before the attention or feed-forward step. The standard formula divides each dimension xᵢ by the root-mean-square of the full vector: $\hat{{x}_{i}} = {x}_{i} / √ \left(\left(1/N\right)\sum {{x}_{j}}^{2}\right)$. Computing a square root in analog hardware is expensive and imprecise. The analog IC of the present disclosure sidesteps this entirely by reformulating the problem. Instead of computing √(MS) (root-mean-square) and dividing, the analog IC herein uses a feedback loop (e.g., the one shown in Fig. 10) that scales all dimensions simultaneously until the mean of their squares equals unity. When $\left(1/N\right) ⋅ \sum {\hat{{x}_{i}}}^{2} = 1$, the outputs are automatically RMS-normalized, and no square root is ever calculated.

The process herein is similar to adjusting the volume knob on a mixer: the system continuously measures the average "loudness" (e.g., similar to mean of squares) across all 3,072 channels and turns the global gain up or down until that loudness sits at exactly the target level. The gain adjustment happens through MOSFET transistors (e.g., the MOSFET feedback 1107) whose resistance is controlled by a single shared voltage bus (e.g., the V_ctrl bus 1105), so every channel is scaled by the same factor in the same instant.

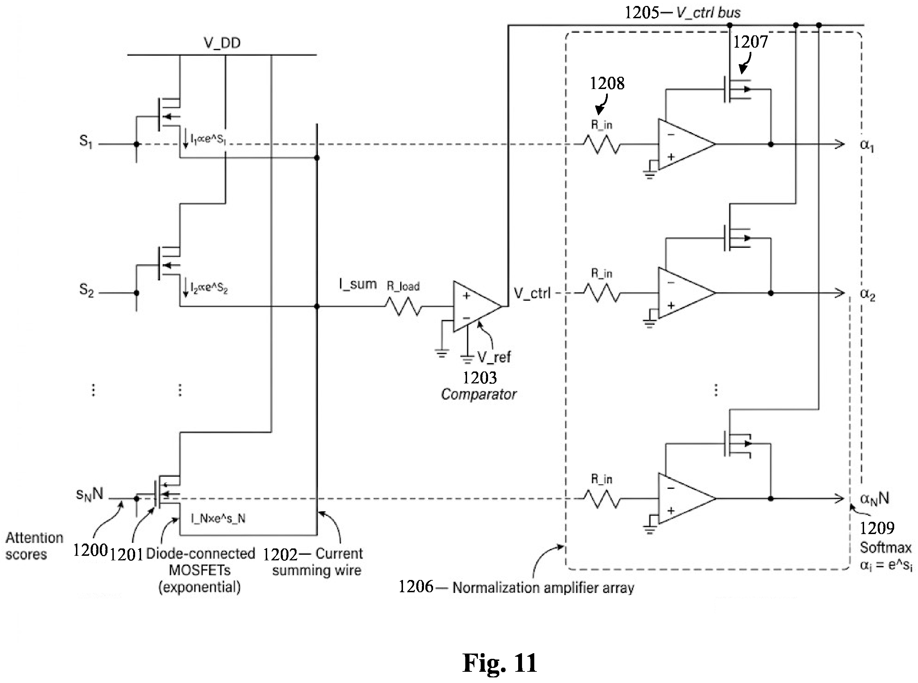

Referring now to Fig. 11, the circuit diagram illustrates a diode-based Softmax normalization. In more detail, the circuit diagram of Fig. 11 illustrates a plurality of attention scores 1200 (e.g., S₁ through S_{N}). The attention scores 1200 are sent to the gates of a plurality of diode-connected MOSFETs (exponential) 1201, which are also powered by a supply voltage V_DD (e.g., through the coupling to the source of the diode-connected MOSFETs 1201). Each of the diode-connected MOSFETs 1201 generates a drain current, such as I₁ x e^S₁, I₂ x e^S₂ ... to I_{N} x e^S_{N}. A current summing wire 1202 sums up the drain currents and sends the sum I_sum to a positive terminal to a comparator 1203, which is coupled to the current summing wire 1202 through a resistor R_load. A negative terminal of the comparator 1203 is tied to V_ref, and an output of the comparator 1203 is generated as a control signal V_ctrl, which is sent to, or electrically tied to, a voltage control bus V_ctrl bus 1205.

The circuit diagram of Fig. 11 further includes a normalization amplifier array 1206, which may have a substantially similar topology as the normalization amplifier array 1106 of Fig. 10. For example, the normalization amplifier array 1206 includes a plurality of amplifiers that each have their positive input terminal tied to electrical ground, and their negative terminal tied to a respective input resistor Rᵢₙ 1208. The normalization amplifier array 1206 generates a plurality of normalized outputs (α₁ to α_{N}). Each of the outputs α₁ to α_{N} is also electrically coupled to the negative terminal input of the respective normalization amplifier in the array 1206 through a MOSFET feedback resistor 1207. Each of the MOSFET feedback transistors 1207 is electrically tied to the V_ctrl bus 1205, and it is electrically coupled between a respective one of the normalization amplifiers of the array 1206 and a respective one of the outputs α₁ to α_{N}. The normalization amplifiers array 1206 produces a softmax 1209 αᵢ = e^{Si}.

The attention mechanism at the heart of every transformer computes a *softmax* over the attention scores to produce probability-like weights: ${α}_{i} = {e}^{Si} / \sum {e}^{Sj}$

The exponential function is notoriously difficult to implement digitally at high speed and low power. The analog ASIC herein exploits a particular property of MOS transistors: when a MOSFET is biased in its *sub-threshold* (weak-inversion) region, its drain current is an exponential function of its gate voltage. By connecting the gate of each of the diode-connected MOSFETs 1201 directly to a respective attention score Sᵢ (e.g., the attention scores 1200 of Fig. 11), the circuit physically produces currents proportional to e^{Si} with no digital computation whatsoever.

All these exponential currents flow into a single shared wire (e.g., the current summing wire 1202), where Kirchhoff's current law automatically sums them to give ∑e^{Sj}. The MOSFET-controlled normalization amplifier array 1206 (e.g., the same topology as in Fig. 10) then divides each individual current by this sum, completing the softmax operation entirely in the analog domain. The same diode-based exponential principle is also used to approximate SwiGLU and GeLU activation functions in the feed-forward network layers.

In this manner, the attention scores S₁... S_{N} (i.e., attention scores 1200) drive the diode-connected MOSFETs 1201 operating in sub-threshold regime, producing drain currents proportional to e^{Si}. These exponential currents are passively summed on a shared wire (e.g., the current summing wire 1202), generating Iₛᵤₘ = ∑e^{Si}. The comparator 1203 compares the resulting voltage across R_{load} against a voltage V_{ref} and outputs a control voltage V_ctrl to a global bus 1205. This V_ctrl voltage modulates the MOSFET feedback resistors 1207 in the normalization amplifier array 1206, dividing each exponential current by the total sum to produce softmax attention weights αᵢ = e^{Si} / Σe^{Sj} (209).

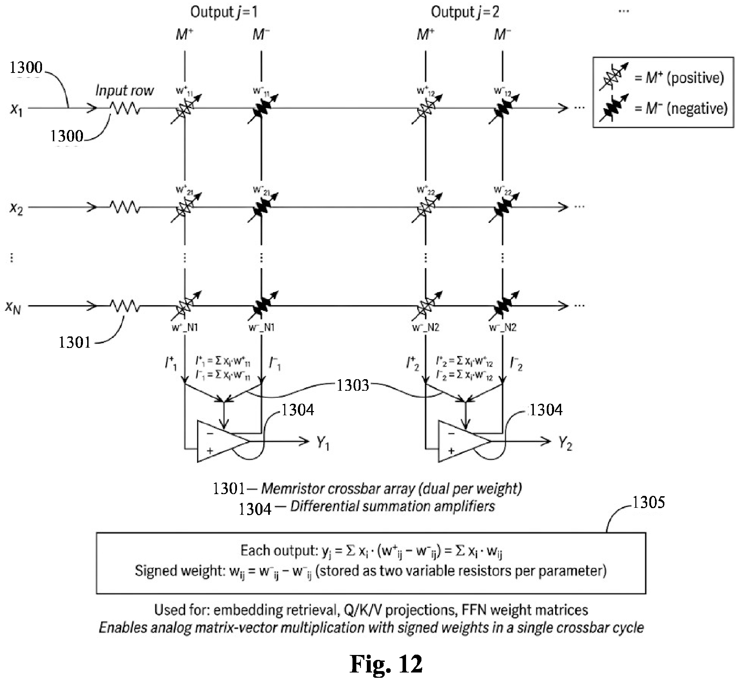

Referring now to Fig. 12, the circuit diagram illustrates a signed weight storage via dual-memristor crossbar. In more detail, the circuit diagram of Fig. 12 illustrates a plurality of horizontal input rows 1300, such as rows that receive input activations x₁, x₂ ... x_{N}, respectively. A memristor crossbar array 1301 is deployed across the plurality of input rows 1300. In each row, there is a pair of memristors (e.g., variable resistors): a positive memristor M⁺ with a conductance of w⁺ᵢⱼ, and a negative memristor M⁻ with a conductance of w⁻ᵢⱼ. The pairs of the positive and negative memristors in the array 1301 are thus arranged into a plurality of columns of positive memristors and a plurality of columns of negative memristors. Column currents 1303 flow through these columns, such as a column current I⁺ⱼ for the column of positive memristors and a column current I⁻ⱼ for the column of negative memristors, where j indicates the column number (i.e., j=1 means the first column, j=2 means the second column, etc.). Each pair of positive and negative columns is coupled to a respective differential summation amplifier 1304. For example, the positive column current I⁺ⱼ is sent to the positive terminal of the differential amplifier 1304, and the negative column current I⁻ⱼ is sent to the negative terminal of the differential amplifier 1304. The differential amplifier 1304 generates an output 1305: yⱼ = Σxᵢ·(w⁺ᵢⱼ - w⁻ᵢⱼ) = Σxᵢ·wᵢⱼ. The signed weight wᵢⱼ = w⁺ᵢⱼ - w⁻ᵢⱼ (stored as two variable resistors per parameter).

Transformer models contain hundreds of millions to billions of numerical *weights-*the learned parameters that encode the model's knowledge. These weights can be positive or negative. In digital systems, they are stored as floating-point numbers in GPU memory. The analog IC of the present disclosure stores each weight as the difference in conductance between two memristors (non-volatile, variable-resistance devices). One memristor (M⁺) holds the positive component, while the other (M⁻) holds the negative component. The net weight wᵢⱼ = w⁺ᵢⱼ - w⁻ᵢⱼ.

When input voltages representing the embedding vector are applied to the rows of the crossbar, Ohm's law produces currents at each junction. Kirchhoff's current law sums the currents along each column, so the entire matrix-vector multiplication y = W·x happens in a single analog cycle-no clock ticks, no sequential multiply-accumulate operations. Differential amplifiers 1304 at the bottom of each column pair subtract the negative column from the positive column to yield the signed output. This architecture is used for embedding retrieval, Q/K/V weight projections, and feed-forward network layers.

Input activations x₁...x_{N} are applied as voltages along horizontal rows 1300. Each logical weight wᵢⱼ is stored across a pair of memristors: M⁺ (positive component, conductance w⁺ᵢⱼ) and M⁻ (negative component, conductance w⁻ᵢⱼ), arranged in the memristor crossbar array 1301. Column currents I⁺ⱼ = Σxᵢ·w⁺ᵢⱼ and I⁻ⱼ = Σxᵢ·w⁻ᵢⱼ are collected at the bottom of each column pair and fed into differential summation amplifiers 1304, which generates the output 1305: yⱼ = Σxᵢ·(w⁺ᵢⱼ - w⁻ᵢⱼ) = Σxᵢ·wᵢⱼ. This architecture performs a full analog matrix-vector multiplication with signed weights in a single crossbar cycle and is used for embedding retrieval, Q/K/V projections, and FFN weight matrices.

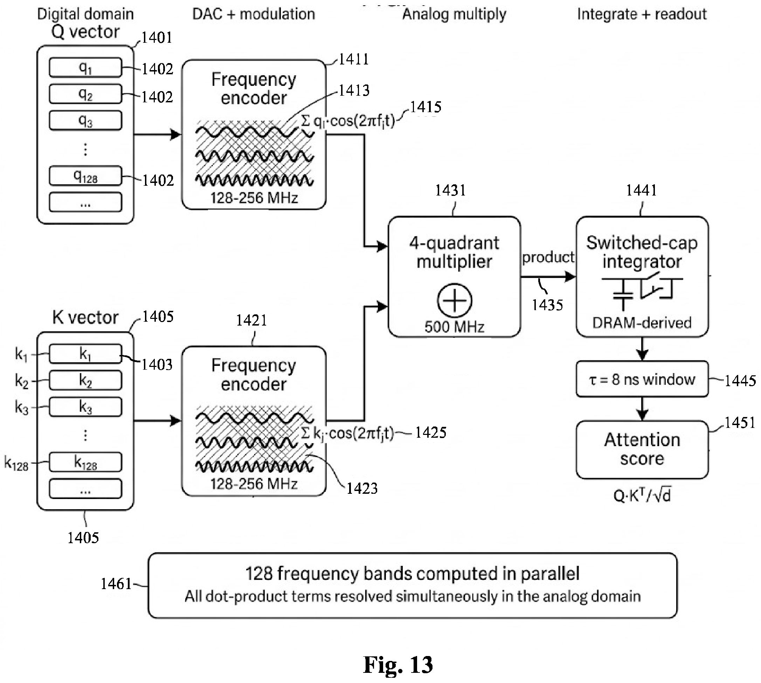

Fig. 13 is a block diagram that illustrates a frequency-encoded attention mechanism of the analog IC of the present disclosure. The block diagram includes a digital domain, which includes a Q vector 1401 and a K vector 1405. The Q vector 1401 includes a plurality of Query vector elements 1402, such as Q₁ through Q₁₂₈ (or beyond 128). The K vector 1405 includes a plurality of Key vector elements 1403, such as K₁ through K₁₂₈ (or beyond 128). The block diagram includes a DAC + modulation phase, which is implemented at least in part via a frequency encoder 1411 having different carrier frequencies 1413 and a frequency encoder 1421 having different carrier frequencies 1423. The query vector elements 1402 of the Q vector 1401 are passed through the frequency encoder 1411, which modulates each dimension onto a distinct carrier frequency in the 128-256 megahertz (MHz) band and produces a composite analog waveform 1415, which is denoted mathematically as Σqᵢ·cos(2πfᵢt). The key vector elements 1403 of the K vector 1405 are passed through the frequency encoder 1421, which modulates each dimension onto a distinct carrier in the 128-256 megahertz (MHz) band and produces a composite analog waveform 1425, which is denoted mathematically as ∑kᵢ·cos(2πfᵢt).

The block diagram includes an analog multiply phase, which is implemented at least in part via a 4-quadrant multiplier 1431, which is operating at 500 MHz in this embodiment. The two composite analog waveforms ∑qᵢ·cos(2πfᵢt) and ∑kᵢ·cos(2πfᵢt) are fed into the 4-quadrant multiplier 1431, which produces an output that is a multiplied product 1435 of the two composite analog waveforms ∑qᵢ·cos(2πfᵢt) and ∑kᵢ·cos(2πfᵢt).

The block diagram also includes an integrate + readout phase, which is implemented at least in part via a switched-capacitor integrator 1441. The switched-capacitor integrator 1441 is derived from a DRAM cell topology. The multiplied product 1435 generated by the 4-quadrant multiplier 1431 is sent to the switched-capacitor integrator 1441, which integrates the product 1435 over a time window 1445. In the illustrated embodiment, the time window 1445 is represented by τ, and it is 8 nanoseconds long (i.e., τ = 8 ns). The integrated result yields the scaled dot-product attention score 1451, which in this case is denoted by Q·K^{T}/√d. All 128 frequency bands are computed simultaneously in an analog domain 1461, and all dot-product terms are resolved simultaneously in the analog domain, thereby eliminating sequential digital multiply-accumulate cycles.

The computational bottleneck in every transformer is the attention dot product Q·K^{T}/√d, which in digital hardware requires O(d) multiply-accumulate operations executed sequentially. The analog ASIC of the present disclosure eliminates this bottleneck by moving the computation into the frequency domain. The idea is analogous to how a prism separates white light into its constituent colors and then recombines them. Each of the 128 dimensions in a Query or Key vector (e.g., the Q vector 1401 and the K vector 1405) is assigned its own unique carrier frequency (e.g., one of the carrier frequencies 1413 and/or 1423) within a 128-256 MHz band. A frequency encoder (e.g., the frequency encoders 1411 and 1421) converts the vector into a single composite analog waveform-a sum of 128 cosines, each with an amplitude equal to the corresponding vector element. When two such composite waveforms (one for Q (e.g., the waveform 1415), one for K (e.g., the waveform 1425)) are multiplied together in the 4-quadrant analog multiplier 1431, the physics of signal mixing automatically produces cross-terms whose DC component is exactly the dot product Σqᵢ·kᵢ. The switched-capacitor integrator 1441 (derived from DRAM cell topology) extracts this DC component over an 8 ns integration window 1445, yielding the attention score 1451 in a single parallel operation. Because all 128 frequency bands exist simultaneously in the analog waveform, the full 128-dimensional dot product is computed in one shot rather than 128 sequential steps. This provides a dramatic speedup over digital multiply-accumulate approaches.

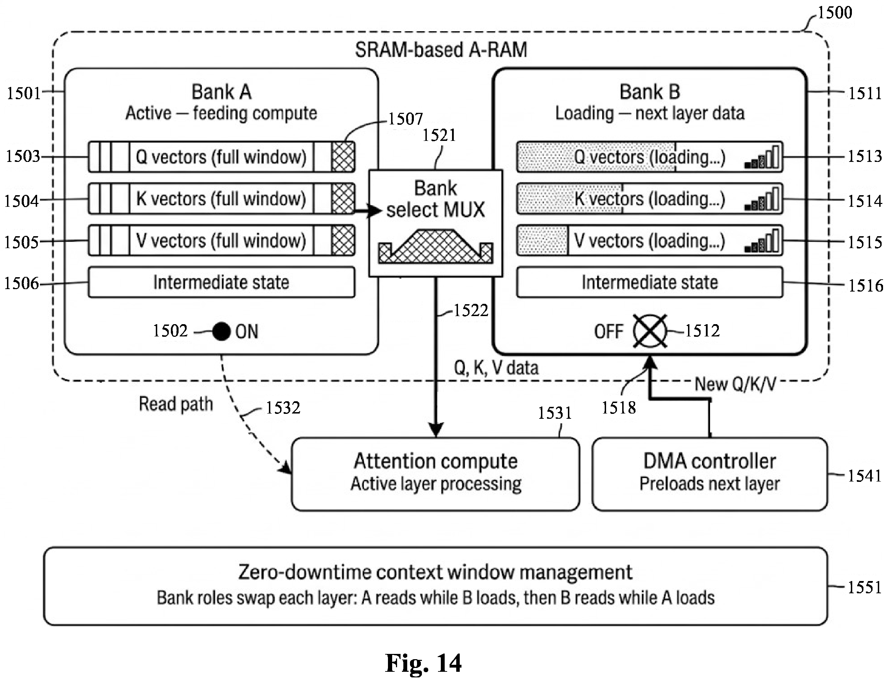

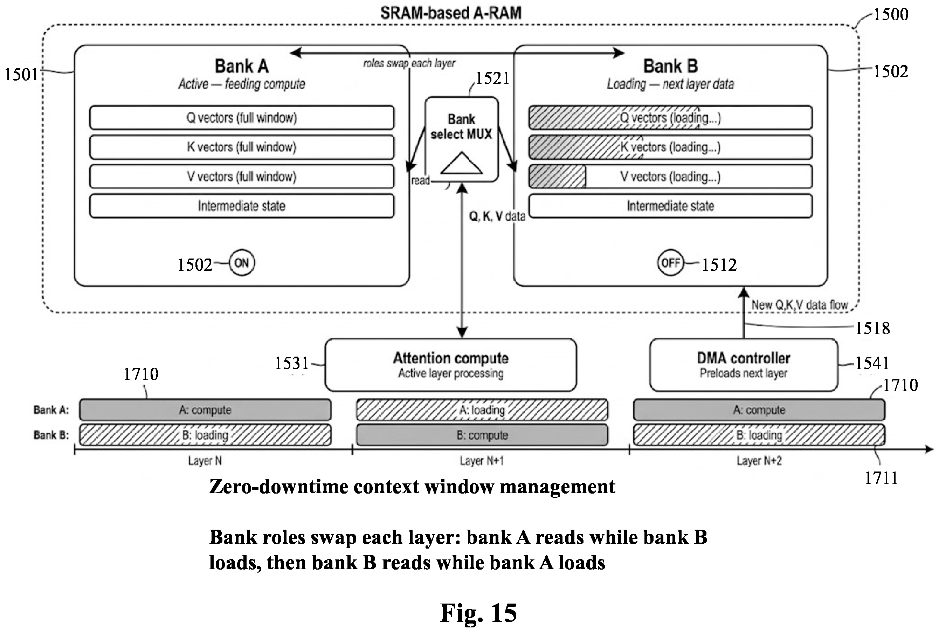

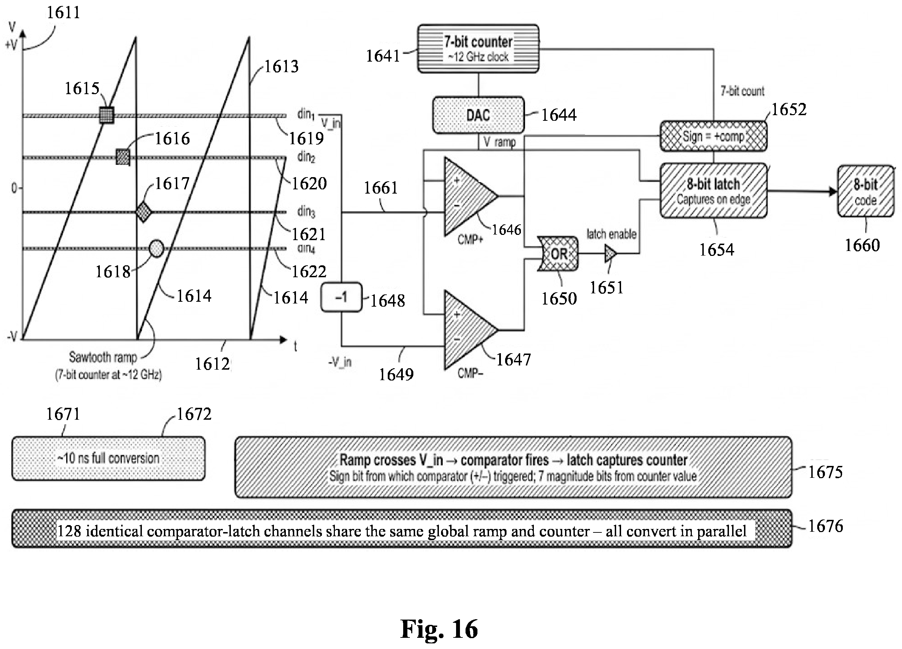

The mixed-signal memory and data movement of the analog IC of the present disclosure will now be discussed with reference to Figs. 14-16 below. In more detail, the analog ASIC of the present disclosure performs its heavy computations-matrix-vector multiplications, dot products, softmax-in the analog domain. However, a transformer is not a single computation: it is a deep pipeline of dozens of identical layers executed in sequence. The output of one layer's attention block becomes the input to the next. If the analog results were stored in the analog domain to be passed directly from layer to layer without ever being digitized, small errors-thermal noise, device mismatch, charge leakage-would accumulate with each layer until the signal became sufficiently distorted to be meaningless. The mixed-signal memory subsystem described in this section solves this problem through a three-stage cycle that repeats at every layer boundary:
(1) Digitize: The ADC (discussed below with reference to Fig. 16) converts the analog Q, K, and V vectors produced by the current layer's weight projections into compact 8-bit (or 4-bit) digital codes, freezing the values and eliminating accumulated analog noise.
(2) Store digitally: These digital codes are written into SRAM banks inside the A-RAM (described below with reference to Figs. 14 and 15). SRAM is a purely digital storage element-each bit is held by a cross-coupled latch-so the stored values are immune to drift or degradation for as long as the chip is powered.
(3) Reconvert to analog for computation: When the attention compute unit reads the stored Q/K/V data back out of SRAM, the digital bits control MOSFET-switched resistor networks (the same grid-resistor principle used throughout the chip). Each bit switches a binary-weighted resistor into or out of the signal path, reconstructing a precise analog current proportional to the stored digital value. These currents then feed into the frequency encoders, multipliers, and softmax circuits that perform the actual attention computation in analog. In other words, the SRAM does not feed a digital ALU-it feeds the analog compute fabric.

This digitize-store-reconvert cycle is what makes the deep analog pipeline practical: it resets the noise floor at every layer boundary while keeping the actual heavy math in the analog domain where it is orders of magnitude faster and more power-efficient than digital multiply-accumulate.

Fig. 14 is a block diagram that illustrates a full-window A-RAM bank switching according to various aspects of the present disclosure. In that regard, a transformer processes its input through dozens of sequential layers. At each layer, the attention mechanism needs access to the Q, K, and V vectors for the *entire context window*-not just the current token. In a digital GPU system, these vectors are stored in external high bandwidth memory (HBM) and shuttled to the compute cores, creating the well-known *memory wall* bottleneck. The analog IC of the present disclosure solves this problem with a double-buffered SRAM structure called A-RAM (Attention RAM). The A-RAM is split into two identical banks, A and B, that alternate roles in a ping-pong fashion. While Bank A supplies the digitally stored Q/K/V values to the analog compute fabric for the layer currently being processed, the ADC simultaneously digitizes the *next* layer's freshly computed Q/K/V vectors, and a Direct Memory Access (DMA) controller writes them into Bank B. When computation on the current layer finishes, the banks swap roles instantly through a multiplexer-Bank B's stored digital values now drive the analog resistor network for compute, while Bank A is cleared and refilled by the ADC and DMA controller. This ensures that attention processing never stalls waiting for data, achieving zero-downtime context window management.

In the context of Fig. 14, a full-window Attention RAM 1500 is illustrated, which is partitioned into two SRAM banks 1501 (i.e., Bank A) and 1502 (i.e., Bank B). Bank A 1501 holds the complete Q vectors 1503, K vectors 1504, and V vectors 1505, plus an intermediate state 1506, for the currently active transformer layer. Bank A also includes DA conversion 1507, which converts the SRAM bank data back to analog by adding currents through resistors switched by MOSFETs according to the SRAM bits. Bank A 1501 is coupled to an attention compute unit 1531 via a read path 1532 through a bank-select multiplexer (MUX) 1521, which generates an output signal 1522 that is sent to the attention compute unit 1531 for active layer processing. Simultaneously, Bank B 1511 receives new Q vector data 1513, new K vector data 1514, and new V vector data 1515, plus an intermediate state 1516, for the next layer via a DMA controller 1541. The "on/off" status of the Bank A 1501 is indicated by the status 1502 ("ON" in the illustrated embodiment), and the "on/off" status of the Bank B 1502 is indicated by the status 1512 ("OFF" in the illustrated embodiment).

The DMA controller 1541 preloads the next layer and generates an output signal 1518 that is sent to the Bank B 1500. When the active layer completes, bank roles swap: Bank B begins reading/feeding compute while Bank A loads the subsequent layer's data. This ping-pong architecture ensures zero-downtime context window management 1551 across all transformer layers.

Fig. 15 is a block diagram that illustrates an A-RAM timing and layer-pipelined operation according to various aspects of the present disclosure. In that regard, Fig. 15 provides a detailed operational view of the A-RAM bank-switching mechanism discussed above with reference to Fig. 14, annotated with the step-by-step sequence that governs layer-to-layer transitions. For reasons of consistency and clarity, similar/same components in Figs. 14 and 15 will be labeled the same.

The timing diagram at the bottom of Fig. 15 illustrates how Bank A and Bank B continuously alternate between compute and loading states across successive transformer layers (N, N+1, N+2, ...), ensuring that the attention compute unit 1531 is never idle. Fig. 15 also elaborates a more detailed operational sequence of the A-RAM system from Fig. 14. At the beginning of the operational sequence, the SRAM-based A-RAM 1500 contains Bank A 1501 in active compute mode, which is indicated by the "ON" status 1502. Bank A 1501 (in active compute mode) feeds Q/K/V data through the bank-select MUX 1521 to the attention compute unit 1531. Meanwhile, Bank B 1502 is offline, which is indicated by the "OFF" status 1512. As Bank B 1502 remains offline, the DMA controller 1541 preloads the next layer's Q/K/V vectors. A timeline 1710 shows the alternating ping-pong pattern across layers N, N+1, and N+2: when Bank A 1501 computes and Bank B loads, and then in a timeline 1711, the roles swap so Bank B 1502 computes while Bank A 1501 loads. This ensures continuous attention processing with no stalls between transformer layers.

Fig. 16 is a block diagram that illustrates the operations of a high-speed single-ramp ADC according to various aspects of the present disclosure. In that regard, the ADC is the critical bridge between analog computation and digital storage. Each time the memristor crossbar arrays produce a new set of Q, K, or V vectors (as analog voltages or currents), these values must be digitized before they can be written into the SRAM banks of the A-RAM 1500 (see Fig. 14). The speed of this conversion directly determines how quickly the pipeline can advance from one layer to the next, so the ADC must be both fast and massively parallel.

The analog IC herein uses a single-ramp architecture that converts all dimensions simultaneously. A single 7-bit counter clocked at approximately 12 GHz generates a global sawtooth voltage ramp that sweeps from -V to +V. Every one of the 128 parallel channels has two comparators-one comparing the ramp against the positive input voltage, the other against the inverted input. The instant the ramp crosses the input level, the corresponding comparator fires and an 8-bit latch captures the current counter value (7 magnitude bits) plus a sign bit indicating which comparator triggered. The entire conversion completes in approximately 10 ns. The resulting 8-bit digital codes are then written directly into the waiting SRAM bank via the DMA controller 1541 (see Fig. 14), where they remain stable until read back out through the resistor network for the next layer's analog attention computation (e.g., via the attention compute unit 1531 of Fig. 14). Because all 128 channels share the same global ramp and counter, they all convert simultaneously in parallel, matching the throughput of the analog compute stages.

With reference to Fig. 16, a 7-bit counter 1641 clocked at ~12 GHz drives a DAC 1644 to generate a global sawtooth voltage ramp 1611-1614 sweeping from -V to +V. The DAC 1644 generates the ramps from the counter signal to enable the comparator-based ADC functionality. The ramp is the voltage to which the actual analog data being stored is compared to determine the time point where the counter reflects the digital encoding of the analog voltage. Each of the 128 parallel channels has two comparators: CMP+ 1646 comparing Vᵣₐₘₚ against Vᵢₙ 1661, and CMP-1647 comparing Vᵣₐₘₚ against -Vᵢₙ 1649 (which is inverted by an inverter 1648). The instant the ramp crosses the input voltage, one comparator fires 1615-1618, and an OR gate 1650 (followed by a latch enable 1651) triggers an 8-bit latch 1654 (which captures on edge) that captures the current 7-bit counter value from a sign unit 1652 plus a sign bit indicating which comparator fired. The result is a signed 8-bit digital code 1660 per dimension, with full conversion completed in ~10 ns 1671. The above describes a process 1675 in which as the ramp crosses V_in, the comparator fires, and the latch captures the counter, and the sign bit from which comparator (+/1) is triggered, and 7 magnitude bits from counter value is obtained. In a step 1675, all 128 identical comparator-latch channels share the same global ramp and counter and convert in parallel.

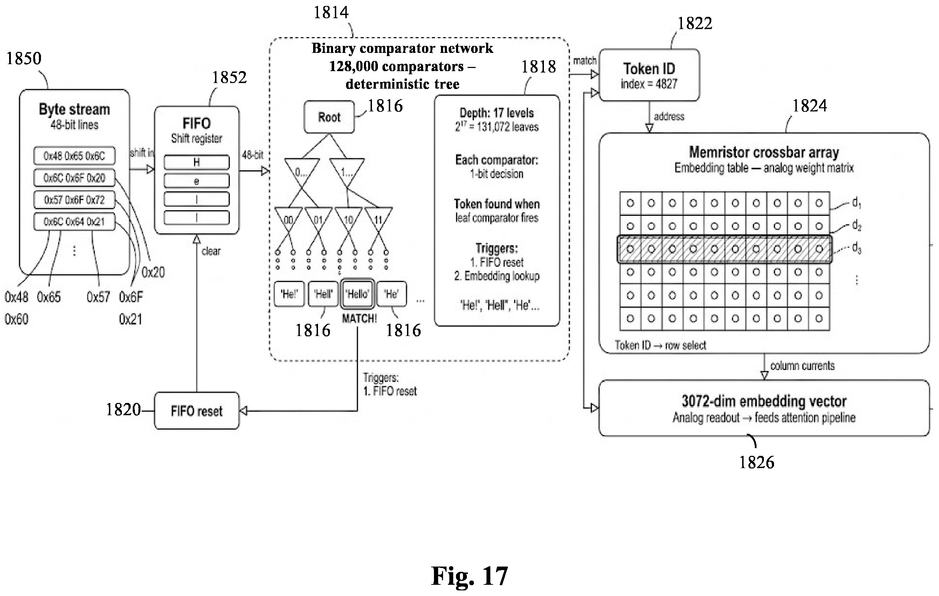

Fig. 17 is a block diagram that illustrates a hardware tokenization according to various aspects of the present disclosure. In that regard, before a transformer can process text, it needs to convert the incoming byte stream into *tokens*-integer indices that map to entries in a learned vocabulary (typically ~128,000 entries for modern LLMs). In conventional systems, tokenization is performed by software running on a CPU, which sequentially searches a hash table or tree structure. This is a serial, latency-adding step.

In contrast, the analog IC of the present disclosure replaces this entirely with a deterministic hardware tokenizer that requires no CPU involvement. Incoming bytes (on 48-bit lines) are shifted into a FIFO register. The FIFO's contents are broadcast into a binary comparator network-a tree of 128,000 comparators arranged in 17 levels (2¹⁷ = 131,072 leaves). Each comparator makes a single 1-bit routing decision (left or right). The token dictionary is physically encoded in the wiring of this tree: a particular byte sequence arriving at the root will always route to the same unique leaf. The instant a leaf comparator fires, it has identified the matching token. This match simultaneously triggers two actions: (1) the FIFO is reset to begin accumulating the next token's bytes, and (2) the Token ID is used as a row address into a memristor crossbar embedding table, which outputs the full 3,072-dimensional embedding vector in a single analog readout cycle. Because matching is inherent in the network topology-there is no lookup table to search-tokenization happens at wire speed with deterministic latency.

Specifically, with reference to Fig. 17 as a particular embodiment, an incoming byte stream 1850 on 48-bit lines is shifted into a FIFO register 1852. The FIFO contents are fed as a 48-bit word into a binary comparator network 1814. The binary comparator network 1814 includes a plurality of comparators (e.g., 128,000 in the illustrated embodiment) arranged as a deterministic tree that contains a plurality of leaves 1816, with the root leaf being at the top level. The tree has a depth that corresponds to the number of levels between the root leaf and the bottom level leaves, which is a depth of 17 in the illustrated embodiment. As such, there are a total number of 2¹⁷ = 131,072 leaves in the tree in the illustrated embodiment.

Each comparator (i.e., a leaf in the tree) in the binary comparator network 1814 makes a single-bit routing decision. When a leaf comparator fires 1818 (e.g., indicating a MATCH), it identifies the matched token (e.g., the word "Hello"), outputs a Token ID 1822 (e.g., index 4827), triggers a FIFO reset 1820, and simultaneously addresses a row in a memristor crossbar embedding table 1824. The selected row produces column currents yielding a multi-dimensional (e.g., 3,072-dimensional in this embodiment) analog embedding vector 1826 that feeds directly into the attention pipeline. The token dictionary is stored as comparator routing-matching is inherent in the network topology, requiring no CPU involvement and no lookup table.

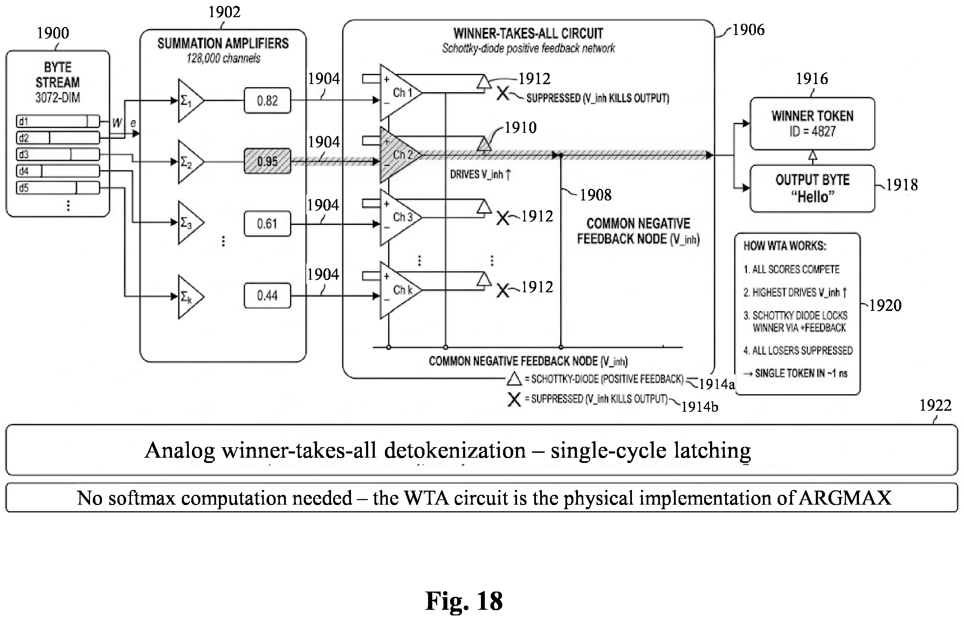

Fig. 18 is a block diagram that illustrates a winner-takes-all (WTA) de-tokenization scheme according to various aspects of the present disclosure. In that regard, at the output end of the transformer, the final layer produces a multi-dimensional (e.g., 3,072-dimensional) embedding that must be converted back into a discrete token-the predicted next word. In digital systems this requires computing a dot product of the output embedding against every vocabulary entry's stored vector (e.g., 128,000 entries), then finding the maximum (argmax). Even with optimized GPU kernels, this is a substantial computation.

The analog IC of the present disclosure overcomes the above problem by using a Winner-Takes-All (WTA) analog circuit, which can perform the computation associated with the de-tokenization scheme significantly faster (e.g., in approximately 1 nanosecond). All summation amplifiers (e.g., 128,000) compute their similarity scores simultaneously. Each amplifier feeds a comparator channel with a Schottky diode providing positive feedback. All channels share a common negative feedback node (Vᵢₙₕ). The moment the highest-scoring channel begins to win, its Schottky diode locks it in via positive feedback while Vᵢₙₕ rises and suppresses every other channel. The result is a single latched winner-the physical implementation of argmax-with no softmax computation needed at the output stage.

Specifically, with reference to Fig. 18 as a particular embodiment, a byte stream 1900 corresponding to the final multi-dimensional (e.g., 3,072-dimensional) output embedding is fed into a group of summation amplifiers 1902 (e.g., having 128,000 summation amplifiers, each corresponding to a respective channel). Each summation amplifier computes a dot-product similarity score against one vocabulary entry's stored weights. The scores (e.g., illustrated as 0.82, 0.95, 0.61, 0.44 in the non-limiting simplified example of Fig. 18) drive their respective comparator channels 1904 (e.g., Ch 1...Ch k) within a Winner-Takes-All circuit 1906 using a Schottky-diode positive feedback network 1914a. All channels share a common negative feedback node Vᵢₙₕ 1908. The highest-scoring channel 1910 (e.g., Ch 2 with a dot-product similarity score of 0.95 in this case) drives Vᵢₙₕ upward, which suppresses all other channels 1912 (Vᵢₙₕ kills output in 1914b). The Schottky diode locks the winner via positive feedback 1920 (e.g., steps 1-4), latching the winning Token ID 1916 (e.g., ID=4827 in this example) and its corresponding output byte sequence 1918 (e.g., the byte "Hello") in ~1 ns. For example, the feedback 1920 involves the following four steps:
- step 1: all scores compete;
- step 2: highest score drives V_inh;
- step 3: Schottky diode locks winner via +feedback;
- step 4: all losers suppressed;
This WTA circuit is the physical implementation of argmax 1922, eliminating the need for any softmax computation at the output stage.

Described and disclosed herein are a system and method for implementing large language models (LLMs) on analog ASICs to achieve high-speed, low-power computation. In one embodiment, the system integrates dense memristor arrays, frequency-encoded signal processing, and modular analog processors to enable efficient matrix multiplications, dynamic context management, and inference operations. The system is configured to support multi-level hierarchical architectures, such as those used in memory systems or real-time contextual processing, and significantly reduces energy consumption and latency compared to conventional digital systems.

Traditionally, challenges in Digital LLM Implementations may include high power consumption and latency associated with large-scale matrix multiplications in digital GPUs and TPUs, and/or Limited scalability for real-time, edge-based applications due to computational overhead and memory bottlenecks. Analog ASICs offer significant advantages in terms of energy efficiency and parallelism, making them ideal for LLM inference. Hierarchical systems require efficient LLM implementations for real-time processing and context management.

The analog ASIC architecture for implementing LLMs according to various aspects of the present disclosure is optimized for real-time inference and hierarchical memory management. Key innovations include:
1. Dense Memristor Arrays:
   o Used for high-density storage of weight matrices and dynamic context embeddings.
2. Frequency-Based Signal Encoding:
   o Encodes attention mechanisms and token embeddings as distinct frequency bands for efficient parallel processing.
3. Modular Analog Processors:
   ∘ Execute matrix multiplications, non-linear transformations (e.g., Softmax, SwiGLU), and dynamic memory operations.
4. Dynamic Context Management:
   ∘ Enables hierarchical LLM architectures, with efficient storage and retrieval of
      context embeddings.

In terms of architecture design, the analog IC of the present disclosure includes the following:
1. Memristor-Based Weight Storage:
   ∘ Each LLM layer's weight matrices are stored in non-volatile memristor arrays, enabling high-speed matrix-vector multiplications in analog form.
   ∘ Supports multi-bit storage for signed weights, using differential memristors for positive and negative components.
2. Frequency-Encoding Mechanism:
   a. Embeddings and attention heads are encoded into distinct frequency bands.
   b. Enables parallel processing of attention mechanisms and token embeddings, reducing latency.
3. Analog Processing Units:
   a. Specialized circuits for executing LLM operations, including:
      ∘ Matrix multiplications (Q/K/V projections, feedforward layers).
      ∘ Non-linear transformations (Softmax, SwiGLU).
      ∘ Context vector integration.
4. Dynamic Context Management:
   a. A hierarchical memory structure stores and retrieves context embeddings dynamically.
   b. Implements scalable A/B bank-switching for managing multi-token context windows.

In terms of architecture design, the analog IC of the present disclosure includes the following:
1. Input Token Embeddings:
   a. Encoded as frequency-domain signals and fed into analog processing units.
   b. Attention Mechanisms:
      o Parallelized dot products computed in analog using memristor arrays.
      ∘ Frequency-based softmax normalization performed dynamically.
2. Feedforward Layers:
   a. Modular analog circuits execute matrix multiplications and SwiGLU transformations.
3. Dynamic Context Updates:
   a. Context embeddings are updated layer-by-layer, with retrieval and storage handled by hierarchical memory units.

Due at least in part to the above implementations, the analog IC of the present disclosure offers the following features
1. Power Efficiency:
   a. Eliminates the need for extensive data movement between memory and processors, reducing energy consumption.
2. Scalability:
   a. Supports large-scale LLMs with billions of parameters through dense memristor arrays.
3. Real-Time Performance:
   a. Executes inference within sub-millisecond latency, enabling edge-based applications.

Therefore, the present disclosure discloses a system for implementing large language models (LLMs) on an analog ASIC, the system comprising:
- Dense memristor arrays configured to store weight matrices and context embeddings;
- Frequency-based signal encoding modules configured to encode embeddings and attention heads as distinct frequency bands; and
- Modular analog processors configured to:
   i. Execute matrix multiplications, non-linear transformations, and context updates;
   ii. Perform dynamic memory management for
      hierarchical LLM architectures.

In some embodiments, the analog ASIC uses differential memristors for signed weight storage.

In some embodiments, frequency-based encoding enables parallel computation of multi-head attention mechanisms.

In some embodiments, hierarchical memory management includes dynamic retrieval of context embeddings for real-time inference.

In some embodiments, the analog processors include diode-based circuits for Softmax and SwiGLU transformations.

In some embodiments, dynamic memory management implements A/B bank- switching to handle multi-token context windows.

In some embodiments, the analog ASIC reduces power consumption by eliminating data movement between memory and processors.

The present disclosure also discloses a method for executing LLM inference on analog ASICs, the method comprising:
- Storing weight matrices and context embeddings in memristor arrays;
- Encoding input embeddings and attention heads as frequency-domain signals;
- Performing matrix multiplications and non-linear transformations using modular analog processors;
- Dynamically managing context embeddings through hierarchical memory operations.

In some embodiments, frequency-based encoding enables parallel computation of multi-head attention mechanisms.

In some embodiments, hierarchical memory management includes dynamic retrieval of context embeddings for real-time inference.

In some embodiments, the analog processors include diode-based circuits for Softmax and SwiGLU transformations.

In some embodiments, dynamic memory management implements A/B bank- switching to handle multi-token context windows.

In some embodiments, the analog ASIC reduces power consumption by eliminating data movement between memory and processors.

In some embodiments, the analog ASIC is configured to use differential memristors for signed weight storage.

The present disclosure also discloses a tokenization process in an ASIC. The tokenization process includes the following aspects:
1. Byte Stream Input:
   a. A high-speed stream of bytes enters the system, where each 48-bit segment of the stream is processed.
   b. These byte sequences are parsed into unique tokens using a deterministic binary mapping network, implemented with a dense array of comparators.
2. Token Mapping:
   a. Each byte sequence is matched against a pre-defined dictionary of tokens.
   b. Once a match is found, a FIFO reset ensures the tokenizer is ready for the next incoming sequence, enabling continuous operation.
3. Embedding Construction:
   a. The identified token is mapped to a 3,072-dimensional embedding vector stored in a memristor-based array.
   b. Signed Embedding Storage:
      i. Each weight in the embedding is stored in two memristors: one for positive components and one for negative components.
   c. Analog Summation Amplifiers:
      i. The embedding vector is reconstructed by summing the outputs of memristors for each dimension.
4. RMS Normalization:
   a.To ensure uniform scaling, the embedding vector undergoes root-mean-square (RMS) normalization:
      i. Each dimension is squared in parallel using analog multipliers.
      ii. A resistor network computes the average of the squared values.
      iii. Instead of explicitly computing the square root, the system normalizes to the squared values.
   b. This normalization ensures embeddings are scaled appropriately for downstream K/Q/V matrix operations.
   5. Output to K/Q/V Matrices:
      a. The normalized embedding is sent to transformer layers, ready for use in matrix multiplications and attention mechanisms.
      b. De-Tokenization Process in the ASIC
   6. Embedding Input:
      a. The embedding vector from the LLM's output is processed by a network of summation amplifiers, each corresponding to a token in the vocabulary.
      b. Each summation amplifier computes the similarity score between the embedding and stored token vectors.
   7. Winner-Takes-All (WTA) System:
      a. Comparator Design:
         i. Each summation amplifier feeds its output to a comparator.
         ii. The comparator compares the amplifier output to a feedback node voltage.
      b. Positive Feedback:
         i. A Schottky diode connects each comparator's output to its positive input.
         ii. Once a comparator's output surpasses the feedback node, the positive feedback latches the comparator.
      c. Negative Feedback:
         i. All comparator negative inputs are connected via high-resistance pathways to a shared feedback node.
         ii. When one comparator latches, it raises the shared feedback node voltage, suppressing all other comparators.
      d. This ensures that only the token with the highest similarity score is selected.
   8. Token Reconstruction:
      a. The selected comparator identifies the winning token, which is mapped back to
         its original byte sequence using a lookup table stored in the ASIC.
   9. Output Byte Stream:
      a. The reconstructed byte sequence is output for downstream applications.

In terms of RMS normalization and the WTA circuitry, the present disclosure introduces the following features:
- Fully implemented in analog circuitry to reduce power consumption and latency.
- Uses dynamic feedback to scale embeddings without explicitly computing the square root, simplifying the circuit design.
- Winner-Takes-All (WTA) Precision.
- The WTA system ensures robust token selection, even in cases of minimal differences between embedding scores.
- The combination of positive and negative feedback creates a stable, low-latency selection mechanism.

The present disclosure also introduces a system for tokenizing byte streams in analog ASICs. The system includes:
- a byte-to-token mapping module configured to convert incoming byte streams into unique tokens using a deterministic binary network;
- an embedding generation module configured to:
   i. Retrieve embeddings from memristor-based arrays;
   ii. Normalize embeddings using root-mean-square (RMS) normalization implemented in analog circuitry; and
- an output module configured to send normalized embeddings to downstream K/Q/V matrix computations.

In some embodiments, the RMS normalization dynamically adjusts embedding scaling based on mean-of-squares computation.

In some embodiments, the WTA module uses Schottky diodes for positive feedback and resistor-based feedback nodes for robust token selection.

In some embodiments, embeddings are represented as signed values stored in differential memristors.

In some embodiments, the byte-to-token mapping module supports processing of up to 128,000 unique tokens.

In some embodiments, the summation amplifier network supports parallel comparison of embeddings across all tokens in the vocabulary.

The present disclosure also introduces a system for de-tokenizing embeddings in analog ASICs. The system includes:
- a summation amplifier network configured to compute similarity scores between embeddings and stored token vectors;
- a winner-takes-all (WTA) module configured to identify the token corresponding to the highest similarity score using positive and negative feedback circuits;
- a token-to-byte reconstruction module configured to map identified tokens back to their corresponding byte sequences.

In some embodiments, the RMS normalization dynamically adjusts embedding scaling based on mean-of-squares computation.

In some embodiments, the WTA module uses Schottky diodes for positive feedback and resistor-based feedback nodes for robust token selection.

In some embodiments, embeddings are represented as signed values stored in differential memristors.

In some embodiments, the byte-to-token mapping module supports processing of up to 128,000 unique tokens.

In some embodiments, the summation amplifier network supports parallel comparison of embeddings across all tokens in the vocabulary.

The present disclosure also introduces a method for processing byte streams in analog ASICs. The method includes the following steps:
- mapping incoming byte streams to tokens using a deterministic binary network;
- generating embeddings for identified tokens using memristor-based arrays and RMS normalization;
- de-tokenizing embeddings into output tokens using a winner-takes-all mechanism;
- reconstructing byte streams from tokens for downstream use.

In some embodiments, the RMS normalization dynamically adjusts embedding scaling based on mean-of-squares computation

In some embodiments, the WTA module uses Schottky diodes for positive feedback and resistor-based feedback nodes for robust token selection.

In some embodiments, embeddings are represented as signed values stored in differential memristors.

In some embodiments, the byte-to-token mapping module supports processing of up to 128,000 unique tokens.

In some embodiments, the summation amplifier network supports parallel comparison of embeddings across all tokens in the vocabulary.

Also described and disclosed herein is a dynamic A-RAM (Analog Random Access Memory) system for managing context windows in real-time large language model (LLM) processing. The system employs full-window A/B bank switching, allowing one bank to handle the attention mechanism while the other reads in the next context window. A specialized ADC design with a single high- speed counter, two comparators, and resistor-based digitization ensures efficient and low- latency processing of embeddings. The design facilitates continuous real-time operation, enabling high-speed and low-power memory management for transformer architectures.

Challenges in Context Window Management include the following:
- LLMs for real time applications require efficient memory systems to manage multi-token context windows dynamically.
- Traditional SRAM/DRAM systems face latency and power bottlenecks, particularly in tokenized attention mechanisms.

There is a need for specialized A-RAM and ADC:
- Full-window bank switching eliminates latency during context window transitions.
- A compact and efficient ADC ensures high-speed digitization with minimal circuitry, reducing complexity and power consumption.

Introduced is an A-RAM system with the following key features:
1.Full-Window Bank Switching:
   a. Handles entire context windows rather than individual tokens, enabling seamless transitions between computation and data loading.
2.Specialized ADC Design:
   a. Uses a single counter, a single reference voltage, and two comparators to digitize analog embeddings efficiently.
   b. Resistor networks convert analog outputs into four-bit or eight-bit digital representations.
3.Parallel Bank Operations:
   ∘ One A-RAM bank processes attention mechanisms while the other bank reads in the next context window.

The A-RAM architecture includes the following:
1. Memory Banks:
   a. Two A-RAM banks (A and B) operate in parallel:
      i. Bank A: Handles the current context window's attention computations.
      ii. Bank B: Simultaneously reads in the next context window.
   b. Banks switch roles at the end of each context window, ensuring uninterrupted operation.
2. Full-Window Switching:
   a. Entire context windows, rather than individual tokens, are read into the A- Attention RAM bank.
   b. This allows efficient batching of operations, reducing switching overhead.

A specialized ADC design includes the following:
1. Single Counter and Reference Voltage:
   a. A single high-speed counter drives the ADC, producing a monotonically increasing sawtooth signal.
   b. The reference voltage is consistent across all channels, simplifying the circuit design.
2. Two Comparators:
   a. Each comparator monitors the analog input against the sawtooth signal.
   b. At the moment of intersection, the counter value is latched into the SRAMs of the A-RAM system.
3. Resistor-Based Digitization:
   a. The outputs of the SRAM feed into resistor networks, converting the digital counter values into four-bit or eight-bit digital embeddings.
4. Parallel Operations and Timing Parallel Read/Write Operations:
   a. While one bank is actively involved in token-wise multiplication for attention mechanisms, the other bank reads in the full context window.
5. Context Window Synchronization:
   a. The system switches banks at the end of each context window, ensuring smooth transitions without computation delays.
6. Timing Optimization:
   a. ADC digitization and memory updates are synchronized with the attention mechanism to minimize idle periods.

The present disclosure includes a system for managing context windows in real-time. The system includes:
- at least two A-RAM banks operating in parallel to handle context windows dynamically;
- a bank switching module configured to alternate roles between banks at the end of each context window;
- a specialized ADC module configured to:
   i. use a single high-speed counter and reference voltage for digitization;
   ii. utilize two comparators to latch counter values into SRAM, and
   iii. convert embeddings into digital format using resistor networks.

The present disclosure includes a method for managing context windows in real-time. The method comprises:
- processing attention mechanisms on one A-RAM bank while reading the next context window into the other;
- switching banks at the end of each context window; and
- digitizing analog embeddings using a single-counter ADC with two comparators and resistor-based conversion.

Another aspect of the present disclosure involves a frequency encoding, matrix multiplication, and Softmax normalization for analog transformer architectures. In more detail, a system and method are described and disclosed that perform token-wise matrix multiplication using analog frequency encoding, timing synchronization, and diode-based softmax normalization in transformer architectures. Conventional digital operations are replaced with an analog processing pipeline that encodes token embeddings into distinct frequency bands, computes dot products using 4-quadrant analog multipliers, and synchronizes operations with full-window A-RAM bank switching. Each attention head simultaneously processes query (Q), key (K), and value (V) embeddings-each represented across 128 unique frequencies-and leverages analog circuitry (including resistor networks, memristors, and MOSFET-based amplifiers) for low-power, high-speed execution. The approach is particularly suited to implementing large-scale transformer models in a fully analog 8-bit ASIC, achieving parallel processing with minimal latency and energy overhead.

Traditional digital transformer architectures incur high computational overhead in matrix multiplications and softmax normalization. In multi-head attention, parallel processing is limited by memory bandwidth and latency constraints. By contrast, the analog implementations herein offer:
- Parallelism: Frequency encoding allows simultaneous processing across multiple channels.
- Energy Efficiency: Analog multipliers and diode-based softmax circuits reduce power consumption.
- Speed: Direct analog computations eliminate many digital conversion delays.

Encoding token embeddings as distinct frequency bands enables simultaneous comparison of Q, K, and V matrices within each attention head. Moreover, precise timing control-through synchronization with A-RAM bank switching and context window cycles-ensures continuous, real-time processing for large language models.

Some of the key innovations include:
1. Frequency Encoding for Attention Heads:
   ∘ Each attention head is assigned 128 unique frequencies (e.g., within a 100-500 MHz range).
   ∘ Token embeddings (Q, K, and V) are modulated into these frequency bands, allowing direct frequency-domain multiplication and comparison.
2. Analog Matrix Multiplication:
   ∘ Using resistor networks, memristor arrays, and 4-quadrant analog multipliers, dot products between frequency-encoded Q and K signals are computed in parallel.
   ∘ Integration over fixed time windows yields attention scores for each token.
3. Diode-Based Softmax Normalization:
   o Exponential scaling is approximated via diode-connected MOSFET circuits.
   ∘ Current mirrors aggregate the exponential values to perform softmax normalization, yielding attention weights.
4. Timing Synchronization and A-RAM Bank Switching:
   o Full-window switching of A-RAM banks synchronizes embedding retrieval with analog computation cycles.
   ∘ Overlapping computation cycles and token-wise timing control minimize latency and ensure seamless operation across context windows.
5. Integrated RoPE Positional Encoding:
   o A dedicated memristor array applies sine and cosine transformations for rotational position encoding (RoPE) to the Q and K vectors.
   ∘ This prepares the frequency-encoded signals for subsequent attention computations.

According to some embodiments, transformer-based models (e.g., the LLaMA 3.2 3B with 3072-dimensional embeddings, 28 layers, and 24 attention heads) are implemented entirely or substantially in analog hardware. Core components include:
o Token Encoding and Embedding Generation:
   Incoming tokens (identified via a 48-bit deterministic comparator network) are mapped to a 128,000-token vocabulary. Each token's 3072-dimensional embedding is stored in a memristor network using a differential (two-memristor) representation for signed values. Summation amplifiers and analog multipliers then compute mean-of-squares normalization without explicit square-root extraction.
∘ Q/K/V Computation:
   For each transformer layer, three weight matrices (each 3072×3072) stored in paired-memristor arrays are used to generate Q, K, and V vectors. Analog resistor networks and summation amplifiers compute these multiplications, after which the outputs are digitized via high-speed 8-bit ADCs and stored in SRAM-based A-RAM cells.
∘ Attention Mechanism:
   After digitization, frequency encoding transforms the Q and K vectors into 128 discrete frequency channels per attention head. Analog multipliers compute dot products between Q and K across these channels, with integration over short windows (e.g., 8- 10 ns). Diode-based circuits then perform softmax normalization, and the normalized weights modulate the V vectors to produce the final context vectors.

A frequency encoding mechanism includes the following:
- Attention Head Frequency Assignment:
   i. Each attention head is assigned a unique set of 128 frequencies. For example,
      Head 1 uses frequencies f₁ to f₁₂₈, Head 2 uses f₁₂₉ to f₂₅₆, etc.
- Embedding Signal Modulation:
   i. Q, K, and V embeddings are converted into frequency-modulated signals corresponding to their assigned channels.
   ii. Frequency-domain comparisons between Q and K allow for parallel dot product calculations.
- Synchronization:
   i. The scanning of frequency channels for Q tokens is precisely synchronized with the corresponding K and V signals, ensuring alignment during analog multiplication.

The present disclosure also involves an analog matrix multiplication, which includes the following:
- Dot Product Computation:
   i. Frequency-encoded Q and K signals are fed into 4-quadrant analog multipliers.
   ii. The multipliers' outputs are integrated over a fixed time window using switched capacitor networks (derived from DRAM cells) to generate analog attention scores.
- Parallel Processing:
   i. The architecture supports simultaneous dot product computations across all attention heads, with each head processing 128 frequency channels in parallel.

The present disclosure also involves Softmax normalization circuitry, which includes the following:
- Exponential Scaling:
   i. Each analog attention score is processed through a diode-based exponential circuit, approximating the e^(zᵢ) function.
- Normalization via Current Mirrors:
   i. Aggregated exponential values are computed by current mirror circuits to obtain the softmax denominator.
- The final attention weights are produced by scaling each exponential output with the computed denominator.

The present disclosure also involves timing, synchronization, and A-RAM bank switching, which includes the following:
- Token-Wise Timing Control:
   i. Computation cycles are synchronized with token transitions, with a dedicated token counter triggering A-RAM bank resets and embedding updates.
- A/B Bank Architecture:
   i. Two SRAM-based A-RAM banks operate in parallel: one bank is actively used for current layer computations while the other is preloaded with new Q/K/V data.
   ii. This architecture supports continuous high-speed operation across large context windows (e.g., 1024 tokens or more).

The present disclosure also involves Integrated RoPE Positional Encoding, which includes the following:
- RoPE Transformation:
   i. For each token position p and embedding dimension i, Q and K vectors are adjusted using sine and cosine functions (e.g., Q'ᵢ(p) = Qᵢ cos(ωᵢ·p) + Qᵢ₊₁ sin(ωᵢ·p)).
   ii. A dedicated memristor array (with cells arranged to handle both Q/K and positive/negative weight components) performs these computations.
- Frequency Preparation:
   i. The RoPE-transformed signals are then directed into the frequency encoder, which alternates between positive and negative values to prepare them for subsequent analog attention operations.

The present disclosure includes a frequency-encoding system for transformer attention. The system include a frequency encoding module that modulates Q, K, and V token embeddings into distinct frequency bands for each attention head. The system also includes analog multipliers that compute dot products between frequency-encoded Q and K signals. The system further includes integrators that aggregate the outputs to generate attention scores. In some embodiments, each attention head processes 128 unique frequency channels simultaneously, enabling efficient parallel computation of token embeddings. In some embodiments, the analog multipliers are configured for four-quadrant operation to accurately compute dot products over both positive and negative embedding values.

The present disclosure includes an analog Softmax normalization module. The module includes a diode-based circuits that compute the exponential function of analog attention scores. The module includes current mirrors that aggregate these exponentials to form a normalization denominator. The module includes a scaling module that produces normalized attention weights. In some embodiments, the diode-based exponential circuits incorporate Schottky diodes for improved energy efficiency and speed.

The present disclosure includes a method for analog attention computation. The method includes the following steps: (a) encoding token embeddings into frequency channels; (b) performing analog dot product computations via frequency-domain multipliers; (c) synchronizing these computations with A-RAM bank switching and context window timing; and (d) applying diode-based softmax normalization to produce attention weights for multi-head transformer architectures. In some embodiments, the token-wise frequency-encoded computations are synchronized with A-RAM bank switching to facilitate continuous, low-latency processing. In some embodiments, the method further comprises a step of using a dedicated memristor-based network to apply sine and cosine transformations to Q and K vectors for position encoding prior to frequency modulation.

Figs. 19-22 are flowcharts that illustrate various operations involving the analog ASIC of the present disclosure. Referring to Fig. 19, a method 2000 includes a step 2010 to store weight matrices and context embeddings in one or more memristor arrays. The method 2000 includes a step 2020 to encode input embeddings and attention heads as frequency-domain signals. The method 2000 includes a step 2030 to perform matrix multiplications and non-linear transformations using one or more modular analog processors. The method 2000 includes a step 2040 to dynamically manage the context embeddings through hierarchical memory operations.

In some embodiments, the encoding enables parallel computation of multi-head attention mechanisms. In some embodiments, the hierarchical memory operations include dynamic retrieval of the context embeddings for real-time inference. In some embodiments, the one or more modular analog processors include diode-based circuits for Softmax or Swish-Gated Linear Unit (SwiGLU) transformations. In some embodiments, the dynamically managing the context embeddings is performed at least in part by switching between a first memory bank and a second memory bank to handle multi-token context windows.

It is understood that the method 2000 may include steps performed before, during, or after the steps 2010-2024. For example, the method 2000 may further include a step of eliminating data movement between an electronic memory and one or more processors. As another example, the method 2000 may further include a step of storing signed weights via differential memristors.

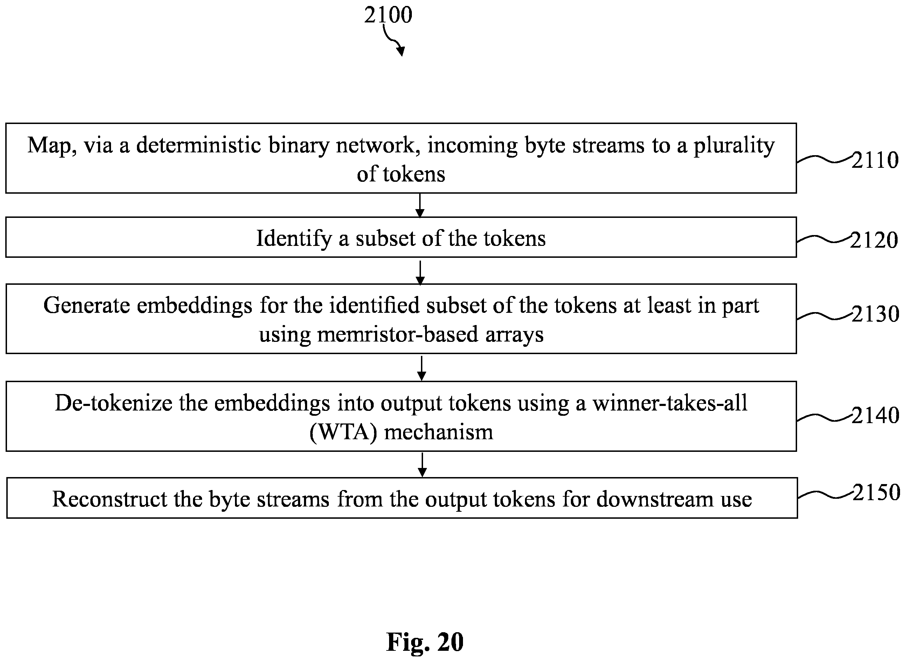

Referring to Fig. 20, a method 2100 includes a step 2110 to map, via a deterministic binary network, incoming byte streams to a plurality of tokens. The method 2100 includes a step 2120 to identify a subset of the tokens. The method 2100 includes a step 2130 to generate embeddings for the identified subset of the tokens at least in part using memristor-based arrays. The method 2100 includes a step 2140 to de-tokenize the embeddings into output tokens using a winner-takes-all (WTA) mechanism. The method 2100 includes a step 2150 to reconstruct the byte streams from the output tokens for downstream use.

In some embodiments, the embeddings are generated further based on a root-mean-square (RMS) normalization. In some embodiments, the RMS normalization dynamically adjusts embedding scaling based on mean-of-squares computation. In some embodiments, the WTA mechanism uses Schottky diodes for positive feedback and resistor-based feedback nodes for token selection. In some embodiments, the embeddings are represented as signed values stored in differential memristors of the memristor-based arrays. In some embodiments, the de-tokenizing is performed at least in part via a summation amplifier network.

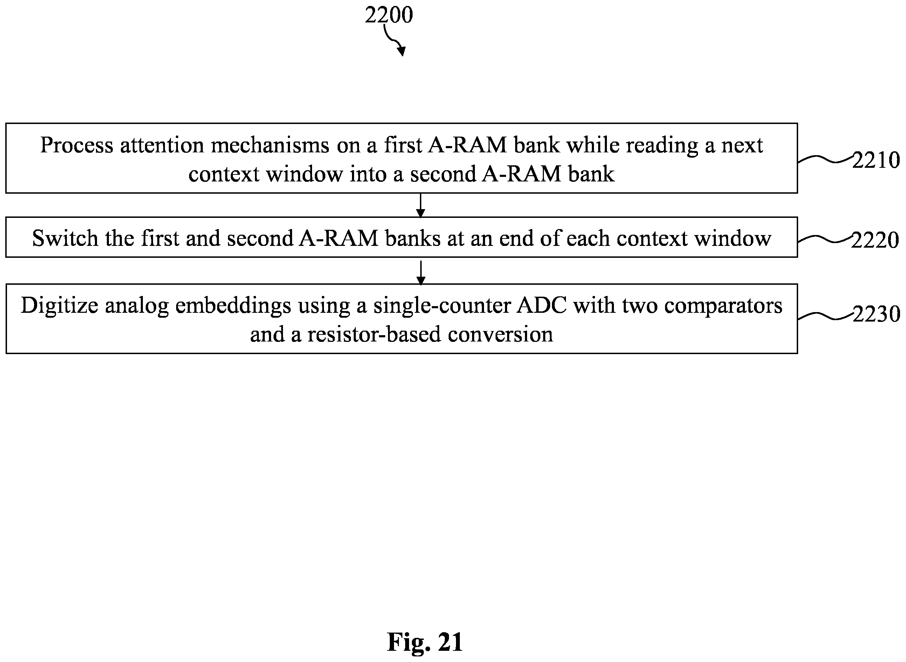

Referring to Fig. 21, a method 2200 includes a step 2210 to process attention mechanisms on a first A-RAM bank while reading a next context window into a second A-RAM bank. The method 2200 includes a step 2220 to switch the first and second A-RAM banks at an end of each context window. The method 2200 includes a step 2230 to digitize analog embeddings using a single-counter ADC with two comparators and a resistor-based conversion.

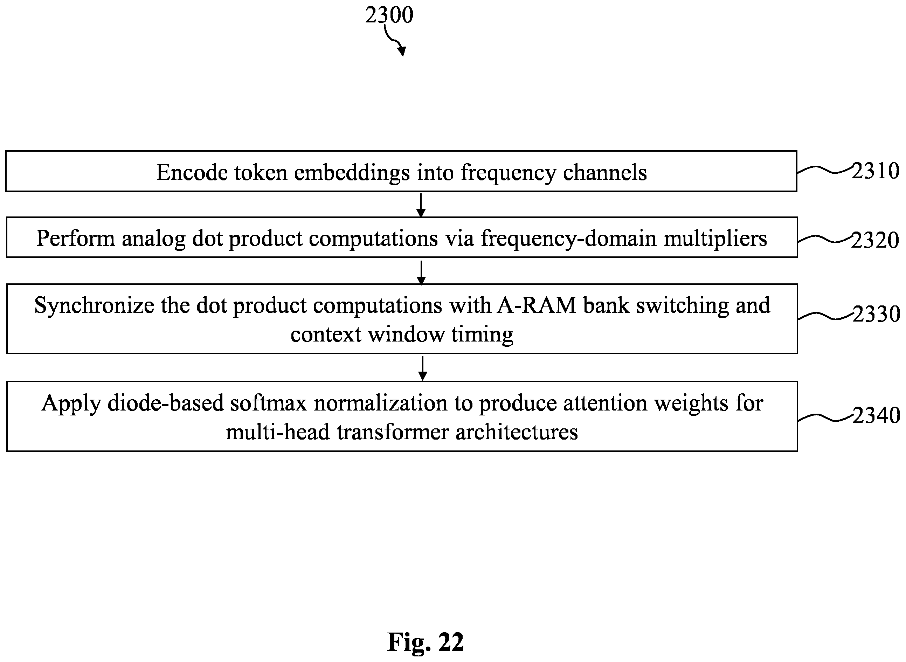

Referring to Fig. 22, a method 2300 includes a step 2310 to encode token embeddings into frequency channels. The method 2300 includes a step 2320 to perform analog dot product computations via frequency-domain multipliers. The method 2300 includes a step 2330 to synchronize the dot product computations with A-RAM bank switching and context window timing. The method 2300 includes a step 2340 to apply diode-based softmax normalization to produce attention weights for multi-head transformer architectures.

It should be appreciated that like reference numerals are used to identify like elements illustrated in one or more of the figures, wherein these labeled figures are for purposes of illustrating embodiments of the present disclosure and not for purposes of limiting the same.

One aspect of the present disclosure involves a medical system. The medical system comprises: a plurality of computing devices, each of the computing devices including a non-transitory computer readable medium configured to store instructions executable by at least one processor associated therewith to receive as inputs thereto a set of quantum wave tokens generated at least partially from wave function data sets and corresponding vectorized electrocardiogram (ECG) data derived from ECG signals acquired from a patient, and to generate at least one initial cardiac diagnosis from the set of quantum wave tokens, generate and refine patches, based on the initial cardiac diagnosis and any subsequent cardiac diagnoses, validate the patches, and provide at least one medically safe cardiac diagnosis, the plurality of computing devices together being configured to perform actions that include: (a) receive the set of quantum wave tokens as inputs thereto; (b) from a Rule Module that includes diagnostic Rule Cards corresponding to rules and prompts, provide Rule Card outputs to a first Large Language Model (LLM) based on inputs from one or more of control examples and the set of quantum wave tokens; (c) in the first LLM, generate the at least one initial cardiac diagnosis from the set of quantum wave tokens and the diagnostic Rule Cards provided thereto and activated by the Rule Module; (d) in a second LLM configured to employ reinforcement learning in a feedback loop (RL Loop), generate and refine patches based on the initial cardiac diagnosis and any additional, different, subsequent, refined, or updated cardiac diagnoses as inputs thereto, wherein the second LLM is operably connected to the Rule Module in the RL loop to provide updates thereto; (e) validate patches from the second LLM; and (f) update at least one history in the Rule Module.

Another aspect of the present disclosure involves a method. The method includes: receiving, as inputs, a set of quantum wave tokens generated at least partially from wave function data sets and corresponding vectorized electrocardiogram (ECG) data derived from ECG signals acquired from a patient; providing, via a Rule Module that includes activatable diagnostic Rule Cards corresponding to rules and prompts, Rule Card outputs to a first Large Language Model (LLM) based on inputs from one or more of control examples and the set of quantum wave tokens; generating, in the first LLM, at least one initial cardiac diagnosis based on the set of quantum wave tokens and the diagnostic Rule Cards provided thereto and activated by the Rule Module; generating and refining, in a second LLM configured to employ reinforcement learning in a feedback loop (RL Loop), patches based on the initial cardiac diagnosis and any additional, different, subsequent, refined, or updated cardiac diagnoses as inputs thereto, wherein the second LLM is operably connected to the Rule Module in the RL loop to provide updates thereto; validating the patches from the second LLM; and updating a history in the Rule Module.

Yet another aspect of the present disclosure involves a method. The method includes: generating, via a quantum wave function tokenizer, a set of quantum wave tokens based on raw medical data obtained from a patient; providing, via a Rule Module that includes activatable diagnostic Rule Cards corresponding to rules and prompts, Rule Card outputs to a first Large Language Model (LLM) based on inputs from one or more of control examples and the set of quantum wave tokens; generating, in the first LLM, at least one initial cardiac diagnosis based on the set of quantum wave tokens and the diagnostic Rule Cards provided thereto and activated by the Rule Module; generating and refining, in a second LLM configured to employ reinforcement learning in a feedback loop (RL Loop), patches based on the initial cardiac diagnosis and one or more updated cardiac diagnoses, wherein the second LLM is operably connected to the Rule Module in the RL loop to provide updates thereto; validating the patches generated by the second LLM; and updating a history in the Rule Module.

Another aspect of the present disclosure involves a quantum wave tokenizer system configured to generate a set of quantum wave tokens corresponding to a plurality of electrocardiogram (ECG) signals acquired from one or more locations on or in a patient. The quantum wave tokenizer system comprises: at least one computing device comprising at least one non-transitory computer readable medium configured to store instructions executable by at least one processor to generate the set of quantum wave tokens, the at least one computing device being configured to: (a) receive the ECG signals; (b) vectorize the ECG signals into one or more vectorized data sets; (c) fit one or more parametric wave functions to each of the one or more vectorized data sets, thereby generating one or more corresponding fitted wave function data sets, wherein each fitted wave function data set includes at least one parameter that includes one or more of: an amplitude parameter, a phase parameter, an angle parameter, a width parameter, or a location parameter of a corresponding ECG signal; (d) generate the set of quantum wave tokens corresponding to each of the fitted wave function data sets, each quantum wave token comprising at least one of: an amplitude value, a phase value, an angle value, a width value, and a location value; and (e) provide as an output therefrom at least some of the quantum wave tokens to one or more machine learning models for at least one of: filtering, processing, transforming, analyzing, or diagnosing at least some of the ECG signals.

Yet another aspect of the present disclosure involves a method. The method includes: generating receiving a plurality of electrocardiogram (ECG) signals from a patient; vectorizing the ECG signals into one or more vectorized data sets; fitting one or more parametric wave functions to each of the one or more vectorized data sets, thereby generating one or more corresponding fitted wave function data sets, wherein each fitted wave function data set includes at least one parameter that includes one or more of: an amplitude parameter, a phase parameter, an angle parameter, a width parameter, or a location parameter of a corresponding ECG signal; generating a set of quantum wave tokens corresponding to each of the fitted wave function data sets, each quantum wave token comprising at least one of: an amplitude value, a phase value, an angle value, a width value, and a location value; and providing at least some of the quantum wave tokens to one or more machine learning models for at least one of: filtering, processing, transforming, analyzing, or diagnosing at least some of the ECG signals.

One more aspect of the present disclosure involves a method. The method includes: receiving a plurality of electrocardiogram (ECG) signals from a patient; vectorizing the ECG signals into one or more vectorized data sets; fitting one or more parametric wave functions to each of the one or more vectorized data sets, thereby generating one or more corresponding fitted wave function data sets, wherein each fitted wave function data set includes at least one parameter that includes one or more of: an amplitude parameter, a phase parameter, an angle parameter, a width parameter, or a location parameter of a corresponding ECG signal; generating a set of quantum wave tokens corresponding to each of the fitted wave function data sets, each quantum wave token comprising at least one of: an amplitude value, a phase value, an angle value, a width value, and a location value; sending the quantum wave tokens to one or more large language models (LLMs); and generating, via the one or more LLMs, a cardiac diagnosis.

Yet another aspect of the present disclosure involves a system for implementing large language models (LLMs) on an analog Application Specific Integrated Circuit (ASIC). The system includes: one or more memristor arrays configured to store weight matrices and context embeddings; one or more frequency-based signal encoding modules configured to encode embeddings and attention heads as distinct frequency bands; and one or more modular analog processors configured to: execute one or more of: matrix multiplications, non-linear transformations, and context updates; and perform dynamic memory management for hierarchical large language model (LLM) architectures.

Another aspect of the present disclosure involves a method for executing Large Language Model (LLM) inference on an analog Application Specific Integrated Circuit (ASIC). The method includes: storing weight matrices and context embeddings in one or more memristor arrays; encoding input embeddings and attention heads as frequency-domain signals; performing matrix multiplications and non-linear transformations using one or more modular analog processors; and dynamically managing the context embeddings through hierarchical memory operations.

Yet another aspect of the present disclosure involves a method for processing byte streams in analog Application Specific Integrated Circuits (ASICs). The method includes: mapping, via a deterministic binary network, incoming byte streams to a plurality of tokens; identifying a subset of the tokens; generating embeddings for the identified subset of the tokens at least in part using memristor-based arrays; de-tokenizing the embeddings into output tokens using a winner-takes-all (WTA) mechanism; and reconstructing the byte streams from the output tokens for downstream use.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, persons of ordinary skill in the art will recognize that changes may be made in form and detail without departing from the scope of the present disclosure.

## Claims

1. A system for implementing large language models (LLMs) on an analog Application Specific Integrated Circuit (ASIC), the system comprising:
one or more memristor arrays configured to store weight matrices and context embeddings;
one or more frequency-based signal encoding modules configured to encode embeddings and attention heads as distinct frequency bands; and
one or more modular analog processors configured to:
execute one or more of: matrix multiplications, non-linear transformations, and context updates; and
perform dynamic memory management for hierarchical large language model (LLM) architectures.

2. The system of claim 1, wherein the analog ASIC uses differential memristors for signed weight storage.

3. The system of claim 1, wherein the one or more frequency-based signal encoding modules enable parallel computation of multi-head attention mechanisms.

4. The system of claim 1, wherein the dynamic memory management includes a dynamic retrieval of the context embeddings for real-time inference.

5. The system of claim 1, wherein the one or more modular analog processors include diode-based circuits for Softmax and Swish-Gated Linear Unit (SwiGLU) transformations.

6. The system of claim 1, wherein the dynamic memory management includes handling multi-token context windows at least in part by switching between a first memory bank and a second memory bank.

7. The system of claim 1, wherein the analog ASIC eliminates a data movement between an electronic memory and one or more processors.

8. A method for executing Large Language Model (LLM) inference on an analog Application Specific Integrated Circuit (ASIC), the method comprising:
storing weight matrices and context embeddings in one or more memristor arrays;
encoding input embeddings and attention heads as frequency-domain signals;
performing matrix multiplications and non-linear transformations using one or more modular analog processors; and
dynamically managing the context embeddings through hierarchical memory operations.

9. The method of claim 8, wherein the encoding enables parallel computation of multi-head attention mechanisms.

10. The method of claim 8, wherein the hierarchical memory operations include dynamic retrieval of the context embeddings for real-time inference.

11. The method of claim 8, wherein the one or more modular analog processors include diode-based circuits for Softmax or Swish-Gated Linear Unit (SwiGLU) transformations.

12. The method of claim 8, wherein the dynamically managing the context embeddings is performed at least in part by switching between a first memory bank and a second memory bank to handle multi-token context windows.

13. The method of claim 8, further comprising eliminating data movement between an electronic memory and one or more processors.

14. The method of claim 8, further comprising storing signed weights via differential memristors.

15. A method for processing byte streams in analog Application Specific Integrated Circuits (ASICs), comprising:
mapping, via a deterministic binary network, incoming byte streams to a plurality of tokens;
identifying a subset of the tokens;
generating embeddings for the identified subset of the tokens at least in part using memristor-based arrays;
de-tokenizing the embeddings into output tokens using a winner-takes-all (WTA) mechanism; and
reconstructing the byte streams from the output tokens for downstream use.

16. The method of claim 15, wherein the embeddings are generated further based on a root-mean-square (RMS) normalization.

17. The method of claim 16, wherein the RMS normalization dynamically adjusts embedding scaling based on mean-of-squares computation.

18. The method of claim 15, wherein the WTA mechanism uses Schottky diodes for positive feedback and resistor-based feedback nodes for token selection.

19. The method of claim 15, wherein the embeddings are represented as signed values stored in differential memristors of the memristor-based arrays.

20. The method of claim 15, wherein the de-tokenizing is performed at least in part via a summation amplifier network.
